# EUROPEAN PATENT APPLICATION

(11) **EP 1 331 586 A1**
(43) Date of publication of application: **30.07.2003**
(21) Application number: 01980939.1
(22) Date of filing: 31.10.2001
(51) Int. Cl.: G06F 17/60, H04L 9/00

(54) **CONTENT DISTRIBUTION SYSTEM AND CONTENT DISTRIBUTION METHOD**

(30) Priority: 01.11.2000 JP 2000334184
(71) Applicant: Sony Corporation, Tokyo 141-0001 (JP)
(72) Inventor: YOSHINO, Kenji, Tokyo 141-0001 (JP); ISHIBASHI, Yoshihito, Tokyo 141-0001 (JP); AKISHITA, Toru, Tokyo 141-0001 (JP); SHIRAI, Taizo, Tokyo 141-0001 (JP); OKA, Makoto, Tokyo 141-0001 (JP)
(74) Representative: Pilch, Adam John Michael
(86) International application number: JP0109535
(87) International publication number: WO02037360

(57) **Abstract**

A ticket issuer server for receiving purchase requests for contents transmits a ticket, storing a charges receiving entity identifier as contents charges information and data of distribution charges with regard to the charges receiving entity, to a user device, under the condition that billing processing for the contents purchase request of the user device has ended, and executes cashing processing based on receipt of the ticket from the user device. Also, contents purchase log data is collected according to updating processing of a public key certificate of the user device which purchases contents, and further, between entities executing data communication, attributes information is obtained from a public key certificate or attributes certificate of the entity which is the other party of communication, and attributes confirmation based on the obtained attributes information is performed, so processing in guise of another entity can be prevented.

## Description

### Technical Field

The present invention relates to a contents distribution system and a contents distribution method. More particularly, the present invention relates to a contents distribution system and a contents distribution method wherein, in transactions of contents between entities which perform contents providing services and user devices which perform reception of contents, execution of settlement processing of compensation for contents charges to license managers and content copyright holders in a sure and efficient manner is enabled, wherein actual trading of contents can be accurately understood in a sure and efficient manner in transactions of contents between entities which perform contents providing services and user devices which perform reception of contents, and further wherein data communication processing such as contents distribution processing and the like with high security and validity can be executed by executing attributes confirmation of the other party of communication between entities executing data communication.

### Background Art

As of recent, the distribution of various types of software data (hereafter referred to as contents) such as game programs, audio data, image data, document-creating programs, etc. have come to be widely distributed over networks, such as the Internet. Also, on-line shopping, bank settlement, ticket sales, and other like selling and buying of products, settlement processing, etc., via networks has become commonplace.

With such data communication via networks, transferring necessary information upon the transmitting side and the receiving side mutually confirming that the other is the proper object of the data exchange, i.e., assuming a data transfer configuration taking security into consideration, is common. Methods for realizing the security configuration at the time of transferring data include encryption processing of transfer data, signature processing for data, and so forth.

Encrypted data can be restored to usable decrypted data (plaintext) by decryption processing following predetermined procedures. Data encryption and decryption methods using encryption key for encryption processing and the decryption key for decryption processing such information, are conventionally well known.

Various types of data encryption/decryption methods using encryption keys and decryption keys are known, with one example thereof being the so-called public key encryption method. The public key encryption method involves the originator and receiver having different keys, with one of the keys being a public key which unspecified users can use, and the other being a secret key which is kept secret. For example, the data encryption key is a public key, and the decryption key is a secret key. Or, this may be used in forms wherein an authenticator generating key is a secret key, and an authenticator verifying key is a public key, and so forth.

Unlike so-called shared key encryption wherein a common key is used for encryption/decryption, only one predetermined party needs to hold the secret key which needs to be kept secret with a public key encryption method, which is advantageous in managing keys. However, the data processing speed of the public key method of encryption is slow in comparison to that of the shared key encryption method, and accordingly is often used for small amounts of data, such as distributing secret keys, digital signatures, and so forth. A representative of type of the public key encryption method is RSA (Rivest-Shamir-Adleman) encryption. This involves using the product of two extremely large prime numbers (e.g., 150 digits), and employs the difficulty of processing factorization of the product of two extremely large prime numbers (e.g., 150 digits).

The public key method is of a configuration wherein many and unspecified users can use the public key, and methods using certificates for certifying whether or not the public key to be distributed is valid, i.e., so-called public key certificates, are often used. For example, a user A generates a pair of public key and secret key, sends the generated public key to an authority, and obtains a public key certificate from the authority. The user A publicly discloses the public key certificate. An unspecified user obtains the public key from the public key certificate through predetermined procedures, encrypts a document or the like, and sends this to the user A. The user A decrypts the encrypted document or the like using a secret key, and so forth, with this system. Also, the user A affixes a signature to the document or the like using the secret key, an unspecified user obtains the public key from the public key certificate through predetermined procedures, and verifies the signature, with this system.

A public key certificate is a certificate issued by a certificate authority or issuer authority (CA or IA), and is a certificate created by the user presenting a certificate authority with his/her own ID, public key, etc., this certificate authority adding information such as the ID of the certificate authority and validity, etc., and further adding a signature of the certificate authority.

A public key certificate contains the version number of the certificate, a serial number of the certificate which the issuer authority has appropriated to the user of the certificate, algorithms and parameters used for electronic signature, the name of the certifying authority, the validity of the certificate, the name of the user of the certificate (user ID), and the public key and electronic signature of the user of the certificate.

A hash function is applied to the entirety of the version number of the certificate, the serial number of the certificate which the certifying authority has appropriated to the user of the certificate, algorithms and parameters used for electronic signature, the name of the certifying authority, the validity of the certificate, the name of the user of the certificate, and the public key and electronic signature of the user of the certificate, so as to generate a hash value, and is data generated using the secret key of the certificate authority on that hash value.

On the other hand, at the time of using this public key certificate, the user uses the public key of the certificate authority which the user holds, to verify that electronic signature of the public key certificate, extracts the public key from the public key certificate following successful verification of electronic signature, and uses this public key. Accordingly, all users using the public key certificate need to hold a common certificate authority public key.

### Disclosure of Invention

In transactions of content such as described above, those having the rights to gain profits from sales of contents are not restricted to the shops selling the contents, rather, there are many, such as copyright holders of the contents, license right holders who have obtained distribution rights from contents copyright holders, service operators (system holders) managing contents distribution systems, and so forth. However, it is difficult to accurately grasp the actual flow of contents, and the state of the fact remains that such systems are dependent on the voluntary declarations of the shops selling the individual contents.

In such a state, in the event that unauthorized contents transactions occur, the state arises wherein the copyright fees or the like accompanying the transaction cannot be collected. That is to say, the license holder having the distribution rights for the contents, or the contents producer having the copyrights for the contents, are not guaranteed receipt of the license fees accompanying transactions of contents between shops and users.

The present invention has been made in light of the problems occurring in transactions of contents such as described above, and provides a contents charges settlement system based on tickets and a contents charges settlement method based on tickets, enabling processing to be executed for accurately distributing contents charges collected by distribution of contents to copyright holders and others involved, i.e., so-called charge receiving entities, following predetermined rules, based on tickets.

Also, with the data transmission system according to the public key encryption method using public key certificates issued by a certificate authority as described above, contents distribution shops for distributing contents, for example, encrypt contents to be distributed to users based on the public key of the user, and transmit these to the users. The user device which has received the encrypted data from the contents distribution shop executes decryption of the encrypted contents with his/her own secret key corresponding to his/her own public key.

However, in actual contents transactions, the license holder having the distribution right of the contents, or the contents producer having the copyrights for the contents, are often a different entity from the contents distribution shops which perform the services of providing users with contents, and oftentimes the contents distribution shops distribute contents without confirming whether or not the users to which the shop is transmitted contents has a valid contents usage rights. That is, there are cases wherein unauthorized usage and sales of contents are performed by users which do not have authorized usage rights.

Also, with the types of transactions such as described above, transactions accompanied by due contents charges can be established between the two parties of the contents distribution shop which is the vendor of the contents and the user device which is the user of the contents, but the license holder which holds the distribution rights to the contents, and a contents producer who has the copyrights to the contents, is not guaranteed receipt of license fees accompanying the transaction of contents between the shop and the user. At the present, the common transaction form is for the amount of contents sold being confirmed by voluntary declaration by the contents distribution shop, and the license fees based on a voluntary declaration being provided from the shop to the license holder, contents producer, etc.

With such a contents transaction form, the license holders holding the distribution rights to the contents, or the contents producer holding copyrights the contents, cannot know the actual transaction of contents, and there have been no means by which confirmation can be made regarding whether or not authorized distribution of contents is being carried out under accurate usage rights.

The present invention has been made in light of the problems in transactions of contents such as described above and provides a contents distribution system and contents distribution method having a log management configuration wherein contents distribution is carried out under management of authorized contents usage rights, enabling actual transactions of contents between the contents distribution shops carrying out distribution services of contents, and users, to be accurately known by license holders having distribution rights to the contents, or contents producers holding the copyrights to the contents.

Specifically, a contents distribution management configuration based on purchase logs is realized wherein purchase logs generated at user devices according to purchase of contents are periodically collected at a log collection server.

Further, in the event that the data communication is executed in contents transaction using a data transmission system according to the public key encryption method using a public key certificate issued by as certificate authority as described above, it is difficult to confirm whether the other party of communication is a shop, a user device, or another administration server such as a system holder or the like. In the present state, judgment can only been made based on the data transmitted from the other party of communication.

Accordingly, there is the possibility that unauthorized user devices, unauthorized shops, etc., exist, and that unauthorized user devices may execute fictitious transactions of contents under the guise of a shop. Also, in the event that a user device attempting to execute an authorized transaction believes that this is a shop server and starts communication, and executes a contents purchase request to be made with a shop server, e.g., execution of credit card number transmission processing, there is the danger of processing being executed such as illegally obtaining the credit card number from the user device, in a case wherein the other party is an unauthorized server in guise of a shop server.

Also, in the event that unauthorized or fictitious contents transactions are executed, it becomes difficult to know the actual transaction of contents. Generally, the common transaction form is for the amount of contents sold being confirmed by voluntary declaration by the contents distribution shop, and the license fees based on a voluntary declaration being provided from the shop to the license holder, contents producer, etc., but in the event that unauthorized or fictitious contents transactions are executed, there is no guarantee that the license holder having the distribution rights for the contents or the contents producers holding the contents copyrights can receive the license fees accompanying the valid contents transactions, even at the shop.

The present invention has been made in light of problems in contents transaction such as described above, and realizes a data communication system containing attributes confirmation processing and data communication method containing attributes confirmation processing, enabling prevention of processing with an unauthorized party, e.g., of execution of various types of unauthorized processing accompanying purchasing of contents, by executing processing upon confirmation of that attributes of the entity of the other party of communication, between entities which execute data communication.

More specifically, a data communication system containing attributes confirmation processing and data communication method containing attributes confirmation processing, is provided wherein attributes codes are provided as different attributes information to the different entities, e.g., user devices having functions for purchasing contents, shop servers having functions for receiving purchase commissioning for contents, service operator servers having functions for managing contents distribution, distribution servers for distributing contents etc., enabling confirmation of the other party of communication with the attributes information stored in the public certificate or attributes certificate of each entity, thereby realizing a safe contents transaction form.

According to a first aspect of the present invention,
a contents charges settlement system based on tickets, comprises:
a ticket issuing server for issuing tickets storing a charges reception entity identifier as contents charges information accompanying processing for purchasing of contents, and allocated charges data with regard to the charges reception entity, under the conditions that billing processing based on purchase request data from a user device has been completed;
a user device for transmitting a contents purchase request to the ticket issuing server, and receiving the ticket;
a user device authentication server, which is a user device authentication server configured as one of the charges reception entity, for executing conversion from an encrypted contents key which is undecryptable with a stored key in the user device to an encrypted contents key which is decryptable with a stored key in the user device by key switching processing, under the conditions that the ticket has been received from the user device; and
a ticket exchange server for executing charges settlement processing based on the received ticket, according to receipt of a ticket from the charges reception entity.

Further, according to an embodiment of the contents charges settlement system according to the present invention, tickets issued by the ticket issuing server store one or a plurality of charges reception entity identifiers as contents charges information and allocated charges data with regard to one or a plurality of charges reception entities, and in the event of issuing a ticket with a plurality of charges reception entity identifiers the ticket issuing server issues to the user device a number of tickets corresponding to the charges reception entity identifiers; and the user device has a configuration for executing processing for transmitting the received tickets to each of the entities corresponding to the charges reception entity identifiers.

Further, according to an embodiment of the contents charges settlement system according to the present invention, a transaction identifier for identifying contents transaction processing is stored in tickets issued by the ticket issuing server, and in the event of issuing a plurality of tickets with regard to one contents transaction from the user device, the plurality of tickets are issued storing a common transaction identifier.

Further, according to an embodiment of the contents charges settlement system according to the present invention tickets issued by the ticket issuing server store a charges reception entity identifier as contents charges information and allocated charges data with regard to the charges reception entity, and also contain an electronic signature of the ticket issuing server; wherein the charges reception entity which executes processing based on receipt of the ticket executes signature verification processing of the electronic signature of the ticket issuing server contained in the received ticket, and executes processing based on the receipt of the ticket under the conditions that confirmation is made that there is no tampering with data.

Further, according to an embodiment of the contents charges settlement system according to the present invention, a user device authentication server configured as one of the charges reception entity is of a configuration for executing key switching processing consisting of decrypting an encrypted contents key KpDAS(Kc) encrypted with a public key KpDAS of the user device authentication server (DAS) with own secret key KsDAS to obtain a contents key Kc, and further re-encrypting with a public key KpDEV of the user device (DEV) to generate an encrypted contents key KpDEV(Kc), with receipt of the ticket as conditions thereof.

Further, according to an embodiment of the contents charges settlement system according to the present invention, validity data is contained in a ticket issued by the ticket issuing server, as a valid processing period for charges settlement processing based on tickets; and the ticket exchange server executes charges settlement processing based on the ticket following verification of the validity, under the conditions that validity is confirmed.

Further, an embodiment of the contents charges settlement system according to the present invention further has a distribution server as a charges reception entity for executing distribution of encrypted contents and encrypted contents keys under the conditions of receipt of tickets from the user device; wherein encrypted contents keys transmitted by the distribution server are encrypted contents keys which are undecryptable by a stored key of the user device.

Further, according to an embodiment of the contents charges settlement system according to the present invention, contents purchase request data which the user device generates and transmits to the ticket issuing server is configured as data having a user device ID serving as a user device identifier, a transaction ID serving as a contents transaction identifier, and a contents ID serving as a contents identifier which is the object of purchase request, along with containing an electronic signature of the user device; wherein the ticket issuing server checks whether or not there is data tampering by executing signature verification of the contents purchase request data, and adds a new entry in a ticket issuing management database based on the contents purchase request data, sets status information indicating the processing state with regard to the added entry, and manages the processing sequence transition at the ticket issuing server based on the status information.

Further, according to a second aspect of the present invention,
a recording medium, which stores electronic tickets containing data exchanged between entities relating to contents transactions according to contents transaction processing,
charges reception entity identifiers serving as contents charges information accompanying contents purchase processing and allocated charges data with regard to the charges reception entities.

Further, with an embodiment of the recording medium according storing electronic tickets according to Claim 9 of the present invention, the tickets are of a configuration storing, as contents charges information, a plurality of charges reception entity identifiers and allocated charges data to each of the plurality of charges reception entities.

Further, according to an embodiment of the recording medium according to the present invention, the tickets are of a configuration storing validity data as a valid processing period for charges settlement processing based on tickets.

Further, according to an embodiment of the recording medium according to the present invention, the tickets are of a configuration storing an electronic signature of a ticket issuing server.

Further, according to a third aspect of the present invention,
a contents charges settlement method based on tickets comprises:
a step for transmitting a contents purchase request from a user device to a ticket issuing server;
a step at the ticket issuing server for executing billing processing based on purchase request data from the user device, and issuing tickets storing a charges reception entity identifier as contents charges information accompanying processing for purchasing of contents, and allocated charges data with regard to the charges reception entity, under the conditions the billing processing has been completed;
a step at the user device for receiving the ticket;
a step at a user device authentication server, which is configured as one of the charges reception entity, for executing conversion from an encrypted contents key which is undecryptable with a stored key in the user device to an encrypted contents key which is decryptable with a stored key in the user device by key switching processing, under the conditions that the ticket has been received from the user device; and
a step at a ticket exchange server for executing charges settlement processing based on the received ticket, according to receipt of a ticket from the charges reception entity.

Further, according to an embodiment of the contents charges settlement method according to the present invention, tickets issued by the ticket issuing server store one or a plurality of charges reception entity identifiers as contents charges information and allocated charges data with regard to one or a plurality of charges reception entities, and in the event of issuing a ticket with a plurality of charges reception entity identifiers the ticket issuing server issues to the user device a number of tickets corresponding to charges reception entity identifiers; and the user device executes processing for transmitting the received tickets to each of the entities corresponding to the charges reception entity identifiers.

Further, according to an embodiment of the contents charges settlement method according to the present invention, a transaction identifier for identifying contents transaction processing is stored in tickets issued by the ticket issuing server, and in the event of issuing a plurality of tickets with regard to one contents transaction from the user device, the plurality of tickets are issued storing a common transaction identifier.

Further, according to an embodiment of the contents charges settlement method according to the present invention, tickets issued by the ticket issuing server store a charges reception entity identifier as contents charges information and allocated charges data with regard to the charges reception entity, and also contain an electronic signature of the ticket issuing server; wherein the charges reception entity which executes processing based on receipt of the ticket executes signature verification processing of the electronic signature of the ticket issuing server contained in the received ticket, and executes processing based on the receipt of the ticket under the conditions that confirmation is made that there is no tampering with data.

Further, according to an embodiment of the contents charges settlement method according to the present invention, a user device authentication server configured as one of the charges reception entity executes key switching processing which generates an encrypted contents key KpDEV(Kc), consisting of decrypting an encrypted contents key KpDAS(Kc) encrypted with a public key KpDAS of the user device authentication server (DAS) with own secret key KsDAS to obtain a contents key Kc, and further re-encrypting with a public key KpDEV of the user device (DEV); with receipt of the ticket as the condition thereof.

Further, according to an embodiment of the contents charges settlement method according to the present invention, validity data is contained in a ticket issued by the ticket issuing server, as a valid processing period for charges settlement processing based on tickets; and the ticket exchange server executes charges settlement processing based on the ticket following verification of the validity, under the conditions that validity is confirmed.

Further, an embodiment of the contents charges settlement method based on tickets according to the present invention further has a distribution server as a charges reception entity for executing distribution of encrypted contents and encrypted contents keys under the conditions of receipt of tickets from the user device; wherein encrypted contents keys transmitted by the distribution server are encrypted contents keys which are undecryptable by a stored key of the user device.

Further, according to an embodiment of the contents charges settlement method according to the present invention, contents purchase request data which the user device generates and transmits to the ticket issuing server is configured as data having a user device ID serving as a user device identifier, a transaction ID serving as a contents transaction identifier, and a contents ID serving as a contents identifier which is the object of purchase request, along with containing an electronic signature of the user device; wherein the ticket issuing server checks whether or not there is data tampering by executing signature verification of the contents purchase request data, and adds a new entry in a ticket issuing management database based on the contents purchase request data, sets status information indicating the processing state with regard to the added entry, and manages the processing sequence transition at the ticket issuing server based on the status information.

Further, according to a fourth aspect of the present invention,
a program providing medium provides a computer program for executing contents charges settlement processing based on tickets on a computer system, the computer program comprising:
   a step for receiving tickets storing a charges reception entity identifier as contents charges information accompanying processing for purchasing of contents, and allocated charges data with regard to the charges reception entity;
   a step for executing signature verification processing of the electronic signature of the ticket issuing server contained in the received ticket;
   a step for executing processing based on the receipt of the ticket under the conditions that confirmation is made that there is no tampering with data by verification of the signature;
   a step for executing a charges settlement request based on the ticket.

Further, according to a fifth aspect of the present invention,
a contents distribution system having a log managing configuration comprises:
a shop server for receiving contents purchase requests from a user device, and transmitting sales confirmation data to the user device;
a user device for transmitting contents purchase request data to the shop server and executing contents purchase requesting processing based on procedures using a public key certificate of the user device having validity set, and also receiving the sales confirmation data and generating and storing a purchase log based on the received sales confirmation data; and
a log collection server for receiving an updating request for a public key certificate of the user device based on receipt of the purchase log, and transmitting an updated public key certificate of the user device issued by a public key certificate issuer authority to the user device.

Further, according to an embodiment of the contents distribution system according to the present invention, procedures using a public key certificate having validity set consist of mutual authentication processing using a public key certificate, executed between the user device and shop server.

Further, according to an embodiment of the contents distribution system according to the present invention, procedures using a public key certificate having the validity set is signature verification processing executed by the shop server with regard to an electronic signature generated by the user device as to contents purchase request data sent from the user device to the shop server, and the signature verification processing is processing using a public key stored in a public key certificate of the user device.

Further, according to an embodiment of the contents distribution system according to the present invention, at least part of data exchanged between the user device and the shop server is transmitted with an integrity check value (ICV), based on a session key Kses generated at the time of mutual authentication executed between the user device and the shop server, added thereto, and wherein data tampering check processing based on the ICV is executed at the receiving side.

Further, according to an embodiment of the contents distribution system according to the present invention, the user device adds, to a purchase log transmitted to the log collection server, an integrity check value (ICV) based on a session key Kses generated at the time of mutual authentication executed between the user device and the log collection server, and transmits, and wherein data tampering check processing based on the ICV is executed at the log collection server side.

Further, according to an embodiment of the contents distribution system according to the present invention, the user device generates and adds to a purchase log transmitted to the log collection server an electronic signature of the user device, and wherein the log collection server executes verification processing of the electronic signature of the user device.

Further, according to an embodiment of the contents distribution system according to the present invention, the log collection server manages charges allocation information as to one or more charges reception entities for contents charges, based on a purchase log received from the user device, and executes response processing based on the charges allocation information corresponding to sales confirmation requests from charges reception entities.

Further, according to an embodiment of the contents distribution system according to the present invention, the shop server manages contents sales data, and executes processing for transmitting all sales data within a predetermined period or sales data per charges reception entity to the log collection server.

Further, according to an embodiment of the contents distribution system according to the present invention, the contents purchase request data which the user device generates and transmits to the shop server is configured as data containing a transaction ID serving as a contents transaction identifier, and a contents ID serving as a contents identifier which is the object of purchase request, along with containing an electronic signature of the user device; wherein the shop server checks whether or not there is data tampering by executing signature verification of the contents purchase request data, and executes processing for generating the sale confirmation data based on the contents purchase request data and transmitting to the user device.

Further, according to a sixth aspect of the present invention,
a log collection server, for executing sales management of contents transacted between a shop server and a user device,
accepts a public key certificate updating request from the user device under the conditions that a purchase log generated by the user device according to contents purchased by the user device is received, and executes contents sales management based on the received purchase log.

Further, according to a seventh aspect of the present invention,
a contents distribution method having a log managing configuration comprises:
a step for transmitting contents purchase request data from a user device to a shop server and executing contents purchase requesting processing based on procedures using a public key certificate having validity set;
a step at the shop server for receiving a contents purchase request from the user device, and transmitting sales confirmation data to the user device;
a step at the user device for receiving the sales confirmation data and generating a purchase log based on the received sales confirmation data; and
a step at a log collection server for receiving an updating request for a public key certificate of the user device based on receipt of the purchase log, and transmitting an updated public key certificate of the user device issued by a public key certificate issuer authority to the user device.

Further, according to an embodiment of the contents distribution method according to the present invention, procedures using a public key certificate having the validity set consist of mutual authentication processing using a public key certificate, executed between the user device and shop server.

Further, according to an embodiment of the contents distribution method according to the present invention, procedures using a public key certificate having the validity set is signature verification processing executed by the shop server with regard to an electronic signature generated by the user device as to contents purchase request data sent from the user device to the shop server, and the signature verification processing is processing using a public key stored in a public key certificate of the user device.

Further, according to an embodiment of the contents distribution method according to the present invention, at least part of data exchanged between the user device and the shop server is transmitted with an integrity check value (ICV), based on a session key Kses generated at the time of mutual authentication executed between the user device and the shop server, added thereto, and wherein data tampering check processing based on the ICV is executed at the receiving side.

Further, according to an embodiment of the contents distribution method according to the present invention, the user device adds, to a purchase log transmitted to the log collection server, an integrity check value (ICV) based on a session key Kses generated at the time of mutual authentication executed between the user device and the log collection server, and transmits, and wherein data tampering check processing based on the ICV is executed at the log collection server side.

Further, according to an embodiment of the contents distribution method according to the present invention, the user device generates and adds to a purchase log transmitted to the log collection server an electronic signature of the user device, and wherein the log collection server executes verification processing of the electronic signature of the user device.

Further, according to an embodiment of the contents distribution method according to the present invention, the log collection server manages charges allocation information as to one or more charges reception entities for contents charges, based on a purchase log received from the user device, and executes response processing based on the charges allocation information corresponding to sales confirmation requests from charges reception entities.

Further, according to an embodiment of the contents distribution method according to the present invention, the shop server manages contents sales data, and executes processing for transmitting all sales data within a predetermined period or sales data per charges reception entity to the log collection server.

Further, according to an embodiment of the contents distribution method according to the present invention, the contents purchase request data which the user device generates and transmits to the shop server is configured as data containing a transaction ID serving as a contents transaction identifier, and a contents ID serving as a contents identifier which is the object of purchase request, along with containing an electronic signature of the user device; wherein the shop server checks whether or not there is data tampering by executing signature verification of the contents purchase request data, and executes processing for generating the sale confirmation data based on the contents purchase request data and transmitting to the user device.

Further, according to an eighth aspect of the present invention,
a program providing medium for providing a computer program for executing contents distribution management on a computer system comprises:
a step for receiving a purchase log which a user device generates according to contents purchased by the user device;
a step for executing verification of the purchase log; and
a step for accepting a public key certificate updating request from the user device under the conditions that the authority of the received log has been confirmed by the verification of the purchase log, obtaining the updated public key certificate, and transmitting to the user device.

Further, according to a ninth aspect of the present invention,
a data communication system contains attributes confirmation processing, wherein, between entities executing data communication, attributes information set at an entity which is the other party of communication is obtained from a public key certificate or attributes certificate of an entity which is the other party of communication, with attributes confirmation based on the obtained attributes information being the conditions for executing processing.

Further, according to an embodiment of the data communication system according to the present invention, the attributes information is attributes information set based on functions of entities.

Further, according to an embodiment of the data communication system according to the present invention, entities executing data communications are entities making up a contents distribution system; and contain two or more entities of user devices having functions for purchasing contents, shop servers having functions for receiving contents purchase requests, and service operating servers having functions for managing distribution of contents, with attributes codes serving as differing attributes information being provided to each different entity, and stored in a public key certificate or attributes certificate of each entity.

Further, according to an embodiment of the data communication system according to the present invention, attributes information of the entities is stored in a public key certificate of the entity, and wherein the public key certificate storing the attributes information has a signature of a public key certificate issuer authority generated and stored therein.

Further, according to an embodiment of the data communication system according to the present invention, attributes information of the entities is stored in an attributes certificate of the entity, and wherein the attributes certificate storing the attributes information has a signature of an attributes certificate issuer authority generated and stored therein.

Further, according to an embodiment of the data communication system according to the present invention, the processing for obtaining attributes information set at an entity which is the other party of communication between entities executing data communication, is executed as processing for obtaining from a public key certificate of the other party of communication in mutual authentication processing between entities.

Further, according to an embodiment of the data communication system according to the present invention, the processing for obtaining attributes information set at an entity which is the other party of communication between entities executing data communication, is executed as processing for obtaining an attributes certificate of the other party of communication, executing signature verification of the attributes certificate issuer authority within the attributes certificate, and obtaining from the attributes certificate under the conditions of success of signature verification.

Further, according to an embodiment of the data communication system according to the present invention, the processing for obtaining attributes information set at an entity which is the other party of communication between entities executing data communication, is executed as processing for obtaining from a public key certificate of an entity which is the other party of communication applied to signature verification processing of received data.

Further, according to an embodiment of the data communication system according to the present invention, the processing for obtaining attributes information set at an entity which is the other party of communication between entities executing data communication, is executed as processing for confirming an attributes certificate linking with a public key certificate of the other party of communication, based on the public key certificate serial number stored in the public key certificate and attributes certificate in common, and obtaining from an attributes certificate storing the same public key certificate serial number as the public key certificate.

Further, according to an embodiment of the data communication system according to the present invention, the attributes confirmation processing is executed as comparison processing between attributes code obtained from a public key certificate or attributes certificate of the other party of communication and attributes code set in an entity presupposed to be the other party of communication.

Further, according to an embodiment of the data communication system according to the present invention, the attributes confirmation processing is comparison processing of attributes code contained in a communication processing execution sequence unique to a particular other party of communication; and is executed as comparison processing between attributes code set to the particular other party of communication and attributes code obtained from a public key certificate or attributes certificate of the other party of communication.

Further, according to a tenth aspect of the present invention, a data communication method containing attributes confirmation processing comprises:
an attributes information obtaining step for, between entities executing data communication, obtaining attributes information set at an entity which is the other party of communication from a public key certificate or attributes certificate of an entity which is the other party of communication; and
an attributes confirmation processing step for executing attributes confirmation based on the attributes information obtained in the attributes information obtaining step;
wherein confirmation of the validity of attributes in the attributes confirmation step is the conditions for executing the next process.

Further, according to an embodiment of the data communication method according to the present invention, the attributes information is attributes information set based on functions of entities.

Further, according to an embodiment of the data communication method according to the present invention, entities executing data communications are entities making up a contents distribution system; and contain two or more entities of user devices having functions for purchasing contents, shop servers having functions for receiving contents purchase requests, service operating servers having functions for managing distribution of contents, and distribution servers for distributing contents with attributes codes serving as differing attributes information being provided to each different entity, and stored in a public key certificate or attributes certificate of each entity; and execute attributes confirmation based on the public key certificate or attributes certificate.

Further, according to an embodiment of the data communication method according to the present invention, the public key certificate of the entity contains attributes information set to the entity, with a signature of the public key certificate issuer authority stored therein; and an entity for executing attributes confirmation executes processing for obtaining the attributes information following signature verification of the public key certificate issuer authority.

Further, according to an embodiment of the data communication method according to the present invention, the attributes certificate of the entity contains attributes information set to the entity, with a signature of the attributes certificate issuer authority stored therein; and an entity for executing attributes confirmation executes processing for obtaining the attributes information following signature verification of the attributes certificate issuer authority.

Further, according to an embodiment of the data communication method according to the present invention, the processing for obtaining attributes information set at an entity which is the other party of communication between entities executing data communication, is executed as processing for obtaining from a public key certificate of the other party of communication in mutual authentication processing between entities.

Further, according to an embodiment of the data communication method according to the present invention, the processing for obtaining attributes information set at an entity which is the other party of communication between entities executing data communication, is executed as processing for obtaining from a public key certificate of the entity which is the other party of communication, applied to signature verification processing of received data.

Further, according to an embodiment of the data communication method according to the present invention, the processing for obtaining attributes information set at an entity which is the other party of communication between entities executing data communication, is executed as processing for confirming an attributes certificate linking with a public key certificate of the other party of communication, based on the public key certificate serial number stored in the public key certificate and attributes certificate in common, and obtaining from an attributes certificate storing the same public key certificate serial number as the public key certificate.

Further, according to an embodiment of the data communication method according to the present invention, the attributes confirmation processing step is executed as comparison processing between attributes code obtained from a public key certificate or attributes certificate of an entity which is the other party of communication and attributes code set in an entity presupposed to be the other party of communication.

Further, according to an embodiment of the data communication method according to the present invention, the attributes confirmation processing step is comparison processing of attributes code contained in a communication processing execution program unique to a particular other party of communication; and is executed as comparison processing between attributes code set to the particular other party of communication and attributes code obtained from a public key certificate or attributes certificate of the entity which is the other party of communication.

Further, according to an eleventh aspect of the present invention,
a recording medium has attributes information based on the functions of an entity for executing data communication as configuration data, and stores a public key certificate containing signature data of a public key certificate issuer authority.

Further, according to a twelfth aspect of the present invention,
a recording medium has attributes information based on the functions of an entity for executing data communication as configuration data, and stores an attributes certificate containing signature data of an attributes certificate issuer authority.

Further, according to a thirteenth aspect of the present invention,
a program providing medium provides a computer program for executing data communication processing on a computer system, the computer program comprising:
an attributes information obtaining step for, between entities executing data communication, obtaining attributes information set at an entity which is the other party of communication from a public key certificate or attributes certificate of the entity which is the other party of communication; and
an attributes confirmation processing step for executing attributes confirmation based on the attributes information obtained in the attributes information obtaining step.

Now, the program providing medium relating to the present invention is a medium for providing a computer program in a computer-readable format to a general-purpose computer system capable of executing various types of program code, for example. The medium is not particularly restricted in form, such as to recording media such as CDs, FDs, MOs, or the like, or to transfer media such as networks or the like.

Such a program providing medium defines the structural or functional cooperative relation between the computer program and providing medium, for realizing the functions of a particular computer program on a computer system. In other words, installing a computer program in a computer system through the providing medium causes the cooperative operations to be manifested on the computer system, so operations the same as the other aspects of the present invention can be obtained.

Other objects, characteristics, and advantages of the present invention will become more apparent from detailed description based on the later-described embodiments of the present invention and the attached drawings.

### Brief Description of the Drawings

Fig. 1 is a diagram describing a system overview of a contents distribution system according to the present invention and contents distribution processing.

Fig. 2 is a diagram illustrating the configuration of a shop server with the contents distribution system according to the present invention.

Fig. 3 is a diagram illustrating the configuration of a purchase management database of the shop server with the contents distribution system according to the present invention.

Fig. 4 is a diagram illustrating the configuration of control means of the shop server with the contents distribution system according to the present invention.

Fig. 5 is a diagram illustrating the configuration of a user device authentication server with the contents distribution system according to the present invention.

Fig. 6 is a diagram illustrating the configuration of a license management database of the user device authentication server with the contents distribution system according to the present invention.

Fig. 7 is a diagram illustrating the configuration of a user device with the contents distribution system according to the present invention.

Fig. 8 is a diagram illustrating the configuration of a purchase management database of the user device with the contents distribution system according to the present invention.

Fig. 9 is a diagram illustrating a public key certificate distribution configuration with the contents distribution system according to the present invention.

Fig. 10 is a diagram describing signature generating processing applicable to the contents distribution system according to the present invention.

Fig. 11 is a diagram describing signature verifying processing applicable to the contents distribution system according to the present invention.

Fig. 12 is a diagram describing mutual authentication (symmetric key method) processing applicable to the contents distribution system according to the present invention.

Fig. 13 is a diagram describing mutual authentication (asymmetric key method) processing applicable to the contents distribution system according to the present invention.

Fig. 14 is a diagram describing the configuration of data communicated between entities in the contents distribution system according to the present invention.

Fig. 15 is a diagram describing data verification processing applicable to the contents distribution system according to the present invention.

Fig. 16 is a diagram describing the key switching processing executed with the contents distribution system according to the present invention.

Fig. 17 is a diagram describing the configuration of data communicated between entities in the contents distribution system according to the present invention.

Fig. 18 is a diagram describing the configuration of data communicated between entities in the contents distribution system according to the present invention.

Fig. 19 is a diagram describing the contents key saving processing executed with the contents distribution system according to the present invention.

Fig. 20 is a diagram describing the status transition of the shop server with the contents distribution system according to the present invention.

Fig. 21 is a diagram describing the status transition of the user device with the contents distribution system according to the present invention.

Fig. 22 is a diagram describing the status transition of the user device authentication server with the contents distribution system according to the present invention.

Fig. 23 is a diagram describing the processing flow between a shop server and user device (part 1) with the contents distribution system according to the present invention.

Fig. 24 is a diagram describing the processing flow between a shop server and user device (part 2) with the contents distribution system according to the present invention.

Fig. 25 is a diagram describing the processing flow between a user device authentication server and user device with the contents distribution system according to the present invention.

Fig. 26 is a diagram describing the processing flow between a user device authentication server and shop server with the contents distribution system according to the present invention.

Fig. 27 is a diagram describing the processing flow between a shop server and user device (part 1) with the contents distribution system according to the present invention.

Fig. 28 is a diagram describing the processing flow between a shop server and user device (part 2) with the contents distribution system according to the present invention.

Fig. 29 is a diagram describing contents distribution processing using a distribution server as a modification of the contents distribution system according to the present invention.

Fig. 30 is a diagram describing contents distribution processing using a distribution server as a modification of the contents distribution system according to the present invention.

Fig. 31 is a diagram describing contents distribution processing in a modification of the contents distribution system according to the present invention.

Fig. 32 is a diagram describing the configuration of data communicated between entities in the contents distribution system according to the present invention.

Fig. 33 is a diagram describing the configuration of data communicated between entities in the contents distribution system according to the present invention.

Fig. 34 is a diagram describing the configuration of data communicated between entities in the contents distribution system according to the present invention.

Fig. 35 is a diagram describing contents distribution processing not accompanied by mutual authentication with the contents distribution system according to the present invention.

Fig. 36 is a diagram describing a modified example of contents distribution processing not accompanied by mutual authentication with the contents distribution system according to the present invention.

Fig. 37 is a diagram describing contents distribution processing applying to which electronic tickets are applied, with the contents distribution system according to the present invention.

Fig. 38 is a diagram describing the configuration of a ticket issuing server with the contents distribution system according to the present invention.

Fig. 39 is a diagram describing a ticket issuing management database configuration of the ticket issuing server with the contents distribution system according to the present invention.

Fig. 40 is a diagram describing a purchase management database configuration of the user device with the contents distribution system according to the present invention.

Fig. 41 is a diagram describing a license management database configuration of the user device authentication server with the contents distribution system according to the present invention.

Fig. 42 is a diagram describing the configuration of the distribution server with the contents distribution system according to the present invention.

Fig. 43 is a diagram describing the distribution management database configuration of the distribution server with the contents distribution system according to the present invention.

Fig. 44 is a diagram describing the configuration of the ticket exchange server with the contents distribution system according to the present invention.

Fig. 45 is a diagram describing the ticket cashing management database configuration of the ticket exchange server with the contents distribution system according to the present invention.

Fig. 46 is a diagram describing the configuration of data communicated between entities in the contents distribution system according to the present invention.

Fig. 47 is a diagram describing the configuration of data communicated between entities in the contents distribution system according to the present invention.

Fig. 48 is a diagram describing the status transition of the ticket issuing server with the contents distribution system according to the present invention.

Fig. 49 is a diagram describing the status transition of the user device authentication server with the contents distribution system according to the present invention.

Fig. 50 is a diagram describing the status transition of the distribution server with the contents distribution system according to the present invention.

Fig. 51 is a diagram describing the status transition of the user device with the contents distribution system according to the present invention.

Fig. 52 is a diagram describing the status transition of the ticket exchange server with the contents distribution system according to the present invention.

Fig. 53 is a diagram describing a specific example of contents distribution processing wherein an electronic ticket server has been applied, with the contents distribution system according to the present invention.

Fig. 54 is a diagram describing a specific example of contents distribution processing wherein a log collection server has been applied, with the contents distribution system according to the present invention.

Fig. 55 is a diagram describing a configuration example of a purchase log with the contents distribution system according to the present invention.

Fig. 56 is a diagram illustrating the configuration of the log collection server with the contents distribution system according to the present invention.

Fig. 57 is a flowchart illustrating the processing between a user device and shop server (part 1) with the contents distribution system according to the present invention.

Fig. 58 is a flowchart illustrating the processing between a user device and shop server (part 2) with the contents distribution system according to the present invention.

Fig. 59 is a diagram illustrating a format example of purchase request data and sales confirmation data, with the contents distribution system according to the present invention.

Fig. 60 is a diagram illustrating an integrity check value (ICV) generation processing configuration, applicable to the contents distribution system according to the present invention.

Fig. 61 is a flowchart illustrating the processing between a user device and log collection server (part 1) with the contents distribution system according to the present invention.

Fig. 62 is a flowchart illustrating the processing between a user device and log collection server (part 2) with the contents distribution system according to the present invention.

Fig. 63 is a flowchart illustrating the processing between a contents provider and log collection server with the contents distribution system according to the present invention.

Fig. 64 is a flowchart illustrating the processing between a shop server and log collection server with the contents distribution system according to the present invention.

Fig. 65 is a flowchart illustrating the processing between a shop server and log collection server with the contents distribution system according to the present invention.

Fig. 66 is a diagram describing attributes information applicable with the contents distribution system according to the present invention.

Fig. 67 is a diagram illustrating a public key certificate configuration having attributes information applicable with the contents distribution system according to the present invention.

Fig. 68 is a diagram illustrating a public key certificate and an attributes certificate configuration applicable with the contents distribution system according to the present invention.

Fig. 69 is a diagram describing new issuing processing of a public key certificate with the contents distribution system according to the present invention.

Fig. 70 is a diagram describing updating processing of a public key certificate with the contents distribution system according to the present invention.

Fig. 71 is a diagram describing new issuing processing of an attributes certificate with the contents distribution system according to the present invention.

Fig. 72 is a diagram describing contents distribution processing accompanied by an attributes check, with the contents distribution system according to the present invention.

Fig. 73 is a flowchart describing mutual authentication processing accompanied by an attributes check, with the contents distribution system according to the present invention.

Fig. 74 is a diagram describing contents distribution processing accompanied by an attributes check, with the contents distribution system according to the present invention.

Fig. 75 is a flowchart describing data verification processing accompanied by an attributes check, with the contents distribution system according to the present invention.

Fig. 76 is a flowchart describing data verification processing accompanied by an attributes check, with the contents distribution system according to the present invention.

### Best Mode for Carrying Out the Invention

The following is a detailed description of embodiments of the present invention, with reference to the drawings.

The description will proceed along the following items.
1. Contents distribution management by key switching processing of encrypted keys
   1.1 System configuration: basic contents distribution model 1
   1.2 Modification of basic contents distribution model 1
   1.3 Basic contents distribution model 2
2. Contents distribution model using electronic tickets
3. Contents distribution management by log collection server
4. Public key certificate or attributes certificate usage configuration recording attributes data

[1. Contents distribution management by key switching processing of encrypted keys]
   [1.1 System configuration: basic contents distribution model 1]

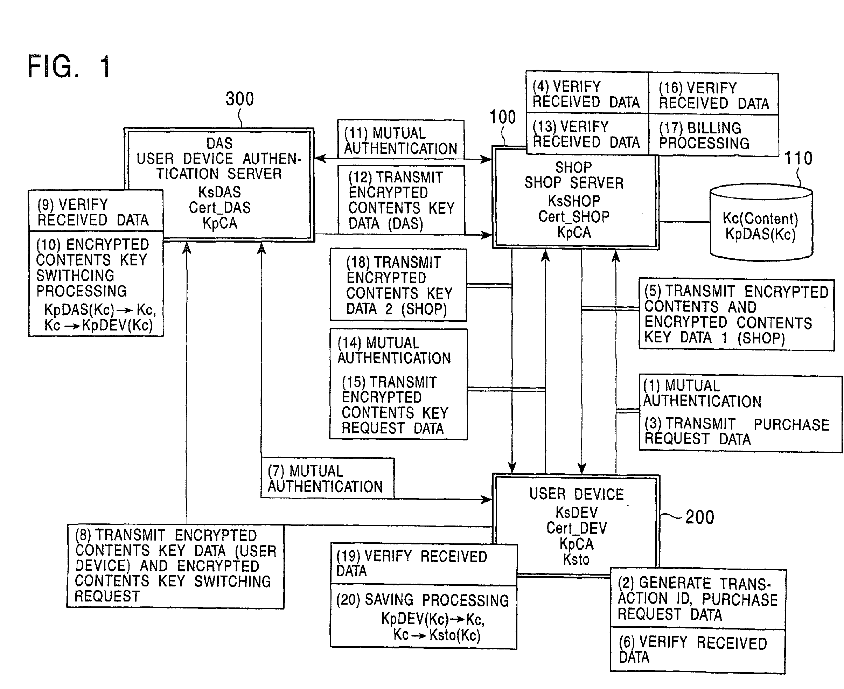

Fig. 1 illustrates a diagram describing the overview of an embodiment of the contents distribution system and contents distribution method according to the present invention. Note that the terms system is a logical collective configuration of multiple devices, and the component devices do not necessarily exist within the same housing.

The primary components of the contents distribution systems shown in Fig. 1 is a shop server (SHOP) 100 for performing contents distribution services to user devices, a user device (DEVICE) 200 for receiving distribution of contents from the shop servers 100, and a user device authentication server (DAS: Device Authentication Server) 300 serving as an administration server for managing valid contents transactions. Now, while in the configuration in Fig. 1, one each are illustrated for the shop server 100, user device 200, and user device authentication server 300, in an actual contents transaction configuration, a plurality of each of the components shown in Fig. 1 exist, and information is exchanged through various routes each time a contents transaction occurs. Fig. 1 illustrates the flow of data for one contents transaction.

### (Shop server)

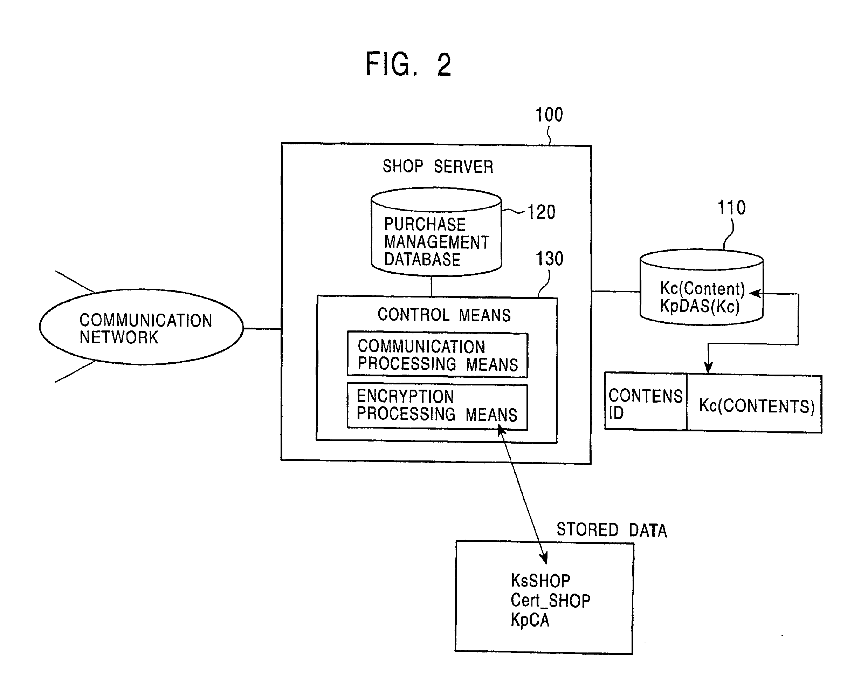

Fig. 2 shows the configuration of the shop server 100 of the contents distribution system shown in Fig. 1. The shop server 100 has the contents database 110 storing Kc (Content) which is encrypted contents data wherein contents which are the object of transaction are encrypted with a contents key, and an encrypted contents key KpDAS(Kc) which is a contents key Kc encrypted with the public key KpDAS of the user device authentication server (DAS: Device Authentication Server). Now, as shown in the figure, Kc (Content) which is encrypted contents data have contents IDs which are each contents identifiers added, and have a configuration that is identifiable based on the contents IDs.

The shop server 100 further has a purchase management database 120 which further manages contents transaction management data, e.g., an identifier of the user device to which contents are sold, and contents identifiers or the like, in a correlated manner. This further has control means 130 for executing extraction processing of distribution contents from the contents database 110, generation processing of transaction data to be recorded in the purchase management database 120 accompanying transactions, communication processing between the user device 200 and the user device authentication server 300, and further, execution of data encryption processing and the like at the time of each of the communication processing.

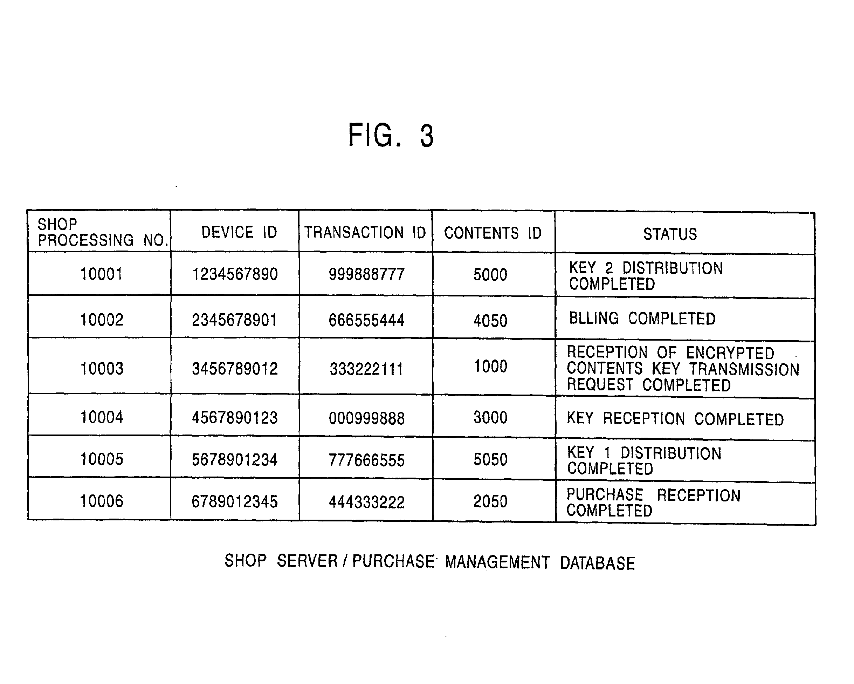

Fig. 3 illustrates the data configuration of the purchase management database 120. The purchase management database 120 has information of a shop processing No. serving as an identification number which is internally generated at the time of the shop server executing processing in response to contents transactions, a device ID which is the identifier of the user device which has issued a contents purchase commission, the transaction ID serving as a contents transaction identifier generated and issued at the user device at the time of executing contents transactions between the user device and the shop, a contents ID which is an identifier of contents which are the object of transaction, and the status which indicates the status of contents transaction processing at the shop server. Though described later in detail, the status is updated according to the progress of multiple processes accompanying contents transactions.

The control means 130 has functions as encryption processing means and communication processing means, as shown in Fig. 2, and control means 130 are configured of a computer storing, for example, encryption processing programs and communication processing programs. Key data and the like used for encryption processing executed by that encryption processing means of the control means 130 is stored securely in the storing means within the control means. Encryption processing data of encryption keys and the like stored by the shop server 100 include a shop server secret key: KsSHOP, the shop server public key certificate Cert_SHOP, and the public key KpCA of the certificate authority (CA) serving as the public key certificate issuer authority which is the issuer authority of public key certificates.

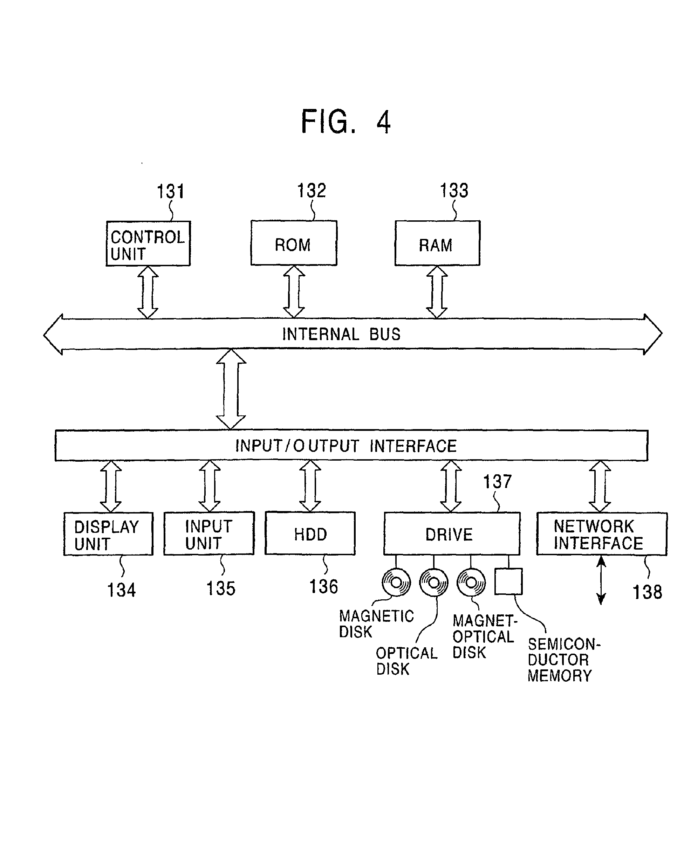

Fig. 4 shows a configuration example of the control means 130. The configuration of the control means 130 will be described. The control unit 131 is configured of the Central processing Unit (CPU) for executing various types of processing programs, and controls the processing of the components of the control means shown in Fig. 4. ROM (Read Only Memory) 132 is memory storing programs such as the IPL (Initial Program Loading). RAM (Random Access Memory) 133 is used for storing execution programs executed by the control unit 131, e.g., database management programs, encryption processing programs, communication programs, etc., and as work area for processing of these programs.

The display unit 134 has display means such as a liquid crystal display, CRT, etc., and displays data at the time of executing various programs, e.g., user data and the like of the contents distribution destination, under control of the control unit 131. The input unit 135 has a keyboard, and, for example, a pointing device such as a mouse or the like, for outputting commands and data input from these input devices to the control unit 131. The HDD (Hard Disk Drive) 136 stores programs such as database managing programs, encryption processing programs, communication programs, etc., and further, the various types of data.

The drive 137 has functions for controlling access to various types of recording media such as, for example, magnetic disks such as HDs (Hard Disk) and FDs (Floppy Disk), optical disks such as CD-ROMs (Compact disk ROM), magnetooptical disks such as Mini-disks and the like, semiconductor memory such as ROM and flash memory and the like, and so forth. The various types of recording media such as magnetic disks and the like store programs, data, etc. The network interface 138 functions as a communication interface through cable or wireless [means], such as the Internet, telephone lines, etc.

The shop server 100 executes various types of encryption processing, authentication processing, etc., accompanying a contents transactions with user devices 200 which are the object of contents transactions, or user device authentication servers 300, with the control means 130 having the above-described configuration, for example.

### (User device authentication server)

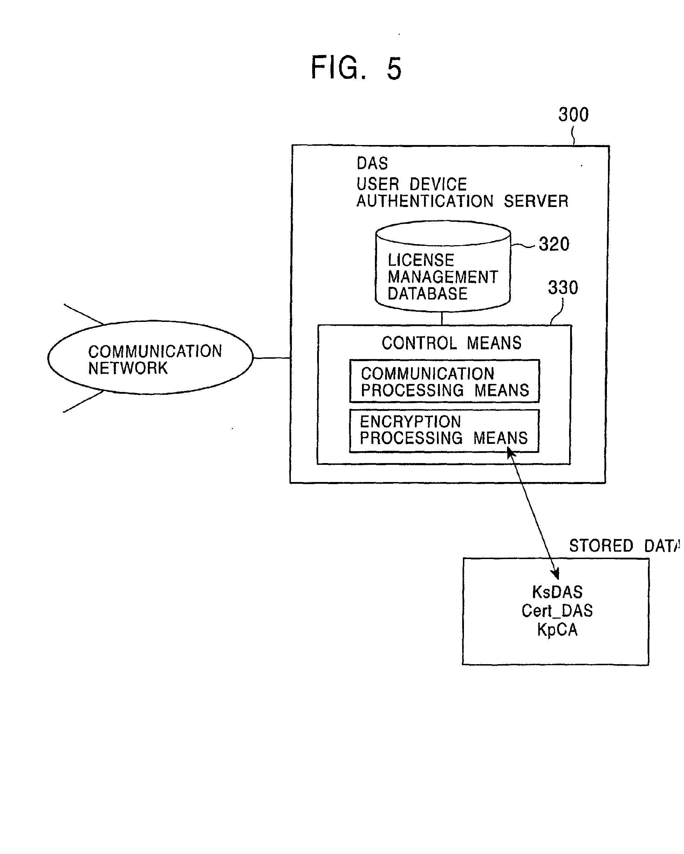

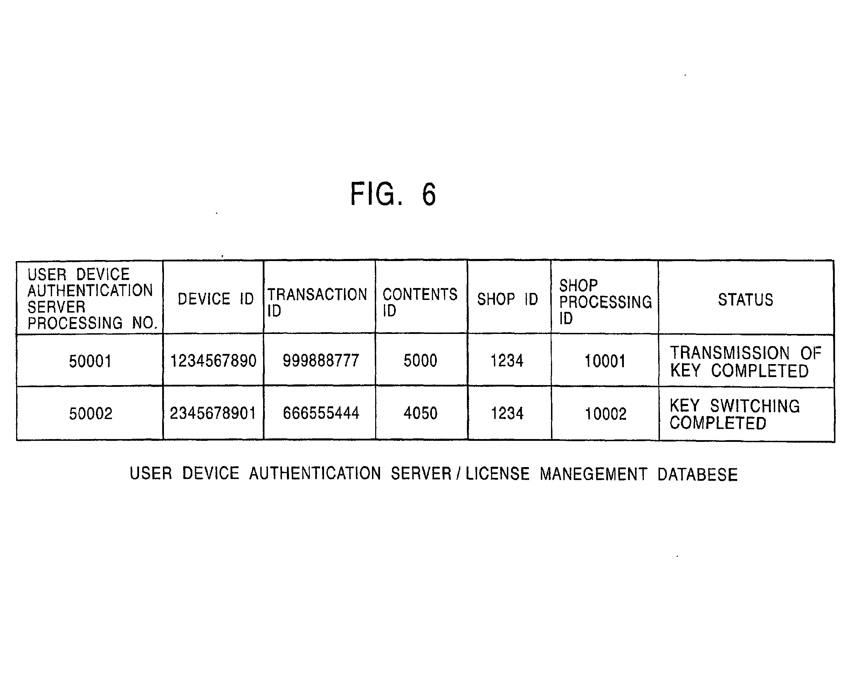

Fig. 5 shows the configuration of the user device authentication server (DAS) 300. The user device authentication server has a license management database 320. Fig. 6 shows the data configuration of the license management database 320. The license management database has the various information of a user device authentication server processing No. serving as a processing identifier internally generated according to processing executed by the user device authentication server (DAS) at the time of contents transactions, device ID which is an identifier of the user device that has issued a contents purchasing commission, the transaction ID serving as the contents transaction identifier generated and issued at the user device at the time of executing contents transactions, a contents ID which is the identifier of contents which are an object of transaction, a shop ID which is the identifier of a shop server executing contents transactions, the shop processing No. which is the processing identifier at the shop issued by the shop, and status which indicates the status of contents transaction processing at the user device authentication server (DAS). While described later in detail, the status is updated according to the progress of multiple processes accompanying contents transactions.

The user device authentication server (DAS) 300 further has control means 330 for communication processing with the user device 200 and shop server 100, and further, for executing the data encryption processing at the time of each of the communication processes. As with the above-described control means of the shop server, the control means 330 have functions as encryption processing means and communication processing means. The configuration thereof to is the same as the configuration described with reference to Fig. 4. The key data and the like used in the encryption processing executed by the encryption processing means of the control means 330 is securely stored in storing means within the control means. The encryption processing data such as encryption keys and the like stored by the user device authentication server (DAS) 300 include the secret key KsDAS of the user device authentication server (DAS), the public key certificate Cert_DAS of the user device authentication server (DAS), and the public key KpCA of the certificate authority (CA) serving as the public key certificate issuer authority which is the issuer authority of public key certificates.

### (User device)

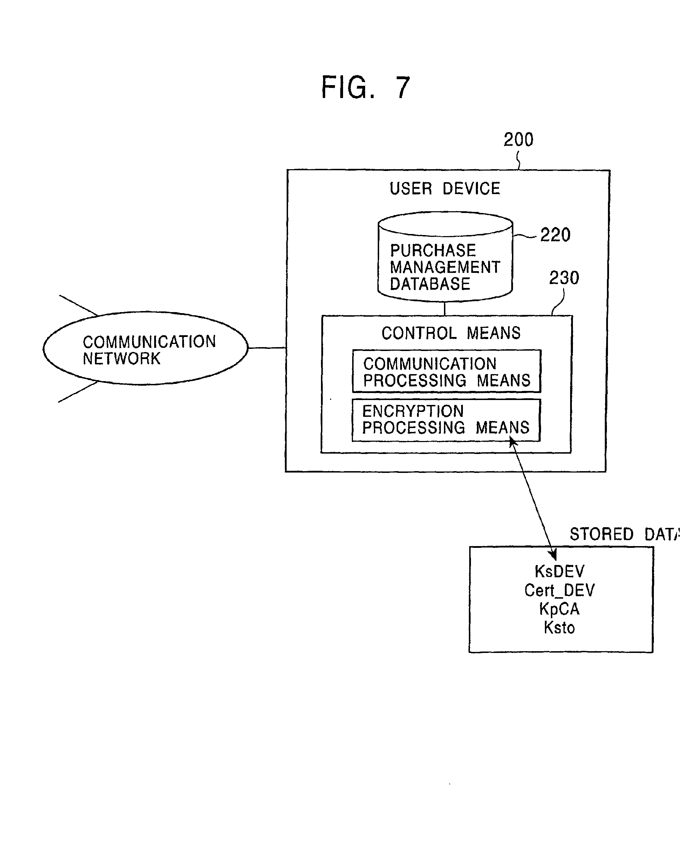

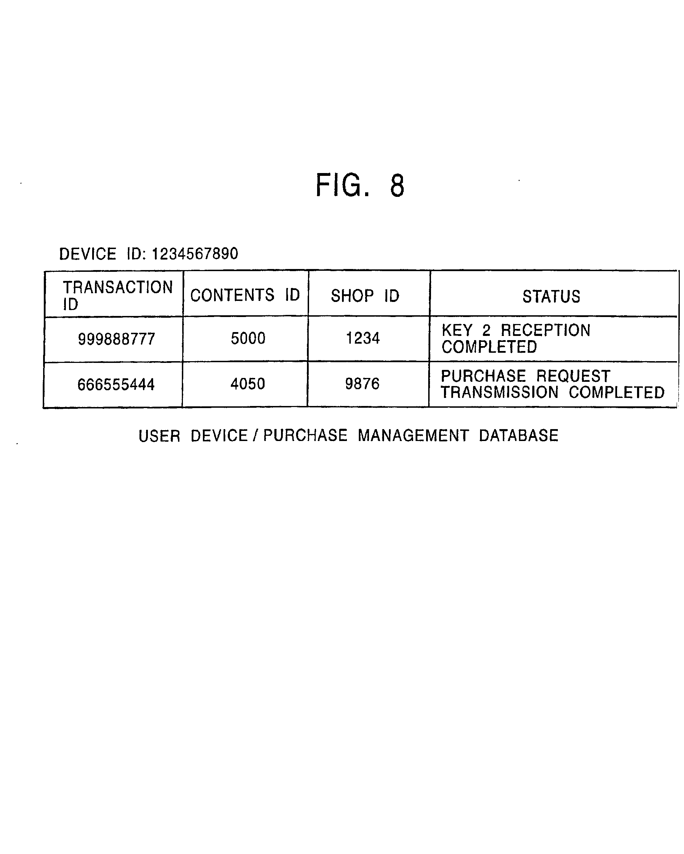

Fig. 7 shows the configuration of the user device 200. The user device is a contents reproducing device, for example, which executes purchasing of contents, and uses, i.e., reproduces and executes contents, and has a purchase managing database 220. The data configuration of the purchase managing database 220 is shown in Fig. 8. The purchase managing database has the various information of a transaction ID serving as a contents transaction identifier which is generated and issued at the user device at the time of executing contents transactions, a contents ID which is an identifier of contents which are the object of transaction, a shop ID which is an identifier of the shop server which executes contents transactions, and status which indicates the status of processing of contents transactions at the user device, and further has a device ID which is the device identifier of the user device. Though described later in detail, the status is updated according to the progress of multiple processes accompanying transactions of contents.

The user device 200 has control means 230 for executing communication processing with a shop server 100 and the user device authentication server 300, and further executing data encryption processing and the like at the time of each of the communication processes. The control means 230, as with the above-described shop server control means, has functions as encryption processing means and communication processing means. The configuration thereof is the same as the configuration described with reference to Fig. 4. The key data and the like used in the encryption processing executed by the encryption processing means of the control means 230 is securely stored in storing means within the control means. The encryption processing data such as encryption keys and the like stored by the user device 200 include the secret key KsDEV of the user device, the public key certificate Cert_DEV of the user device, the public key KpCA of the certificate authority (CA) serving as the public key certificate issuer authority which is the issuer authority of public key certificates, and a storing key Ksto applied as an encryption key at the time of storing contents in storing means such as the hard disk or the like, for example, of the user device.

### [Public key certificate]

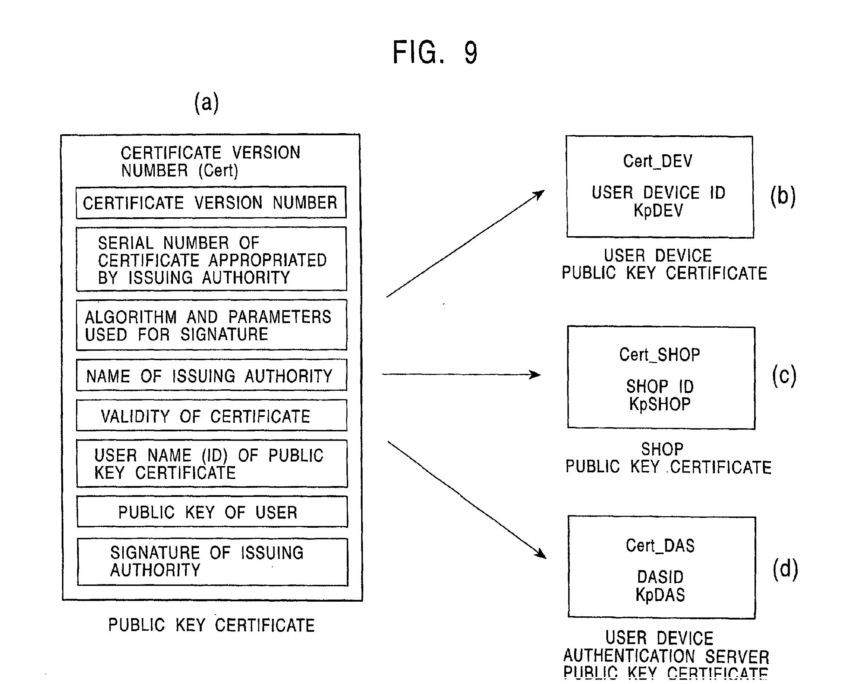

The public key certificate held by the above-described shop server (SHOP) 100, user device (DEVICE) 200, and user device authentication server (DAS) 300, will be described with reference to Fig. 9.

The public key certificate is certification that a public key used in exchange of encrypted data using a public key, or processing such as mutual authentication between two parties carrying out data exchange, is a public key which an authorized user has, by a third party, i.e., an issuer authority (CA: Certificate Authority). Fig. 9(a) shows an overview of the format of public key certificate.

The version indicates the version of the certificate format.

The certificate serial number is a serial number, and is the serial number of the public key certificate set by the public key certificate issuer authority (CA).

The signature algorithm identifier and algorithm parameter are fields for recording the signature algorithm of the public key certificate, and the parameters thereof. Now, for the signature algorithms, there are Elliptic Curve encryption and RSA, and in the event that Elliptic Curve encryption is applied, the parameters and key length are recorded, and in the event that RSA is applied, the key length is recorded.

The name of the issuer authority is a field which is recorded with the issuer name of the public key certificate, i.e., the name of the public key certificate issuer authority (CA) in an identifiable format (Distinguished Name).

For the validity of the certificate, the starting date and time, and ending date and time, of the valid period of the certificate is recorded.

For the user name (ID) of the public key certificate, the name of the subject of certification, which is the user, is recorded. Specifically, this is, for example, the user device ID, service providing entity ID, or the like.

The user public key (subject Public Key Info algorithm subject Public key) is a field for storing the key algorithm and the key information itself as public key information of the user.

The signature which the issuer authority attaches is an electronic signature executed to the data of the public key certificate using the secret key of the public key certificate issuer authority (CA), and the user of the public key certificate can perform verification using the public key of the public key certificate issuer authority (CA), to check whether or not there has been tampering with the public key certificate.

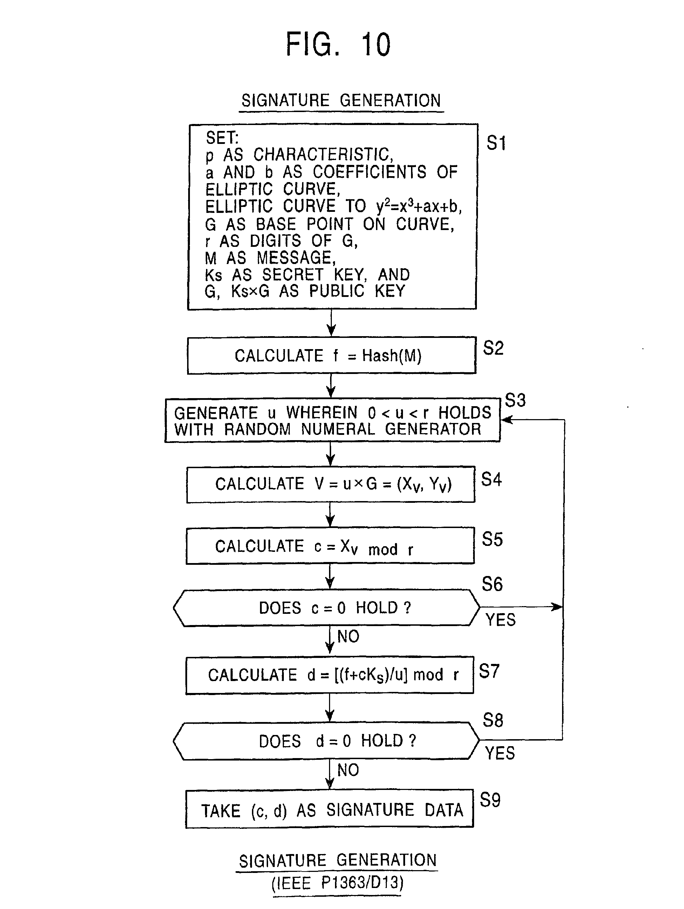

The method for generating an electronic signature using public key encryption method will be described with reference to Fig. 10. The processing shown in Fig. 10 is the flow for the generation processing of electronic signature data using EC-DSA((Elliptic Curve Digital Signature Algorithm), IEEE P1363/D3). Here, an example using Elliptic Curve Cryptography (hereafter referred to as ECC) will be described for public key encryption. Note that the data processing device according to the present invention is capable of using other similar public key encryption methods besides elliptic curve cryptography, such as RSA encryption ((Rivest, Shamir, Adleman), etc. (ANSI X9.31)), for example.

The steps in Fig. 10 will be described. In step S1, p is set as characteristic, a and b as coefficients of the elliptic curve (wherein the elliptic curve is 4a³ + 27b² ≠ 0 (mod p), G as the base point on the curve, r as digits of G, and Ks as a secret key (0 < Ks < r). In step S2, the hash value of message M is calculated, and set as f = Hash(M).

Now, the method for using a hash function to obtain a hash value will be described. A hash function is a function wherein a message is taken as input, which is compressed to data of a predetermined bit length, and output as a hash value. It is difficult to predict the input from the hash value (output) with hash functions, and in the event that one bit of the data input to the hash function changes, a great number of bits of the hash value change, and also, the difficulty in finding different input data having the same hash value is also a characteristic thereof. MD4, MD5, SHA-1, and the like may be used for hash functions, or DES-CBC may be used. In this case, MAC (check value: equivalent to ICV) which is the final output value is the hash value.

Next, in step S3, a random numeral u (0 < u < r) is generated, and in step S4, coordinates V (Xv, Yv) which is the base point multiplied by u, are calculated. Note that additions and doublings on the elliptic curve are stipulated as follows.
With P = (Xa, Ya), Q = (Xb, Yb), R = (Xc, Yc) = P + Q, in the event that P ≠ Q (addition),
Xc = λ² - Xa - Xb
Yc = λ × (Xa - Xc) - Ya
λ = (Yb - Ya) / (Xb - Xa)
in the event that P = Q (doubling),
Xc = λ² - 2Xa
Yc = λ x (Xa - Xc) - Ya
λ = (3 (Xa)² + a) / (2Ya)

These are used to calculate u times the point G (though the speed is slow, the following calculation method will be carried out since it is the easiest to understand. G, 2 x G, 4 × G ·· is calculated, binary expansion of u is performed, and 2ⁱ × G (a value wherein G is doubled i times (wherein i is the bit position when counted from the LSB of u)) is added to the place wherein 1 is situated.

In step S5, c = Xvmod r is calculated, judgment is made in step S6 regarding whether or not the value is 0, and in the event that it is not 0, d = [(f + cKs)/u] mod r is calculated in step S7, judgment is made in step S8 regarding whether d is 0, and in the event that d is not 0, c and d are output as electronic signature data in step S9. Assuming r is a length of 160 bits in length, the electronic signature data is 320 bits in length.

In step S6, in the event that c is 0, the flow returns to step S3 and generates a new random number again. In the same way, in the event that d is 0 in step S8, the flow returns to step S3 and generates a new random number again.

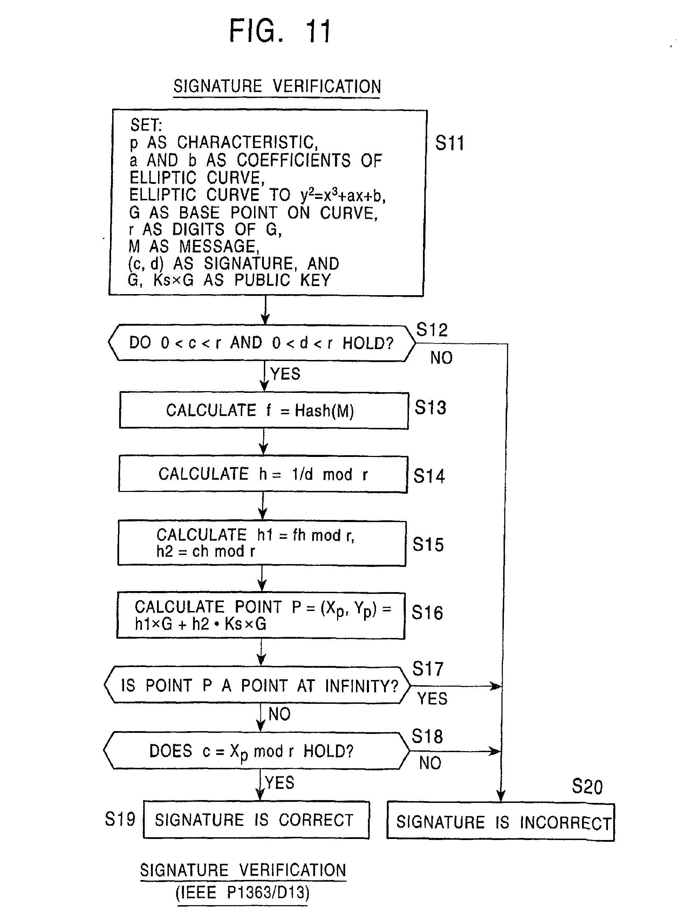

Next, the verification method for an electronic signature using the public key encryption method will be described with reference to Fig. 11. In step S11, M is set as a message, p as a characteristic, a and b as coefficients of the elliptic curve (elliptic curve: y² = x³ + ax + b), G as the base point on the elliptic curve, r as digits of G, and G and Ks x G as a public key (0 < Ks < r). In step S12, verification is performed regarding whether the electronic signature data c and d satisfy 0 < c < r and 0 < d < r. In the event that these are satisfied, the hash value of the message M is calculated in step S13, and set to f = Hash(M). Next, in step S14, h = 1/d mod r is calculated, and in step S15, h1 = fh mod r and h2 = ch mod r are calculated.

In step S16, point P = (Xp, Yp) = h1 × G + h2·Ks × G is calculated, using the already-calculated h1 and h2. The electronic signature verifier knows the public key G and Ks x G, and accordingly can calculate the Scalar Multiplications of points on the elliptic curve, in the same manner as with step S4 in Fig. 10. Judgment is made in step S17 regarding whether or not point P is a point at infinity, and in the event that this is not a point at infinity, the flow proceeds to step S18 (Actually, judgment whether a point at infinity can be done in step S16. That is, upon performing addition of P = (X, Y) and Q = (X, -Y), λ cannot be calculated, so the fact that P + Q is a point at infinity is found out there.). Xp mod r is calculated in step S18, and compared with the electronic signature c. Finally, in the event that the values match, the flow proceeds to step S19, and judgment is made that the electronic signature is correct.

In the event that judgment is made that the electronic signature is correct, it can be understood that the data has not been tampered with, and that one holding the secret key corresponding to the public key has generated the electronic signature.

In step S12, in the event that the electronic signature data c or d do not satisfy 0 < c < r and 0 < d < r, the flow proceeds to step S20. Also, the flow proceeds to step S20 in the event that the point P is a point at infinity in step S17, as well. Moreover, the flow also proceeds to step S20 in the event that the value of Xp mod r does not match the electronic signature data c in step S18.

In the event that judgment is made that the electronic signature is not correct in step S20, it can be understood that the data has been tampered with, or that one holding the secret key corresponding to the public key has not generated the electronic signature.

The signature of the issuer authority is affixed to the public key certificate, and whether or not the certificate has been tampered with can be checked by signature verification by a public key user. Now, let us return to Fig. 9 to continue the description. Fig. 9(b) is the public key certificate: Cert_DEV of the user device stored in the user device, and stores the user device ID and the public key KpDEV of the user device. Fig. 9(c) is the public key certificate: Cert_SHOP of the shop server stored in the shop server, and stores the shop ID and the public key KpSHOP of the shop server. Fig. 9(d) is the public key certificate: Cert_DAS of the user device authentication server stored in the user device authentication server, and stores the user device authentication server ID and the public key KpDAS of the user device authentication server. In this way, the user device, shop server, and user device authentication server each have a public key certificate.

### [Contents purchase processing]

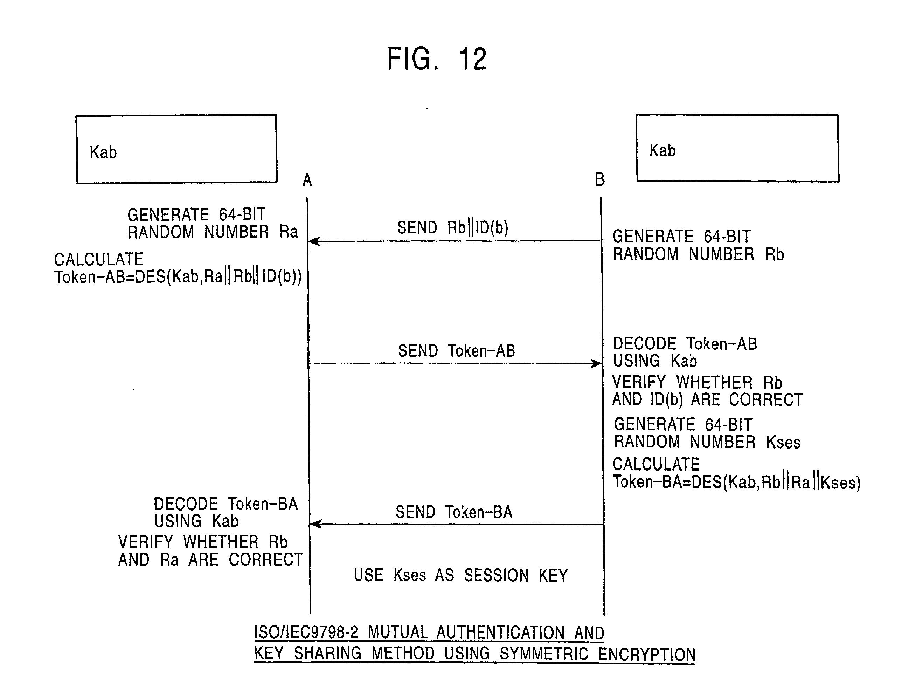

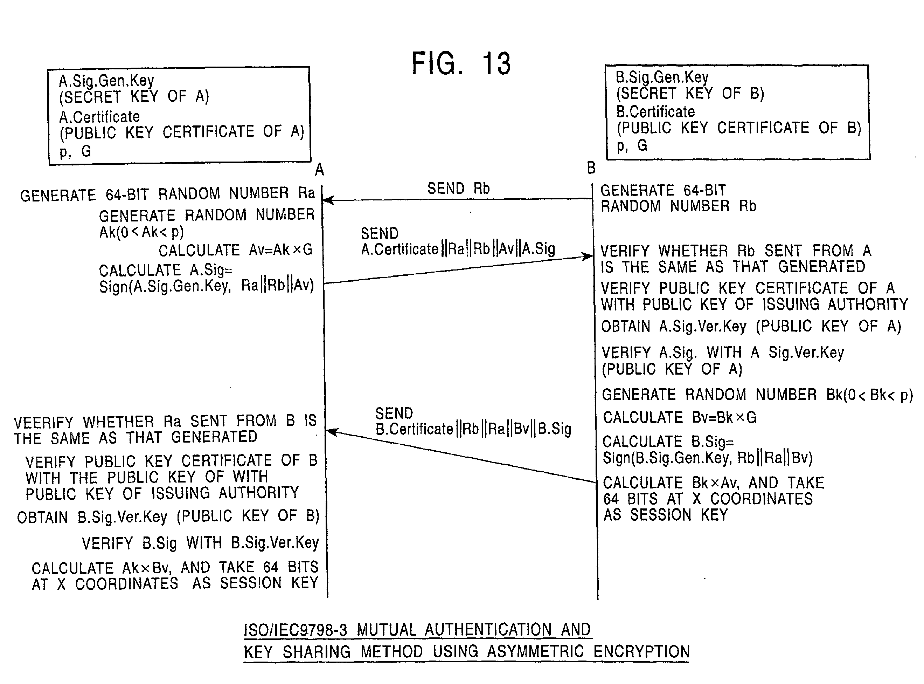

Next, returning to Fig. 1, description will be made regarding the processing of the user device purchasing contents from a shop server and using them. Processing proceeds in the order of numbers (1) through (20) in Fig. 1. The details of the processing will be described in order of the numbers. Note that with the present embodiment, mutual authentication processing ((1), (7), (11)) is described being performed in the communication between the entities, but may be omitted as necessary.
(1) Mutual authentication
   The user device 200 which is attempting to purchase contents from the shop server 100 performs mutual authentication processing with a shop server. Between the two means for executing data exchange, mutual confirmation is made regarding whether the other party is the correct data communicator, following which necessary data transfer is performed. The confirmation processing of whether or not the other party is the correct data communicator, is mutual authentication processing. A configuration wherein a session key is generated at the time of mutual confirmation processing, and encryption processing is executed with the generated session key as a shared key to perform data communication, is one preferable data transfer method.
   The mutual authentication method using a shared the key encryption method, will be described with reference to Fig. 12. In Fig. 12, DES is used as the shared key encryption method, but any of such similar shared key encryption methods may be used.
   First, B generates a 64-bit random number Rb, and transmits the Rb and its own ID which is ID(b) to A. A, upon receiving this, generates a new 64-bit random number Rₐ, encrypts the data using the key Kab in this CBC mode of DES, in the order of Ra, Rb, ID(b), and returns this to B.
   B, upon receiving this, decrypts the received data with the key Kab. The method for decrypting the received data involves first, decrypting the ciphertext E1 with the key Kab to obtain the random number Ra. Next, the ciphertext E2 is decrypted with the key Kab, the exclusive-OR of the results thereof and E1 is obtained, to obtain Rb. Finally, the ciphertext E3 is decrypted with the key Kab, the exclusive-OR of the results thereof and E2 is obtained, to obtain the ID(b). Of the Ra, Rb, and ID(b) thus obtained, verification is made regarding whether or not Rb and ID(b) match that transmitted by B. In the event that this verification passes, B authenticates A to be valid.
   Next, B generates a session key (hereafter referred to as Kses) to be used following authentication (the generation method uses random numbers). Then, encryption is performed using the key Kab in the CBC mode of DES, in the order of Rb, Ra, Kses, and this is returned to A.
   Upon receiving this, A decrypts the received data with the key Kab. The decryption method of the received data is the same as the decryption processing for B, so details will be omitted here. Of the Rb, Ra, and Kses thus obtained, verification is made regarding whether or not Rb and Ra match that transmitted by A. In the event that this verification passes, A authenticates B to be valid. Following mutual authentication, the session key Kses is used as a shared key for secret communication following authentication.
   Now, in the event that something not authorized or not matching is found at the time of verifying the received data, the mutual authentication is taken to have failed and the processing is cancelled.
   Next, a mutual authentication method using 160-bit length elliptic curve encryption, which is the public key encryption method, will be described with reference to Fig. 13. Though ECC is used as the public key encryption method in Fig. 13, any similar public key encryption method is suitable, as described above. Also, the key size does not have to be 160 bits. In Fig. 13, first, B generates a 64-bit random number Rb, and transmits this to A. Upon receiving this, A generates a new 64-bit random number Ra and a random number Ak which is smaller than the characteristic p. Then, a point Av = Ak × G wherein the base point G is multiplied by Ak is obtained, an electronic signature A.Sig is generated with regard to Ra, Rb, Av (X-coordinate and Y-coordinate), and is returned to B along with the public key certificate of A. Now, Ra and Rb are 64 bits each, and the X-coordinate and Y-coordinate of Av are each 160 bits, so an electronic signature is generated with regard to a total of 448 bits.
   In the event of using a public key certificate, the public key of the public key certificate issuer authority (CA) 410 which the user him/herself holds is used, the electronic signature of the public key certificate is verified, the public key is extracted from the public key certificate following success of verification of electronic signature, and the public key is used. Accordingly, all users using the public key certificate need to hold a shared public key certificate issuer authority (CA) public key. The method for verifying the electronic signature has been described with reference to Fig. 11, so the details thereof will be omitted.
   B, who has received the public key certificate of A, Ra, Rb, Av, and electronic signature A.Sig, verifies whether or not the Rb which A has sent matches that generated by B. In the event that it matches, the electronic signature within the public key certificate of A is verified with the public key of the certifying authority, and the public key of A is extracted. Then, the electronic signature A.Sig is verified using the public key of A that has been extracted. Following success of verifying the electronic signature, B authenticates A as being valid.
   Next, B generates a random number Bk smaller than the characteristic p. Then, a point Bv = Bk × G wherein the base point G is multiplied by Bk is obtained, an electronic signature B.Sig is generated with regard to Rb, Ra, Bv (X-coordinate and Y-coordinate), and is returned to A along with the public key certificate of B.
   A, who has received the public key certificate of B, Rb, Ra, Bv, and electronic signature B.Sig, verifies whether or not the Ra which B has sent matches that generated by A. In the event that it matches, the electronic signature within the public key certificate of B is verified with the public key of the certifying authority, and the public key of B is extracted. Then, the electronic signature B.Sig is verified using the public key of B that has been extracted.
   Following success of verifying the electronic signature, A authenticates B as being valid.
   In the event that verification of both has succeeded, B calculates Bk × Av (wherein Bk is a random number, but Av is a point of the elliptic curve, so scalar multiplications of points on the elliptic curve is necessary), A calculates Ak × Bv, and the lower-order 64 bits of that X-coordinate of these points is subsequently used in communication as a session key (in the event that shared key encryption with a 64-bit key length used for the shared key encryption). Of course, the session key may be generated from the Y-coordinate, and may not be the lower-order 64 bits. Also, in the secret communication following mutual authentication, the transmitted data may be affixed with an electronic signature, in addition to being encrypted with the session key.
   In the event that something unauthorized and not matching is found at the time of verifying the electronic signature or verifying the received data, the mutual authentication is taken to have failed, and the processing is cancelled.
   In such mutual authentication processing, transmission data is encrypted using the generated session key, and data communication is mutually executed.

### (2) Generate transaction ID and purchase request data, and

### (3) Transmit purchase request data

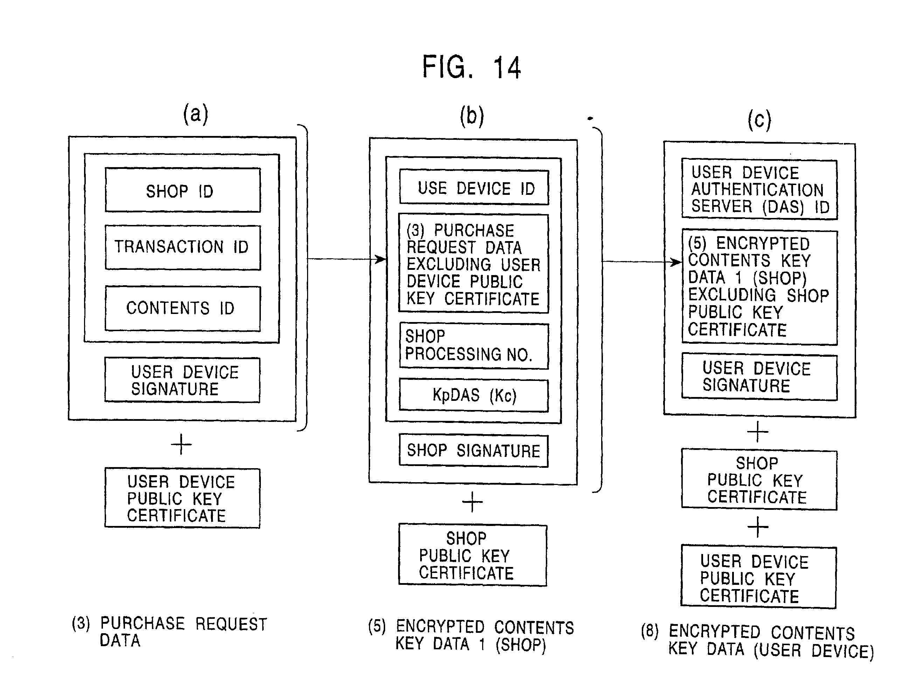

Upon success of mutual authentication between the above-described shop server 100 and user device 200, the user device 200 generates contents purchase request data. Fig. 14(a) illustrates the configuration of purchase request data. The purchase request data has the data of: a shop ID which is an identifier of the shop server 100 and which is the destination of the request of contents purchasing; a transaction ID generated based on a random number, for example by encryption processing means of the user device 200, as an identifier for contents transactions; and further a contents ID serving as an identifier of the contents which the user device desires to purchase, and electronic signature of the user device is affixed to this data. Further, the public key certificate of the user device is attached to the purchase request data, and is sent to the shop server 100. Now, in the event that the public key certificate has already been sent to the shop side at the time of the above-described to mutual authentication processing, or in processing prior to that, there is not necessarily the need to send it again.

### (4) Verify received data

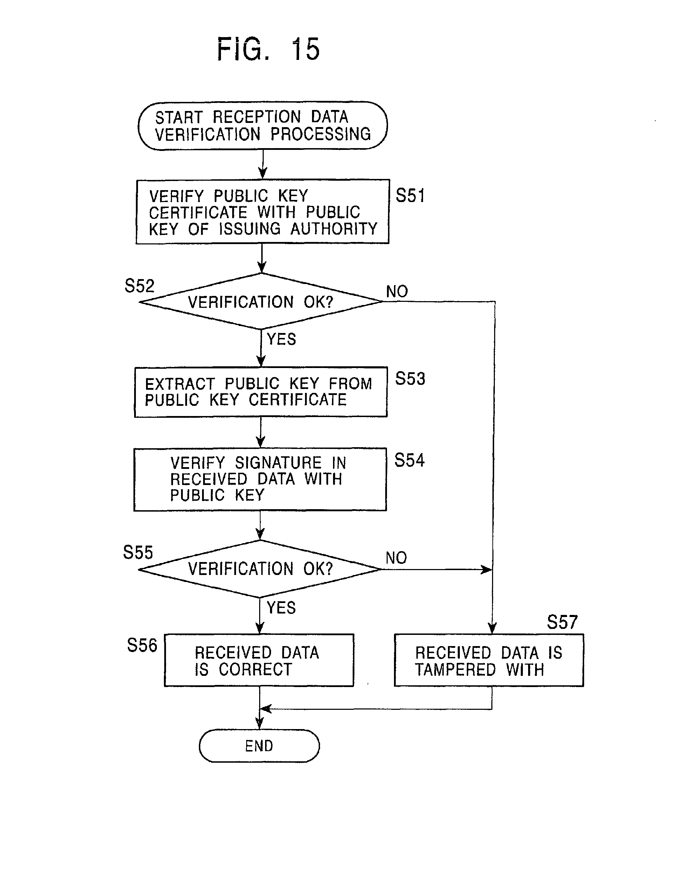

Upon receiving the purchase request data shown in Fig. 14(a) from the user device 200, the shop server 100 executes the verification processing of the received data. The details of the verification processing will be described with reference to Fig. 15. First, the shop server 100 performs verification of the public key certificate Cert_DEV of the user device within the received data (S51). As described above, this is executed as processing for verifying this signature of the issuer authority (CA) contained in the public key certificate (see Fig. 1), and is executed applying the public key of the issuer authority KpCA.

In the event that verification is OK, i.e., that there is no tampering with the public key certificate (Yes in S52), the flow proceeds to S53. In the event that the verification is not established (No in S52), judgement is made in S57 that the public key certificate has been tampered with, and processing using the public key certificate is cancelled. In S53, the public key KpDEV of the user device is extracted from the public key certificate, and in step S54, verification processing of the user device signature of the purchase request data is executed using the public key KpDEV (see Fig. 11). Then in the event that verification is OK, i.e., judgment is made that there is no tampering with the purchase request data (yes in S55), the flow proceeds to S56, and judgment is made that the received data is authorized contents purchase request data. In the event that the verification is not established (No in S55), judgement is made in S57 that there is tampering with the purchase request data, and processing with regard to that purchase request data is cancelled.

### (5) Transmit encrypted contents and encrypted contents key data 1 (shop)

Upon verification of the purchase request data being completed at the shop server 100, and judgment being made that this is an authorized contents purchase request with no data tampering, the shop server 100 transmits encrypted contents and encrypted contents key data 1 (shop) to the user device. Both of these are data stored in the contents database 110, and are encrypted contents: Kc (content) wherein contents are encrypted with a contents key, and encrypted contents key data: KpDAS(Kc) wherein the contents key: Kc is encrypted with a public key of the user device authentication server (DAS) 300.

Fig. 14(b) illustrates the configuration of the encrypted contents key data 1 (shop). The encrypted contents key data 1 (shop) has a user device ID which is the identifier of the user device 200 which is the requester of the contents purchase, purchase request data (the data in Fig. 14(a) excluding the user device public key certificate), the shop processing No. generated by the shop server 100 accompanying the contents transaction, and the encrypted contents key data: KpDAS(Kc), with the electronic signature of the shop server 100 affixed to this data. Further, the public key certificate of the shop server 100 is attached to the encrypted contents key data 1 (shop), and is sent to the user device 200. Now, in the event that the shop server public key certificate has already been sent to the user device side at the time of the above-described mutual authentication processing, or in processing prior to that, there is not necessarily the need to send it again.

### (6) Verify received data

Upon receiving the encrypted contents: Kc (content) and the encrypted contents key data 1 (shop) shown in Fig. 14(b) from the shop server 100, the user device 200 executes verification processing of the encrypted contents key data 1 (shop). This verification processing is processing similar to the processing flow in the above-described Fig. 15, with the user device 200 executing verification of the public key certificate of the shop server received from the shop server 100 using the public key KpCA of the issuer authority (CA) first, and then next executing verification of the shop signature of the encrypted contents key data 1 (shop) shown in Fig. 14(b) using the public key KpSHOP of the shop server that has been extracted from the public key certificate.

### (7) Mutual authentication

Upon the user device 200 receiving the encrypted contents: Kc (content) and the encrypted contents key data 1 (shop) from the shop server 100 and ending verification of the encrypted contents key data 1 (shop), the user device 200 accesses the user device authentication server 300, and executes mutual authentication processing between the user device 200 and the user device authentication server 300. This processing is executed by procedures which are the same as the mutual authentication processing between the shop server 100 and user device 200, described above.

### (8) Transmit encrypted contents key data (user device) and encrypted contents key switching request

Upon establishment of mutual authentication between the user device 200 and user device authentication server 300, the user device 200 transmits encrypted contents key data (user device) containing the encrypted contents key KpDAS(Kc) received from the shop server 100 earlier, and an encrypted contents key switching request, to the user device authentication server 300.

Fig. 14(c) illustrates the configuration of the encrypted contents key data (user device). The encrypted contents key data (user device) has a user device authentication server ID which is the identifier of the user device authentication server 300 which is the destination of the encrypted contents key switching request, and the encrypted contents key data received from the shop server 100 (the data in Fig. 14(b) excluding the shop public key certificate), with the electronic signature of the user device 200 affixed to this data. Further, the public key certificate of the shop server 100 and the public key certificate of the user device 200 are attached to the encrypted contents key data (user device), and is sent to the user device authentication server 300. Now, in the event that the user device authentication server 300 already has the user device public key certificate and the shop server public key certificate, there is not necessarily the need to send it again.

### (9) Verify received data

Upon receiving the encrypted contents key data (user device) and the encrypted contents key switching request shown in Fig. 14(c) from the user device 200, the user device authentication server 300 executes verification processing of the encrypted contents key switching request. This verification processing is processing the same as the processing flow in the above-described Fig. 15, with the user device authentication server 300 first executing verification of the public key certificate of the user device received from the user device 200 using the public key KpCA of the issuer authority (CA), and then executing verification of the electronic signature of the purchase request data shown in Fig. 14(a) and the encrypted contents key data (user device) shown in Fig. 14(c) using the public key KpDEV of the user device that has been extracted from the public key certificate. Further, verification of the public key certificate of the shop server is executed using the public key KpCA of the issuer authority (CA), and next verification of the shop signature of the (5) encrypted contents key data 1 contained in the encrypted contents key data (user device) shown in Fig. 14(c) using the public key KpSHOP of the shop server extracted from the public key certificate.

### (10) Encrypted contents key switching processing

At the user device authentication server 300, upon verification of the encrypted contents key data (user device) and encrypted contents key switching request received from the user device 200 being completed, and judgment being made that this is an authorized key switching request, the user device authentication server 300 decrypts the encrypted contents key contained in the encrypted contents key data (user device), i.e., the data: KpDAS(Kc) wherein the contents key: Kc is encrypted with the public key KpDAS of the user device authentication server (DAS) 300, with a secret key KsDAS of the user device authentication server 300, to obtain the contents key Kc, and further generates an encrypted contents key: KpDEV(Kc) wherein the contents key Kc is encrypted with the public key: KpDEV of the user device. That is to say, key switching processing is executed in the order of KpDAS(Kc) → Kc → KpDEV(Kc).

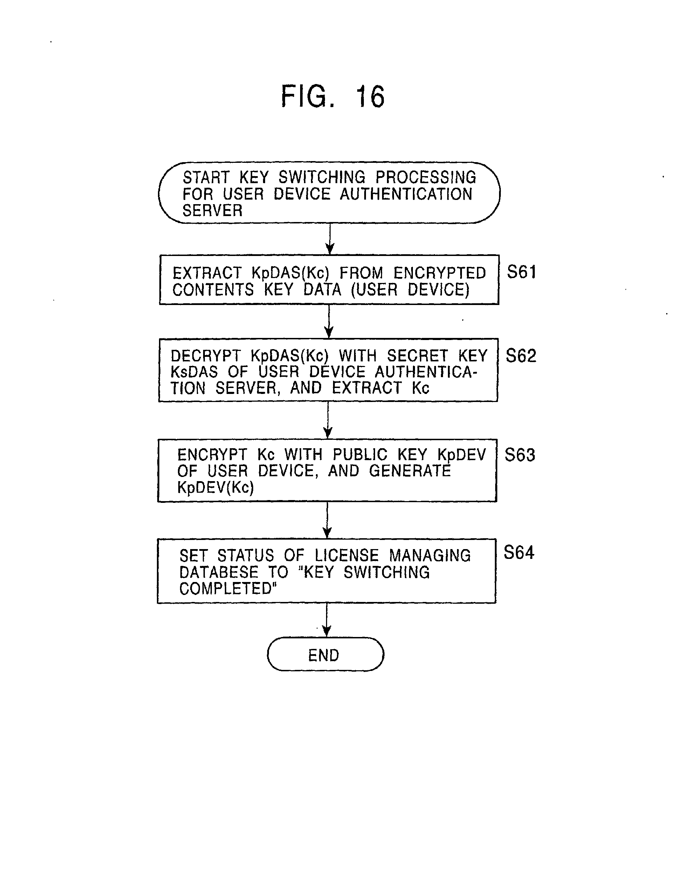

Fig. 16 shows a flowchart for the processing of encrypted contents key switching executed at the user device authentication server 300. First, the user device authentication server 300 extracts the contents key data: KpDAS(Kc) encrypted with the public key KpDAS of the user device authentication server (DAS) 300, from the encrypted contents key data (user device) received from the user device 200 (S61). Next, this is decrypted with the secret key KsDAS of the user device authentication server 300, and the contents key Kc is obtained (S62). Next, the contents key Kc obtained by decryption is re-encrypted with the public key: KpDEV of the user device, generating the encrypted contents key: KpDEV(Kc) (S63). Upon this processing ending, the status of a license management database (see Fig. 6) is set to "key switching completed".

### (11) Mutual authentication

Upon the above-described key switching processing of the encrypted contents key having been completed at the user device authentication server 300, the user device authentication server 300 accesses the shop server 100, and mutual authentication processing is executed between the user device authentication server 300 and the shop server 100. This processing is executed by procedures the same as the mutual authentication processing between the shop server 100 and the user device 200, described above.

### (12) Transmit encrypted contents data

Upon the mutual authentication being established between the user device authentication server 300 and the shop server 100, the user device authentication server 300 transmits encrypted contents key data (DAS) to the shop server 100.

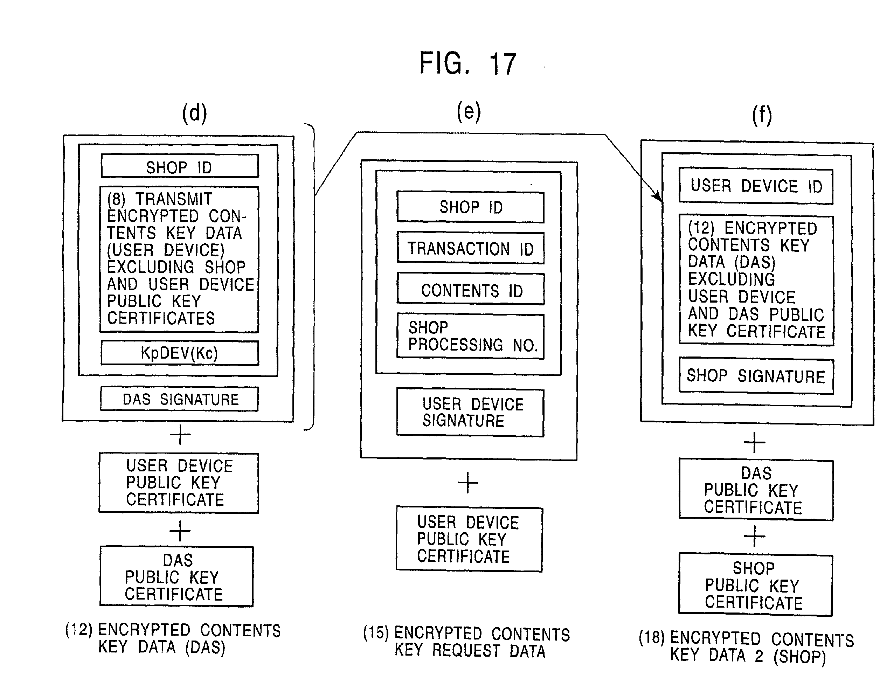

The configuration of the encrypted contents key data (DAS) is shown in Fig. 17(d). The encrypted contents key data (DAS) has a shop ID which is an identifier of the shop server 100 which is the destination of the contents purchase request, the encrypted contents key data (user device) (the data excluding the shop and the user device public key certificate shown in Fig. 14(c)), and further the encrypted contents key data: KpDEV(Kc) generated by the user device authentication server 300 in the above-described key switching processing, with the electronic signature of the user device authentication server 300 being affixed to the data. Further, the public key certificates of the user device authentication server 300 and the user device 200 are attached to the encrypted contents key data (DAS), and sent to the shop server 100. Note that in the event that the shop server already holds these public key certificates, sending again is not necessarily needed.

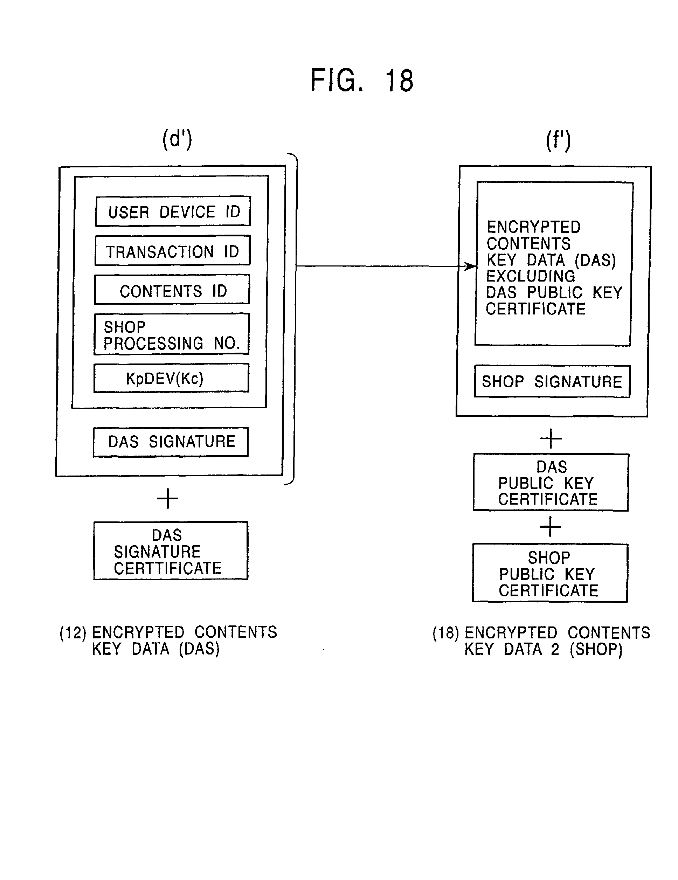

Also, in the event that the user device authentication server 300 is an entity acknowledged to be a reliable third party, an arrangement may be used wherein the encrypted contents key data (DAS) is not of a configuration containing the (8) encrypted contents key data (user device) generated by the user device without change, as shown in Fig. 17(d), but rather wherein the user device authentication server 300 extracts the user device ID, the transaction ID, contents ID, shop processing No., and contents key KpDEV(Kc) encrypted with the public key of the user device, affixes the signature to these, and uses this as encrypted contents key data (DAS), as shown in Fig. 18(d'). In this case, verification of the (8) encrypted contents key data (user device) is unnecessary, so the public key certificate of the user device authentication server 300 is the only public key certificate that needs to be attached.

### (13) Verify received data

The shop server 100 which has received the encrypted contents key data (DAS) (Fig. 17(d)) from the user device authentication server 300 executes verification processing of encrypted contents key data (DAS). This verification processing is the same processing as the flow of the processing shown in Fig. 15 described above, with a shop server 100 first executing verification of the public key certificate of the user device authentication server received from the user device authentication server 300 with the public key KpCA of the issuer authority (CA), and then using the public key KpDAS of the user device authentication server 300 extracted from the public key certificate to execute verification of electronic signature of the encrypted contents key data (DAS) shown in Fig. 17(d). Further, verification of the public key certificate of the user device is executed using the public key KpCA of the issuer authority (CA), and next, verification is executed with regard to the user device signature of the (8) encrypted contents key data (user device) contained in the encrypted contents key data (DAS) shown in Fig. 17(d), using the public key KpDEV of the user device extracted from the public key certificate. Further, an arrangement may be made wherein the encrypted contents data (user device) is verified using own public key KpSHOP.

Now, in the event that the shop server 100 receives the simplified encrypted contents key data (DAS) described above with reference to Fig. 18(d'), the shop server 100 only performs processing of executing verification of the public key certificate of the user device authentication server using the public key KpCA of the issuer authority (CA), and then executing verification of the electronic signature of the encrypted contents key data (DAS) shown in Fig. 18(d') using the public key KpDAS of the user device authentication server 300 extracted from the public key certificate.

### (14) Mutual authentication, and

### (15) Transmit encrypted contents key request data

Next, the user device 200 transmits encrypted contents key request data to the shop server 100. Note that at this time, in the event that a request is to be executed with a different session from the previous request, mutual authentication is executed again, and encrypted contents key request data is transmitted from the user device 200 to the shop server 100, under the conditions that mutual authentication is established.

The configuration of the encrypted contents key request data is shown in Fig. 17(e). The encrypted contents key request data has the shop ID which is the identifier of the shop server 100 which is the destination of the contents purchase request, the transaction ID which is the identifier of contents transaction generated earlier by the user device 200, and further a contents ID which is the identifier of contents which the user device desires to purchase, and further the shop processing No. contained within the data which the shop has generated earlier and transmitted to the user device 200 as encrypted contents key data 1 (shop) (see Fig. 14(b)), with the electronic signature of the user device being affixed to this data. Further, the public key certificate of the user device is attached to the encrypted contents key request data, and sent to the shop server 100. Note that in the event that the public key certificate is already held at the shop side, it is not necessarily needed to send this again.

### (16) Verification processing, and

### (17) Billing processing

Upon receiving the encrypted contents key request data from the user device, the shop server 100 executes verification processing of the encrypted contents key request data. This is the same processing as that described with reference to Fig. 15. Upon the data verification finishing, the shop server 100 executes billing processing relating to the contents transaction. The billing processing is processing for receiving contents charges from a transaction account of the user. The received contents charges are distributed among various parties involved, such as the copyright holder of the contents, the shop, the user device authentication server administrator, etc.

Up to this billing processing, the key switching processing process of the encrypted contents keys by the user device authentication server 300 is mandatory, so the shop server 100 cannot execute billing processing only by processing with the user device. Also, the user device 200 cannot decrypt the encrypted contents key, and accordingly can not use the contents. The user device authentication server records contents transaction contents with all key switching processing that has been executed in the user device authentication server license management database described with reference to Fig. 6, and can know all contents transactions which are object of billing. Accordingly, contents transaction performed by the shop side alone become impossible, thereby preventing unauthorized contents sales.

### (18) Transmit encrypted contents key data 2 (shop)

Upon the billing processing at the shop server 100 ending, the shop-server 100 transmits encrypted contents key data 2 (shop) to the user device 200.

Fig. 17(f) illustrates the configuration of the encrypted contents key data 2 (shop). The encrypted contents key data 2 (shop) has the user device ID which is the identifier of the user device 200 which is the requester of the encrypted contents key request, and the encrypted contents key data (DAS) received from the user device authentication server 300 (data excluding the public key certificates of the user device and user device authentication server shown in Fig. 17(d)), with the electronic signature of the shop server 100 having been affixed to this data. Further, the public key certificate of the shop server 100 and the public key certificate of the user device authentication server 300 are attached to the encrypted contents key data 2 (shop), and sent to the user device 200. In the event that the user device 200 already holds the public key certificate of the user device authentication server and the public key certificate of the shop server, it is not necessarily needed to send this again.

Now, in the event that the user device authentication server 300 is an entity acknowledged to be a reliable third party, and in the event that the encrypted contents key data (DAS) which the shop server 100 receives from the user device authentication server 300, is the simplified encrypted contents key data (DAS) described earlier with reference to Fig. 18(d'), the shop server 100 sends the encrypted contents key data 2 (shop) shown in Fig. 18(f') to the user device. That is, the shop server attaches the public key certificate of the shop server 100 and the public key certificate of the user device authentication server 300 to the data wherein the signature of the shop server has been affixed to the simplified encrypted contents key data (DAS) shown in Fig. 18(d'), and sends this to the user device 200.

### (19) Verification processing

Upon receiving the encrypted contents key data 2 (shop) from the shop server 100, the user device 200 executes verification processing of the encrypted contents key data 2 (shop). This verification processing is the same as the processing in the processing flow described earlier with reference to Fig. 15, with the user device 200 first executing verification of the public key certificate of the shop server received from the shop server 100, using the public key KpCA of the issuer authority (CA), then executes verification of the electronic signature of the encrypted contents key data 2 (shop) shown in Fig. 17(f), using the public key KpSHOP of the shop server 100 extracted from the public key certificate. Further, verification of the public key certificate of the user device authentication server 300 is executed using the public key KpCA of the issuer authority (CA), and verification is executed on the signature of the (12) encrypted contents key data (DAS) contained in the encrypted contents key data 2 (shop) shown in Fig. 17(f), using the public key KpDAS of the user device authentication server 300 extracted from the public key certificate. Further, an arrangement may be made wherein the encrypted contents data (user device) is verified using own public key KpDEV.

### (20) Saving processing

The user device 200 which has verified the encrypted contents key data 2 (shop) received from the shop server 100 decrypts the encrypted contents key: KpDEV(Kc) encrypted with its own public key KpDEV contained in the encrypted contents key data 2 (shop), using its own secret key KsDEV, further generates the encrypted contents key: Ksto(Kc) by encryption using the storing key Ksto of the user device, and stores this in the storing means of the user device 200. At the time of using contents, the encrypted contents key: Ksto(Kc) is decrypted using the stored key Ksto and the contents key Kc is extracted, and the extracted contents key Kc is used to execute decryption processing of the encrypted contents Kc (Content), thereby reproducing and executing the contents (Content).

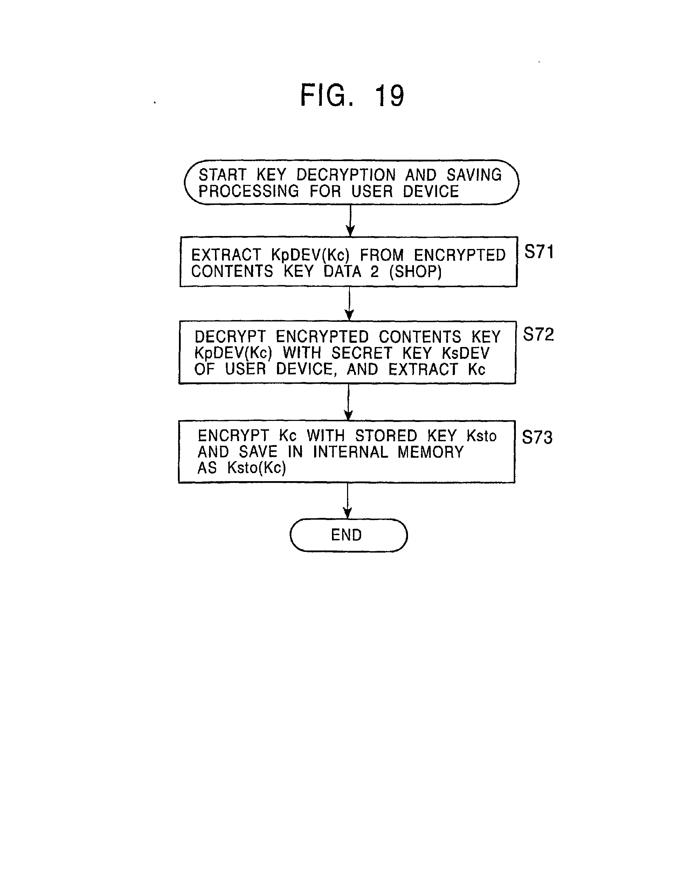

Fig. 19 illustrates the processing flow for obtaining and saving the contents key Kc with the user device 200. First, the encrypted contents key: KpDEV(Kc) encrypted with own public key KpDEV is extracted, by the user device 200, from the encrypted contents key data 2 (shop) received from the shop server 100(S71), the extracted encrypted contents key: KpDEV(Kc) is decrypted using own secret key KsDEV, and the contents key Kc is extracted (S72). Further, encryption processing of the contents key Kc is executed using the stored key Ksto of the user device to generate the encrypted contents key: Ksto(Kc), which is stored in the storing means (internal memory) of the user device 200 (S73).

Due to the above processing, the user device can obtain the encrypted contents Kc (Content) and the contents key Kc of the encrypted contents, so the contents can be used. As can clearly be understood from the above description, a key switching processing process for encrypted contents keys at the user device authentication server 300 is mandatory before the contents can be made usable at the user device 200. Accordingly, the shop server 100 is not capable of selling contents to the user device 200 secretly from the user device authentication server 300 and making the contents usable at the user device. The user device authentication server records all contents transaction contents wherein key switching processing has been executed, in the user device authentication server license management database described with reference to Fig. 6, and accordingly can manage transactions of all shops, know transactions of contents billed, and accurately distribute contents charges received in the billing processing of the shops to the various parties involved, such as the copyright holders of the contents, shops, user device authentication server administrator, and so forth.

### (Transition status in the devices)

In this series of processing relating to contents transactions in each of the shop server 100, user device 200, user authentication server (DAS) 300, shown in Fig. 1, the next processing is determined according to the status indicating the processing state. The status is managed for each of the contents transactions, in the purchase management database of the shop server shown in Fig. 3, the license management database of the user device authentication server shown in Fig. 6, and the purchase management database of the user device shown in Fig. 8, for example.

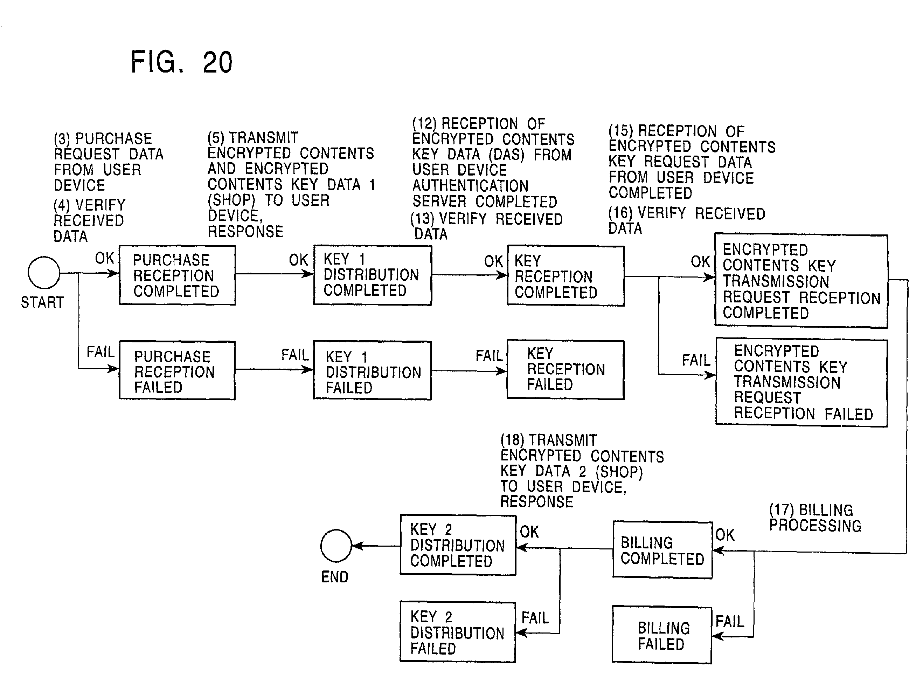

First, the status transition of the shop server 100 will be described with reference to Fig. 20. Processing starts for the shop server by receiving contents purchase request data from the user device 200 (corresponding to a process (3) in Fig. 1). The shop server 100 verifies the received data from the user device 200, and in the event that the verification succeeds, sets the status to "purchase reception completed", while in the event that judgement is not made from the data verification that the purchase request is valid, either the processing is cancelled, or similar processing, purchasing reception processing in this case, is repeated a predetermined number of times and then cancelled, and the status is set to "purchase reception failed". The flow proceeds to the next step only in the event that the status is "purchase reception completed".

Upon the status making transition to "purchase reception completed", next, the shop server 100 transmits the encrypted contents key data 1 (Shop) to the user device 200 (corresponding to process (5) in Fig. 1), and receives a reception response (response) from the user device, and sets the status to "key 1 distribution completed". In the event that transmission of the key data 1 was not successful, either the processing is cancelled, or similar processing, transmission processing of the key data 1 in this case, is repeated a predetermined number of times, following which the processing is cancelled, and the status is set to "key 1 distribution failed". The flow proceeds to the next step only in the event that the status is "key 1 distribution completed".

In the event that the status makes transition to "key 1 distribution completed", next, the shop server 100 receives the encrypted contents key data (DAS) from the user device authentication server 300 (corresponding to process (12) in Fig. 1), and executes data verification. In the event that the verification is successful, the status is set to "key reception completed", while in the event that judgement was not made by the data verification that the encrypted contents key data (DAS) is valid, either the process is canceled, or the same processing, key reception processing in this case, is repeated a predetermined number of times, following which the processing is cancelled, and the status is set to "key reception failed". The flow proceeds to the next step only in the event that the status is "key reception step completed".

In the event that the status makes transition to "key reception completed", next, the shop server 100 receives encrypted contents key transmission request data from the user device 200 (corresponding to process (15) in Fig. 1), and data verification is executed. In the event that verification is successful, the status is set to "encrypted contents key transmission request reception completed", and in the event that judgement is not made from the data verification that the key transmission request data is valid, either the processing is cancelled, or similar processing, encrypted contents key transmission request data reception processing in this case, is repeated a predetermined number of times, following which the processing is canceled, and the status is set to "encrypted contents key transmission request reception failed). The flow proceeds to the next step only in the event that the status is "encrypted contents key transmission request reception completed".

In the event that status makes transition to "encrypted contents key transmission request reception completed", next, the shop server 100 executes billing processing (corresponding to process (17) in Fig. 1). Upon the billing processing having been completed, the status is set to "billing completed", and in the event that the billing processing does not finish, e.g., in the event that the contents charges could not be withdrawn from the specified account of the user device, the subsequent processing is not executed, and either the processing is cancelled, or similar processing, billing processing in this case, is repeated a predetermined number of times, following which the processing is cancelled, and the status is set to "billing failed". The flow proceeds to the next step only in the event that the status is "billing completed".

In the event that the status makes transition to "billing completed", next, the shops server 100 executes transmission processing of the encrypted contents key data 2 (shop) to the user device (corresponding to process (18) in Fig. 1). In the event that the encrypted contents key data 2 (shop) transmission processing is completed, and a reception response is received from the user device, the status is set to "key 2 distribution completed", while in the event that the key data 2 (shop) transmission processing is not completed, the status is set to "key 2 distribution failed". Only in the event that the status is "key 2 distribution completed", does the flow proceed to the next step, which is ending of processing here, or in the event that the status is "key 2 distribution failed", the subsequent processing is not executed, and either the processing is canceled, or the same processing, key data 2 (shop) transmission processing in this case, is repeated a predetermined number of times. The shop server 100 executes such state transition for each contents transaction.

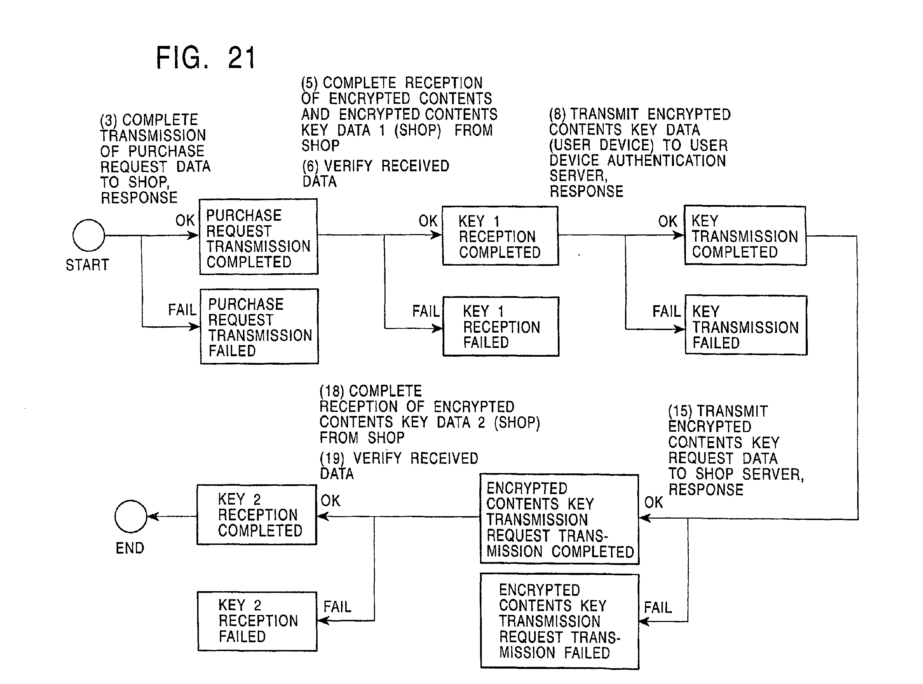

Next, transition of status of the user device 200 will be described with reference to Fig. 21. First, the user device 200 starts processing by transmitting contents purchase request data to the shop server 100 (corresponding to process (3) in Fig. 1). Upon the user device 200 receiving a reception completed response to the contents purchase request data to the shop server 100, the status is set to (purchase request transmission completed", and in the event that a response for reception completed from the shop 100 cannot be received, either the processing is cancelled, or similar processing, purchase request transmission processing in this case, is repeated a predetermined number of times, following which the processing is cancelled, and the status is set to "purchase request transmission failed". Only in the event that the status is "purchase request transmission completed", does the flow proceed to the next step.

In the event that the status makes transition to "purchase request transmission completed", next, the user device 200 receives encrypted contents key data 1 (shop) from the shop server 100 (corresponding to process (5) in Fig. 1), and verifies the received data. In the event that verification of the encrypted contents key data from the shop server 100 is successful, the status is set to "key 1 reception completed", and in the event that judgement is not made from the data verification that the encrypted contents key data is valid, either the processing is canceled, or the same processing, key 1 reception processing in this case, is repeated a predetermined number of times, following which the processing is canceled, and the status is set to "key 1 reception failed". Only in the event that the status is "key 1 reception completed", does the flow proceed to the next step.

In the event that the status makes transition to "key 1 reception completed", next, the user device 200 transmits encrypted contents key data (user device) to the user device authentication server 300 (corresponding to process (8) in Fig. 1), and receives a data reception response. In the event that the data reception response is received, the status is set to "key transmission completed", and in the event that a data reception response is not received, either the processing is cancelled, or similar processing, key transmission processing in this case, is repeated for a predetermined number of times, following which the processing is canceled, and the status is set to "key transmission failed". Only in the event that the status is "key transmission completed", does the flow proceed to the next step.

In the event that the status makes transition to "key transmission completed", next, the user device 200 transmits an encrypted contents key transmission request to the shop server 100 (corresponding to process (15) in Fig. 1), and receives a data reception response. In the event that the data reception response is received, the status is set to "encrypted contents key transmission request transmission completed", while in the event that the data reception response is not received, either the processing is canceled, or the same processing, encrypted contents key transmission requests transmission processing in this case, is repeated a predetermined number of times, following which the processing is canceled, and the status is set to "encrypted contents key transmission requests transmission failed". Only in the event that the status is "encrypted contents key transmission request transmission completed", does the flow proceed to the next step.

In the event that the status makes transition to "encrypted contents key transmission requests transmission completed", next, the user device 200 receives encrypted contents key data 2 (shop) from the shop server 100 (corresponding to process (18) in Fig. 1), and data verification is performed. In the event that the data verification is successful, the status is set to "key 2 reception completed", while in the event that data verification was not successful or the like, either the processing is canceled, or the same processing, key data 2 (shop) reception processing in this case, is repeated a predetermined number of times, following which the processing is canceled, and the status is set to "key 2 reception failed". In the event that the status is "key 2 reception completed", the processing ends. The user device 200 executes such status transition for each contents transaction.

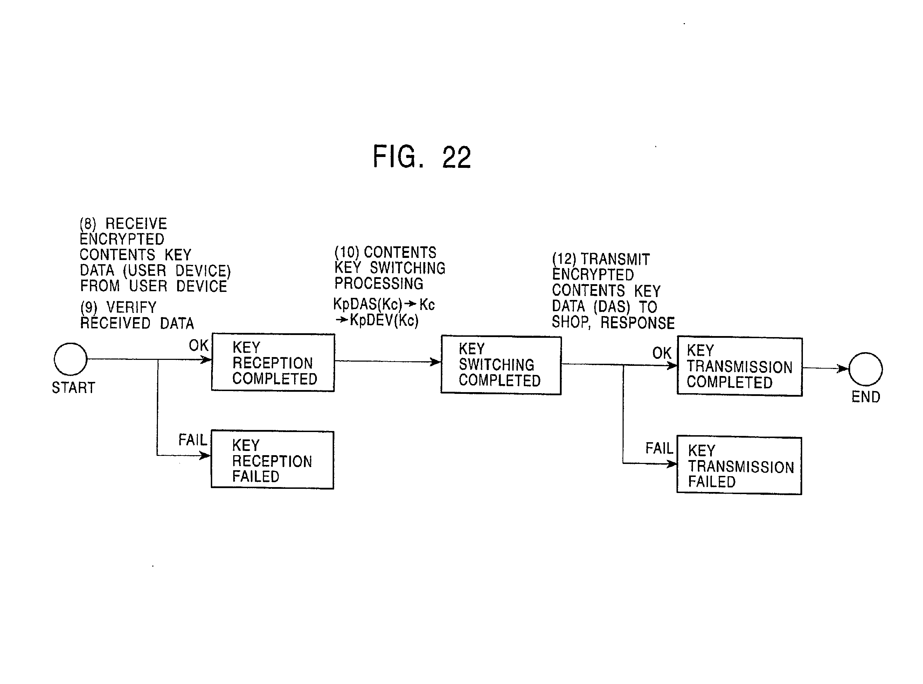

Next, status transition at the user device authentication server 300 will be described with reference to Fig. 22. The user device authentication server 300 starts processing by receiving encrypted contents key data (user device) from the user device (corresponding to process (8) in Fig. 1). The user device authentication server 300 verifies the received data from the user device 200, and in the event that the verification is successful, sets the status to "key reception completed", and in the event that judgement is not made from the data verification that the data is authorized or the like, either the processing is canceled, or the same processing, reception processing of the encrypted contents key data (user device) in this case, is repeated a predetermined number of times, following which the processing is canceled, and the status is set to "key reception failed". Only in the event that the status is "key reception completed", does the flow proceed to the next step.

Upon the status making transition to "key reception completed", next, the user device authentication server 300 executes contents key switching processing (corresponding to process (10) in Fig. 1), and in the event that the key switching processing is completed, the status is set to "key switching completed". There is no assumption of a case wherein key switching would fail, so the only status transition that exists here is "key switching completed".

In the event that the status makes transition to "key switching completed", next, the user device authentication server 300 transmits encrypted contents key data (DAS) to shop server 100 (corresponding to process (12) in Fig. 1), and receives a data reception response from the shop server 100. In the event that the data reception response is received, the status is set to "key transmission completed", while in the event that there is no reception of the data reception response, either the processing is canceled, or a similar processing, transmission processing of the encrypted contents key data (DAS) in this case, is repeated a predetermined number of times, following which the processing is canceled, and the status is set to "key transmission failed". In the event that the status is "key transmission completed", the processing ends. The user device authentication server 300 executes such state transition for each contents transaction.

### (Flow of contents purchase processing)

Next, the processing of data transmission/reception executed between the shop server 100, user device 200, and user device authentication server 300, accompanying a contents purchase request made from a user device to shop server, will be described following a flow. The processing flow is divided into the following A, B, C, and D, and described accordingly.

### A. Processing between the shop server and user device (the processing (1) through (6) shown in Fig. 1)

Mutual authentication between the user device 200 and shop server 100, through the contents purchase request from the user device 200 to the shop server 100, through transmission of the key 1 (shop) from the shop server 100 to the user device 200.

### B. Processing between the user device authentication server and user device (the processing (7) through (9) in Fig. 1)

Mutual authentication between the user device 200 and user device authentication server 300, through transmission of the encrypted contents key data, through received data verification at the user device authentication server 300.

### C. Processing between the user device authentication server and shop server (the processing (11) through (13) in Fig. 1)

Mutual authentication between the user device authentication server 300 and the shop server 100, through transmission of encrypted contents key data (DAS), through verification of the received data at the shop server.

### D. Processing between the shop server and user device (the processing (14) through (19) in Fig. 1)

Mutual authentication between the user device 200 and shop server 100, through transmission of encrypted contents key request data from the user device 200 to the shop server 100, through transmission of the key 2 (shop) from the shop server 100 to the user device 200, through verification of received data at the user device 200.

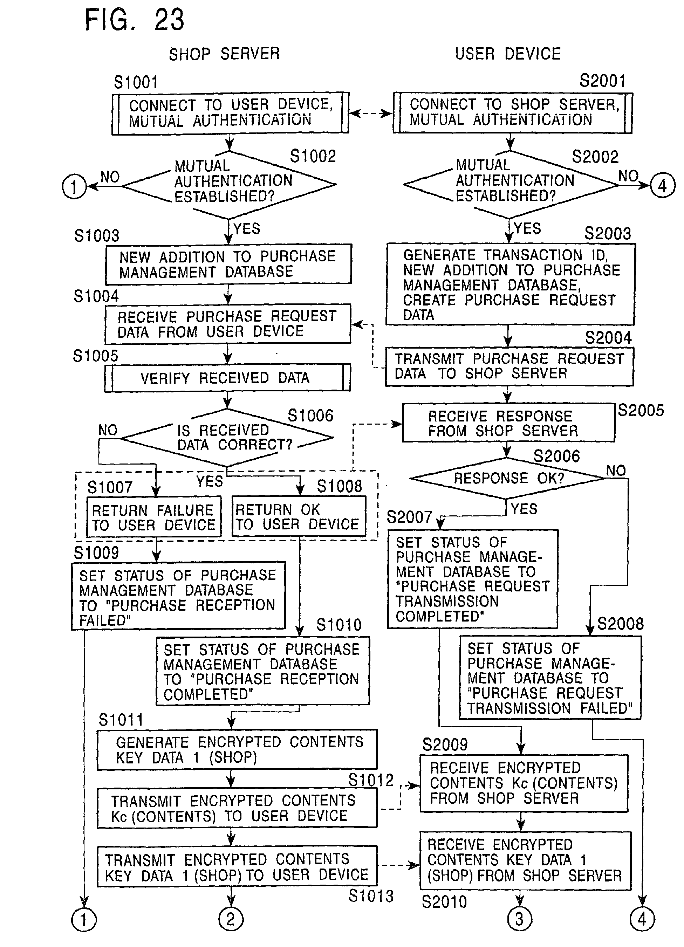

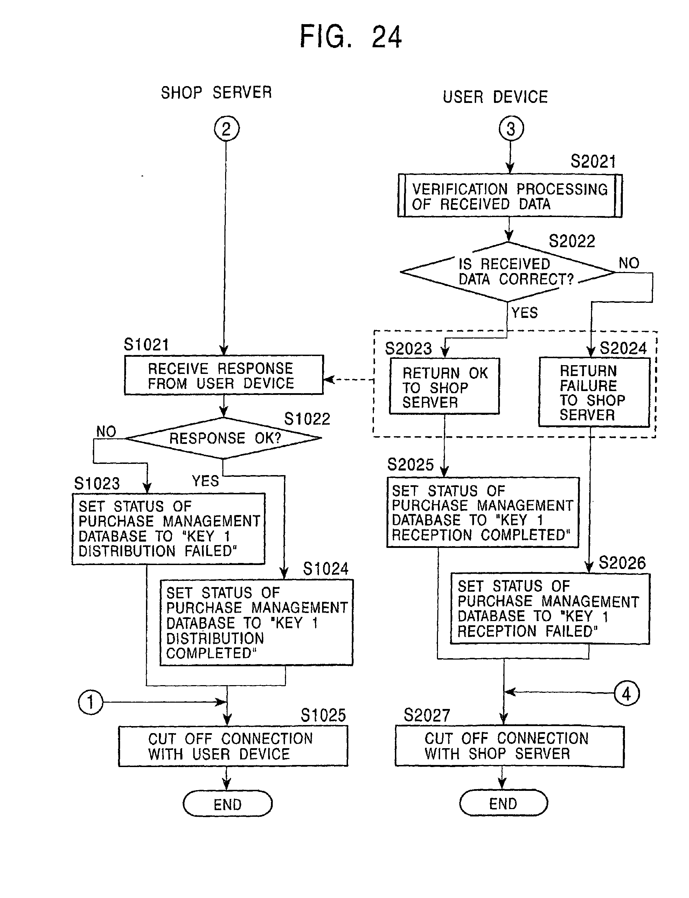

First, description will be made with reference to Fig. 23 and Fig. 24, regarding A. Processing between the shop server and user device (the processing (1) through (6) shown in Fig. 1).

In Fig. 23 and Fig. 24, the left side illustrates processing at the shop server, and the right side, processing at the user device. Note that in all the flows, processing at the shop server is indicated by processing step Nos. S10xx, processing at the user device is indicated by processing step Nos. S20xx, and processing at the user device authentication server is indicated by processing step Nos. S30xx.

First, as shown in Fig. 23, mutual authentication is executed between the shop server and the user device (S1001, S2001). The mutual authentication processing is executed as the processing described with reference to Fig. 12 or Fig. 13. Data communication is executed by encrypting the transmitted data as necessary using the session key generated in the mutual authentication processing. Upon mutual authentication being established, the shop server adds a new shop processing No. to the purchase management database (see Fig. 3), as a new processing entry (S1003).

On the other hand, upon mutual authentication being established, the user device generates a transaction ID to be applied to this contents transaction, based on a random number, for example, and adds the new transaction ID to the purchase database (see Fig. 8), as a new entry (S2003). Further, the user device executes transmission of contents purchase request data to the shop server (S2004), i.e., transmission of the (3) purchase request data shown in Fig. 14(a).

The shop server receives the contents purchase request data from the user device (S1004), and executes verification of the received data (S1005). The data verification is processing following the processing flow in Fig. 11 described earlier. In the event that the data is confirmed to be authorized data with no tampering from the verification of the received, a reception OK response is transmitted to the user device (S1008), and the status of the purchase management database is set to "purchase reception completed" (S1010). In the event that verification of the received data shows that the data is unauthorized data that has been tampered with, a reception fail response is transmitted to the user device (S1007), and the status of the purchase management database is set to "purchase reception failed" (S1009).

Upon receiving a reception OK response from the shop server (Yes in S2005, S2006), the user device sets the status of the purchase management database to "purchase request transmission completed", and upon receiving a reception fail response from the shop server (No in S2005, S2006), the user device sets the status of the purchase management database to "purchase request transmission failed".

Following setting the status of the purchase management database to "purchase reception completed" (S1010), the shop server generates encrypted contents key data 1 (shop) (see Fig. 14(b)) (S1011), transmits the encrypted contents: Kc (Content) encrypted with the contents key: Kc to the user device (S1012), and further transmits encrypted contents key data 1 (shop) shown in Fig. 14(b) (S1013).

Upon setting the status of the purchase management database to "purchase request transmission completed" (S2007), the user device receives the encrypted contents: Kc (Content) encrypted with the contents key: Kc from the shop server (S2009), and further receives the encrypted contents key data 1 (shop) shown in Fig. 14(b) (S2010).

The user device executes verification processing of the data received in step S2009 and S2010 (see Fig. 11) (S2021), and in the event that verification of the received data confirms that the data is valid data with no tampering, a reception OK response is transmitted to the shop server (S2023), and the status of the purchase management database is set to "key 1 reception completed" (S2025). In the event that verification of the received data shows that the data is unauthorized data that has been tampered with, a reception fail response is transmitted to the shop server (S2024), and the status of the purchase management database is set to "key 1 reception failed" (S2026), following which the connection with the shop server is cut off (S2027).

The shop server receives the response from the user device (S1021), and in the event that the response is OK, the status of the purchase management database is set to "key 1 distribution success" (S1024). In the event that the response is fail, the status of the purchase management database is set to "key 1 distribution failed" (S1023), following which connection with the user device is cut off (S1025).

Note that in the event of mutual authentication failure in step S1002 or S2002, or in the case of a "purchase reception failed" setting for the status in S1009 or a "purchase request transmission failed" setting for the status in the S2008, the processing is canceled for either case, processing for cutting off the connection is performed and the processing ends.

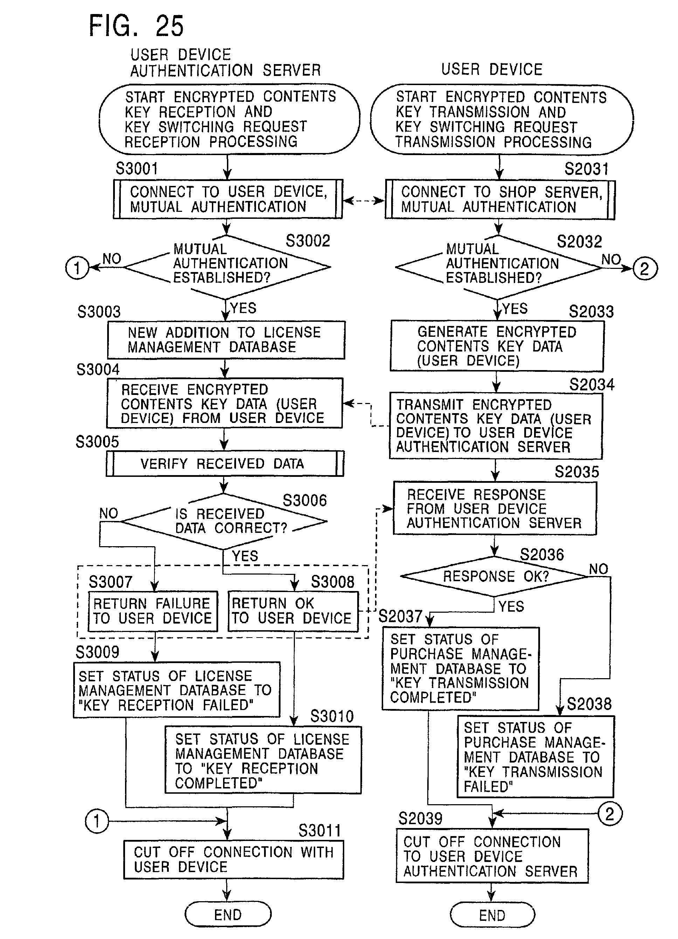

Next, description will be made with reference to the flow shown in Fig. 25, with regard to B. Processing between the user device authentication server and user device (the processing (7) through (9) in Fig. 1).

First, mutual authentication is executed between the user device authentication server and the user device (S3001, S2031). The mutual authentication processing is executed as the processing described with reference to Fig. 12 or Fig. 13. The data communication is executed by encrypting transmitted data as necessary, using the session key generated in the mutual authentication processing. Upon mutual authentication being established, the user device authentication server adds a new user device authentication server processing No. to the license management database (see Fig. 6), as a new processing entry (S3003).

On the other hand, upon mutual authentication being established, the user device generates encrypted contents key data (user device) (see Fig. 14(c)) (S2033), and transmits this to the user device authentication server (S2034).

The user device authentication server receives the encrypted contents key (user device) data from the user device (S3004), and executes verification of the received data (S3005). The data verification is processing following the processing flow in Fig. 11 described earlier. In the event that the data is confirmed to be authorized data with no tampering from the verification of the received data, a reception OK response is transmitted to the user device (S3008), and the status of the license management database is set to "key reception completed" (S3010). In the event that verification of the received data shows that the data is unauthorized data that has been tampered with, a reception fail response is transmitted to the user device (S3007), and the status of the license management database is set to "key reception failed" in (S3009), following which connection with the user device is cut off (S3011).

Upon receiving a reception OK response from the user device authentication server (Yes in S2035, S2036), the user device sets the status of the purchase management database to "key transmission completed" (S2037), and upon receiving a reception fail response from the user device authentication server (No in S2035, S2036), the user device sets the status of the purchase management database to "key transmission failed" (S2038), following which connection with the user device is cut off (S2039).

Note that in the event of mutual authentication failure in step S3002 or S2032, the processing is canceled, processing for cutting off the connection is performed and the processing ends.

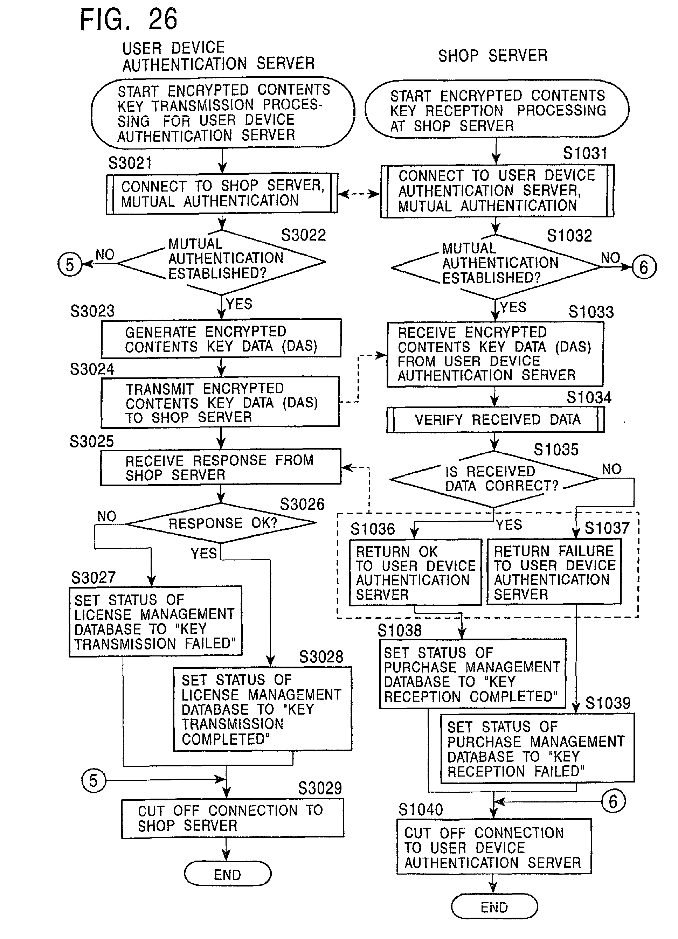

Next, description will be made with reference to the flow shown in Fig. 26, with regard to C. Processing between the user device authentication server and shop server (the processing (11) through (13) in Fig. 1).

First, mutual authentication is executed between the user device authentication server and the shop server (S3021, S21031). The mutual authentication processing is executed as the processing described with reference to Fig. 12 or Fig. 13. The data communication is executed by encrypting transmitted data as necessary, using the session key generated in the mutual authentication processing. Upon mutual authentication being established, the user device authentication server generates encrypted contents key data (DAS) (see Fig. 17(d)) (S3023), and transmits this to the shop server (S3024).

On the other hand, upon mutual authentication being established, the shop server receives the encrypted contents key data (DAS) (see Fig. 17(d)) (S1033), and executes verification of the received data (S1034). The data verification is processing following the processing flow in Fig. 11 described earlier. In the event that the data is confirmed to be authorized data with no tampering from the verification of the received data, a reception OK response is transmitted to the user device authentication server (S1036), and the status of the purchase management database is set to "key reception completed" (S1038). In the event that verification of the received data shows that the data is unauthorized data that has been tampered with, a reception fail response is transmitted to the user device authentication server (S1037), and the status of the purchase management database is set to "key reception failed" in (S1039), following which connection with the user device authentication server is cut off (S1040).

Upon receiving a reception OK response from the shop server (Yes in S3025, S3026), the user device authentication server sets the status of the license management database to "key transmission completed" (S3028), and upon receiving a reception fail response from the user device (No in S3025, S3026), sets the status of the license management database to "key transmission failed" (S3027), following which connection with the user device authentication server is cut off (S3029).

Note that in the event of mutual authentication failure in step S3022 or S1032, the processing is canceled, processing for cutting off the connection is performed and the processing ends.

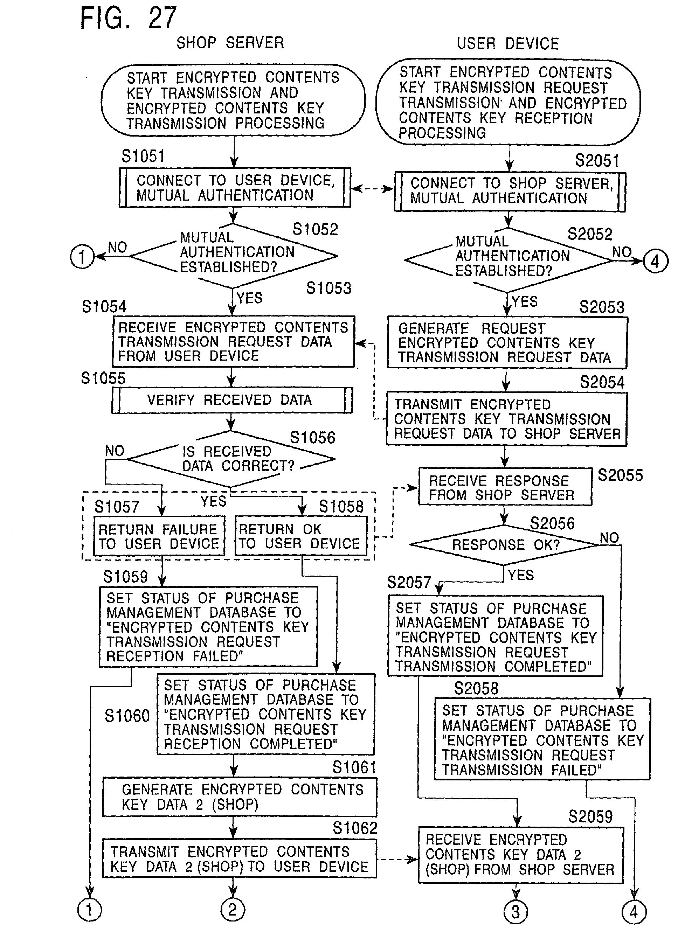

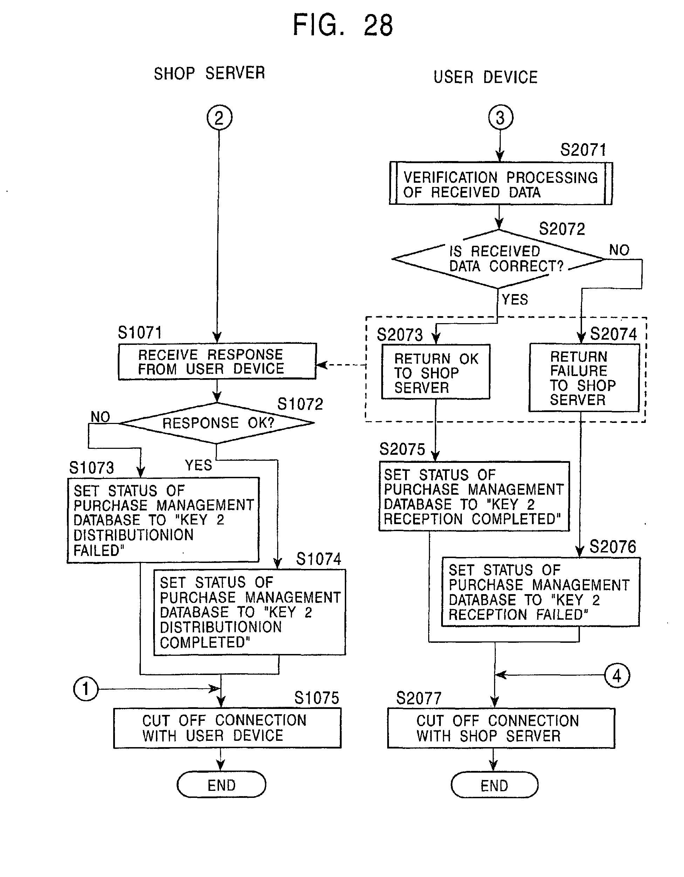

Next, description will be made with reference to the flow shown in Fig. 27 and Fig. 28, with regard to D. Processing between the shop server and user device (the processing (14) through (19) in Fig. 1).

First, at the time of starting processing, mutual verification is executed between the shop server and the user device (S1051, S2051). The mutual authentication is executed as the processing described with reference to Fig. 12 or Fig. 13. Data communication is executed by encrypting the transmitted data as necessary using the session key generated in the mutual authentication processing. Upon mutual authentication being established, the user device generates encrypted contents key transmission request data (see Fig. 17(e)) (S2053), and transmits this to the shop server (S2054).

The shop server receives the encrypted contents key transmission request data from the user device (S1054), and executes verification of the received data (S1055). The data verification is processing following the processing flow in Fig. 11 described earlier. In the event that the data is confirmed to be authorized data with no tampering from the verification of the received data, a reception OK response is transmitted to the user device (S1058), and the status of the purchase management database is set to "encrypted contents key transmission request reception completed" (S1060). In the event that verification of the received data shows that the data is unauthorized data that has been tampered with, a reception fail response is transmitted to the user device (S1057), and the status of the purchase management database is set to "encrypted contents key transmission request reception failed" in (S1059).

Upon receiving a reception OK response from the shop server (Yes in S2055, S2056), the user device sets the status of the purchase management database to "encrypted contents key transmission request transmission completed" (S2057), and upon receiving a reception fail response from the shop server (No in S2055, S2056), the user device sets the status of the purchase management database to "encrypted contents key transmission request transmission failed" (S2058).

Following setting the status of the purchase management database to "encrypted contents key transmission request reception completed" (S1060), the shop server generates encrypted contents key data 2 (shop) (see Fig. 17(f)) (S1061), and transmits the encrypted contents key data 2 (shop) shown in Fig. 17(f) to the user device (S1062).

Following setting the status of the purchase management database to "encrypted contents key transmission request transmission completed" (S2057), the user device receives encrypted contents key data 2 (shop) (see Fig. 17(f)) from the shop server (S2059).

The user device executes verification processing of the data received in step S2059 (see Fig. 11) (S2071), and in the event that verification of the received data confirms that the data is valid data with no tampering, a reception OK response is transmitted to the shop server (S2073), and the status of the purchase management database is set to "key 2 reception completed" (S2075). In the event that verification of the received data shows that the data is unauthorized data that has been tampered with, a reception fail response is transmitted to the shop server (S2074), and the status of the purchase management database is set to "key 2 reception failed" (S2076), following which the connection with the shop server is cut off (S2077).

The shop server receives the response from the user device (S1071), and in the event that the response is OK, the status of the purchase management database is set to "key 2 distribution success" (S1074). In the event that the response is fail, the status of the purchase management database is set to "key 2 distribution failed" (S1073), following which connection with the user device is cut off (S1075).

Note that in the event of mutual authentication failure in step S1052 or 52052, the processing is canceled, and processing for cutting off the connection is performed and the processing ends.

### [Modification of the basic contents distribution model 1]

So far, the configuration and processing procedures of contents purchasing processing have been described based on the configuration of the basic contents distribution model 1 shown in Fig. 1, but various forms may be realized other than the configuration shown in Fig. 1, so as long as the configuration basically has a policy for a configuration for executing contents key switching processing at a user device authentication server. Various modifications will now be described.

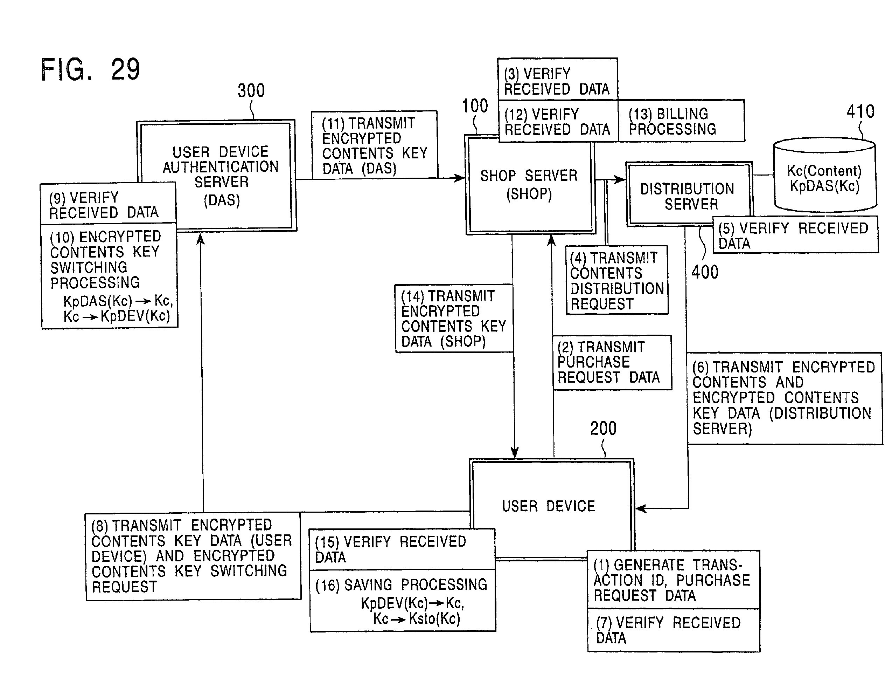

The configuration shown in Fig. 29 is a configuration wherein the functions of the shop server are divided, with a shop server and distribution server being provided. The shop server 100 receives contents purchasing requests from the user device 200, but distribution of the contents to the user device 200 is executed by the distribution server 400. With the present example, mutual authentication processing between the entities is omitted, but the mutual authentication processing may be performed in the same way as with the basic contents distribution model 1.

The shop server 100 receives purchase request data from the user device 200, performs verification of the data (process (3) in Fig. 29), and verifies the validity of the request data, following which transmission of the contents distribution request to the distribution server 400 is executed (process (4) in Fig. 29). The distribution server 400 verifies contents distribution request data from the shop server 100, and in the event that confirmation is made that the data is authorized, the encrypted contents extracted from the contents database 410 and the encrypted contents key data (distribution server) are transmitted (process (6) in Fig. 29). The encrypted contents key data (distribution server) corresponds to the encrypted contents key data 1 (shop) in the above-described embodiment, and is data which contains the contents key Kc encrypted with the public key KpDAS of the user device authentication server, i.e., KpDAS(Kc).

Processing following reception of the encrypted contents and encrypted contents key data (distribution server) by the user device 200 from the distribution server 400, is the same as the embodiment based on the configuration shown in Fig. 1 earlier.

With the present configuration, the shop server 100 primarily executes functions of receiving contents request from the user device and verifying the authorization thereof, and receiving an encrypted contents key subjected to key switching from the user device authentication server and distributing to the user device, and does not perform management or distribution of the contents themselves. Accordingly, this is a form suitable for a configuration wherein there are multiple distribution servers serving as various contents managing entities, such as music contents distribution servers for managing music data, game contents distribution servers for managing game contents, etc., and one shop server responds to a contents request from the user device and transmits a contents distribution request to distribution server managing the requested contents, according to the request. Also, due to this configuration, the user device and shop server perform interactive communication, which uses the Internet, but from the distribution server to the user device is one-way communication, so high-speed satellite communication can be used, which is advantageous.

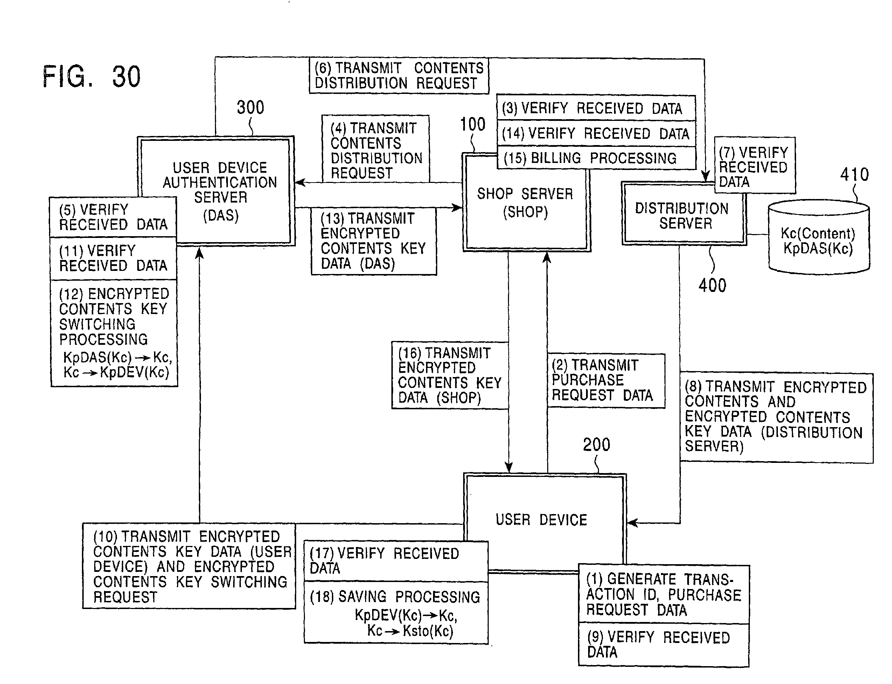

As with Fig. 29, the configuration shown in Fig. 30 is a configuration wherein the functions of the shop server are divided, with a shop server and distribution server being provided. The shop server 100 receives contents purchasing requests from the user device 200, but distribution of the contents to the user device 200 is executed by the distribution server 400. This differs from the configuration shown in Fig. 29 in that a contents distribution request is not transmitted from the shop server 100 to the distribution server 400, and rather configuration is such that the user device authentication server 300 transmits contents distributions requests to the distribution server 400.

The shop server 100 receives purchase request data from the user device 200, performs verification of the data (process (3) in Fig. 30), and verifies the validity of the request data, following which transmission of the contents distribution request to the device authentication server 300 is executed (process (4) in Fig. 30). Subsequently, the user device authentication server 300 verifies the data, (process (5) in Fig. 30), and in the event that confirmation is made that the request data is authorized, executes transmission of the contents distribution request to the distribution server 400 (process (6) in Fig. 30). The distribution server 400 verifies the contents distribution request data from the device authentication server 300, and in the event that confirmation is made that this is authorized, the encrypted contents extracted from the contents database 410 and the encrypted contents key data (distribution server) are transmitted to the user device 200 (process (8) in Fig. 30). The encrypted contents key data (distribution server) corresponds to the encrypted contents key data 1 (shop) in the above-described embodiment, and is data which contains the contents key Kc encrypted with the public key KpDAS of the user device authentication server, i.e., KpDAS(Kc).

Processing following reception of the encrypted contents and encrypted contents key data (distribution server) by the user device 200 from the distribution server 400, is the same as the embodiment based on the configuration shown in Fig. 1 earlier.

With the present configuration, the user device authentication server 300 can obtain and manage information of the user device which is a contents purchase requesting entity at the point that there is a contents purchase request to the shop server 100, before the key switching request from the user device 200. Accordingly, at the time of receiving the key switching request from the user device 200, collation processing regarding whether or not this is an already-registered contents purchase requesting user device can be made.

### [1.3 Basic contents distribution model 2]

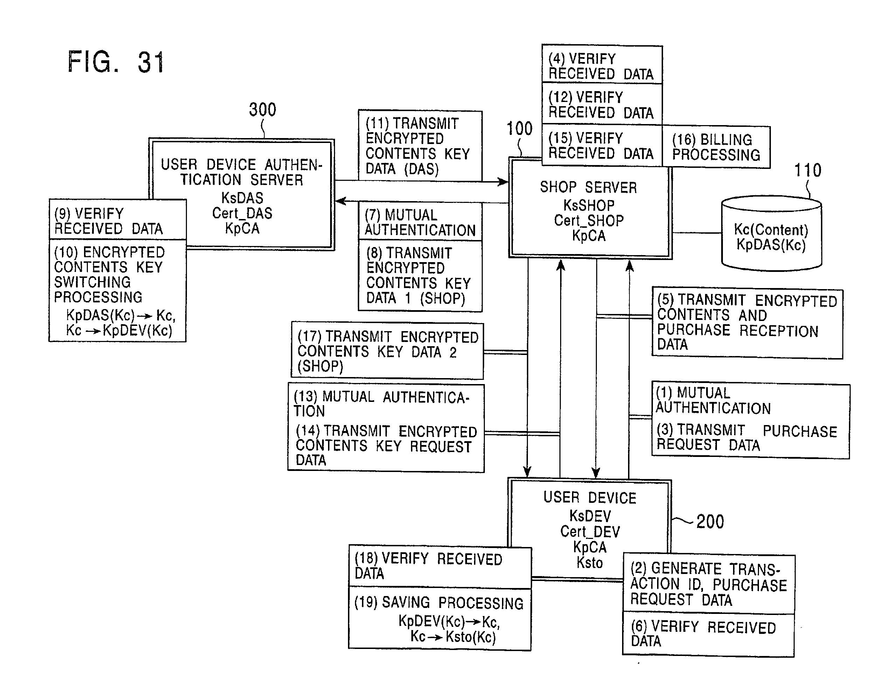

Next, description will be made regarding a basic contents distribution model 2 which differs from the basic contents distribution model 1, with reference to Fig. 31. With the basic contents distribution model 2, there is no data transmission/reception between the user device 200 and user device authentication server 300. The processing of (1) through (19) shown in Fig. 31 will be described centering on the differences with the basic contents distribution model 1. In the present embodiment, mutual authentication processing ((1), (7), (13)) is described as being performed in the communication between the entities, but this may be omitted as necessary.

### (1) Mutual authentication

The user device 200 which is attempting to purchase contents from the shop server 100 performs mutual authentication processing with the shop server 100. The mutual authentication processing is the processing described with reference to Fig. 12 or Fig. 13. In the mutual authentication processing, the session key generated in the mutual authentication processing is used to execute encryption of transmitted data as necessary and perform data communication.

### (2) Generate transaction ID and purchase request data and

### (3) Transmit purchase request data

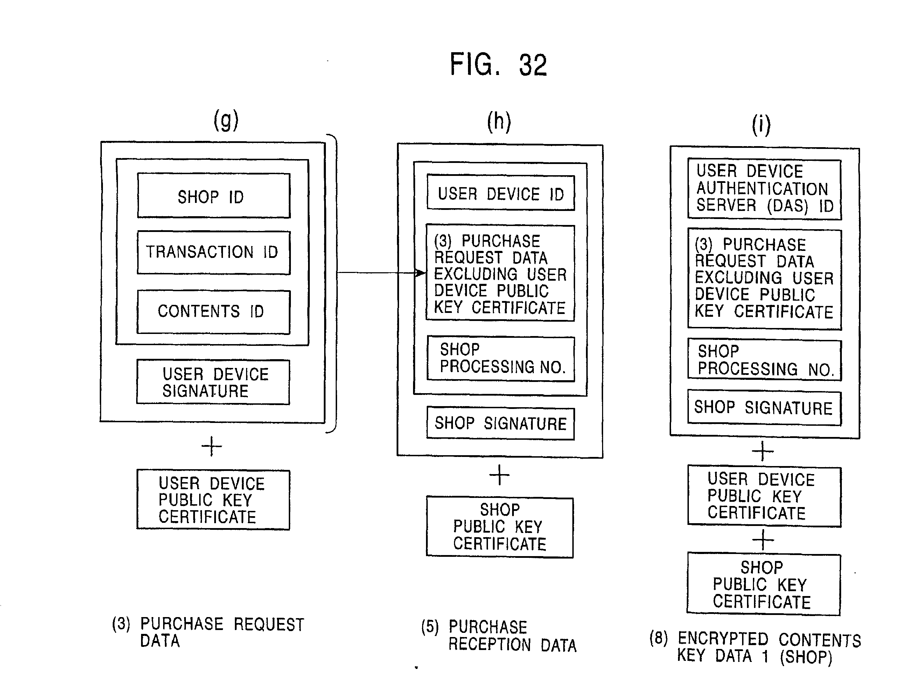

Upon success of mutual authentication between the shop server 100 and user device 200, the user device 200 generates contents purchase request data. Fig. 32(g) illustrates the configuration of purchase request data. The purchase request data has the data of: a shop ID which is an identifier of the shop server 100 and which is the destination of the request of contents purchasing; a transaction ID which the encryption processing means of the user device 200 generates based on a random number as an identifier for contents transactions; and further a contents ID serving as an identifier of the contents which the user device desires to purchase, and electronic signature of the user device is affixed to this data. Further, the public key certificate of the user device is attached to the purchase request data, and is sent to the shop server 100. Now, in the event that the public key certificate has already been sent to the shop side at the time of the above-described mutual authentication processing, or in processing prior to that, there is not necessarily the need to send it again.

### (4) Verify received data

Upon receiving the purchase request data shown in Fig. 32(g) from the user device 200, this shop server 100 executes the verification processing of the received data. The details of the verification processing are as described with reference to Fig. 15 earlier.

### (5) Transmit encrypted contents and purchase reception data

Upon verification of the purchase request data being completed at the shop server 100, and judgment being made that this is an authorized contents purchase request with no data tampering, the shop server 100 transmits encrypted contents and the purchase reception data to the user device. These are encrypted contents: Kc (content) wherein contents are encrypted with a contents key, and data simply indicating that the purchase request has been received, this being data that does not contain the encrypted contents key data: KpDAS(Kc) wherein the contents key: Kc has been encrypted with the public key of the user device authentication server (DAS) 300.

Fig. 32(h) illustrates the configuration of the purchase reception data. The purchase reception data has a user device ID which is the identifier of the user device 200 which is the requester of the contents purchase, purchase request data (the data in Fig. 32(g) excluding the user device public key certificate), and the shop processing No. generated by the shop server accompanying the contents transaction, with the electronic signature of the shop server 100 affixed to this data. Further, the public key certificate of the shop server 100 is attached to the purchase reception data, and is sent to the user device 200. Now, in the event that the shop server public key certificate has already been sent to the user device side at the time of the above-described mutual authentication processing, or in processing prior to that, there is not necessarily the need to send it again.

### (6) Verify received data

Upon receiving the encrypted contents: Kc (content) and the purchase reception data shown in Fig. 32(h) from the shop server 100, the user device 200 executes verification processing of the purchase reception data. This verification processing is processing the same as the processing flow in the above-described Fig. 15, with the user device 200 executing verification of the public key certificate of the shop server received from the shop server 100 using the public key KpCA of the issuer authority (CA) first, and then next executing verification of the shop signature of the purchase reception data shown in Fig. 32(h) using the public key KpSHOP of the shop server that has been extracted from the public key certificate.

### (7) Mutual authentication

### (8) Transmit encrypted contents key data 1 (shop)

Next, the shop server 100 accesses the user device authentication server 300, and executes mutual authentication processing between the shop server 100 and the user device authentication server 300. Upon mutual authentication being established, the shop server 100 transmits encrypted contents key data 1 (shop) to the user device authentication server 300.

Fig. 32(i) illustrates the configuration of the encrypted contents key data 1 (shop). The encrypted contents key data 1 (shop) has a user device authentication server ID which is the identifier of the user device authentication server 300 which is the destination of the encrypted contents key switching request, and the purchase request data received from the user device 200 (the data in Fig. 32(g) excluding the user device public key certificate) and shop processing No., with the electronic signature of the shop server 100 affixed to this data. Further, the public key certificate of the shop server 100 and the public key certificate of the user device 200 are attached to the encrypted contents key data 1 (shop), and is sent to the user device authentication server 300. Now, in the event that the user device authentication server 300 already has the user device public key certificate and the shop server public key certificate, there is not necessarily the need to send it again.

### (9) Verify received data

Upon receiving the encrypted contents key data 1 (shop) (Fig. 32(i)) from the shop server 100, the user device authentication server 300 executes verification processing of the received data. This verification processing is processing the same as the processing flow in the above-described Fig. 15, with the user device authentication server 300 first executing verification of the public key certificate of the shop server received from the shop server 100 using the public key KpCA of the issuer authority (CA), and then executing verification of the electronic signature of the encrypted contents key data 1 (shop) shown in Fig. 32(i) using the public key KpSHOP of the shop server that has been extracted from the public key certificate. Further, verification of the public key certificate of the user device is executed using the public key KpCA of the issuer authority (CA), and next verification of the user device signature of the (3) purchase request data contained in the encrypted contents key data 1 (shop) shown in Fig. 32(i) using the public key KpDEV of the user device extracted from the public key certificate.

### (10) Encrypted contents key switching processing

At the user device authentication server 300, upon verification of the encrypted contents key data 1 (shop) received from the shop server 100 having been completed, and judgment being made that this is authorized data, the user device authentication server 300 decrypts the encrypted contents key contained in the encrypted contents key data 1 (shop), i.e., the data: KpDAS(Kc) wherein the contents key: Kc is encrypted with the public key KpDAS of the user device authentication server (DAS) 300, with a secret key KsDAS of the user device authentication server 300, to obtain the contents key Kc, and further generates an encrypted contents key: KpDEV(Kc) wherein the contents key Kc is encrypted with the public key: KpDEV of the user device. That is to say, key switching processing is executed in the order of KpDAS(Kc) → Kc → KpDEV(Kc). This processing is processing following the flow shown in Fig. 16 described earlier.

### (11) Transmit encrypted contents data

Next, the user device authentication server 300 transmits encrypted contents key data (DAS) to the shop server 100.

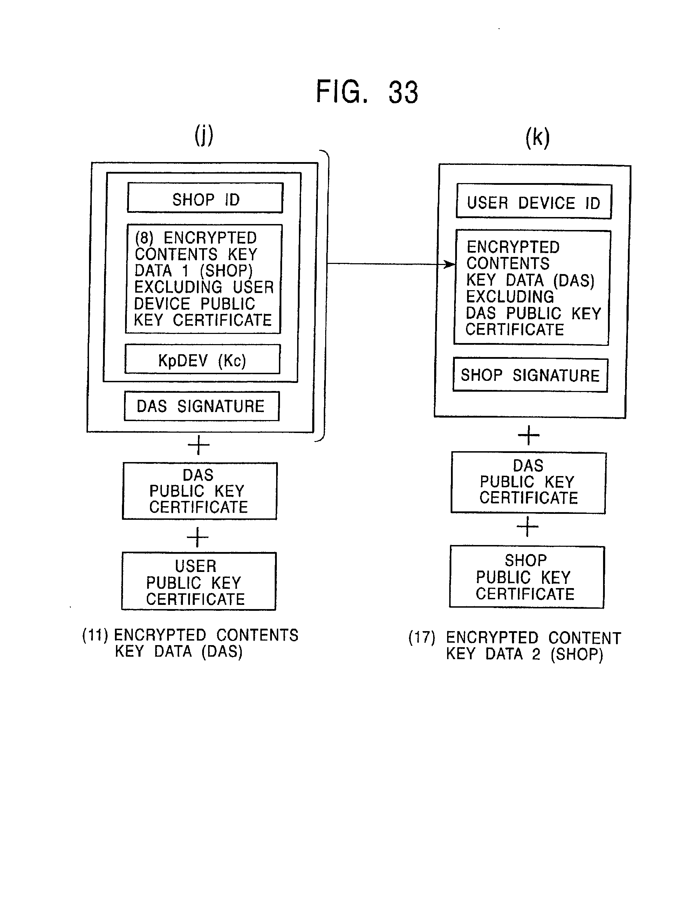

The configuration of the encrypted contents key data (DAS) is shown in Fig. 33(j). The encrypted contents key data (DAS) has a shop ID which is an identifier of the shop server 100 which is the destination of the contents purchase request, the encrypted contents key data 1 (shop) (the data excluding the shop and the user device public key certificate shown in Fig. 32(i)), and further the encrypted contents key data: KpDEV(Kc) generated by the user device authentication server 300 in the above-described key switching processing, with the electronic signature of the user device authentication server 300 being affixed to the data. Further, the public key certificates of the user device authentication server 300 and the user device 200 are attached to the encrypted contents key data (DAS), and sent to the shop server 100. Note that in the event that the shop server already holds these public key certificates, sending again is not necessarily needed.

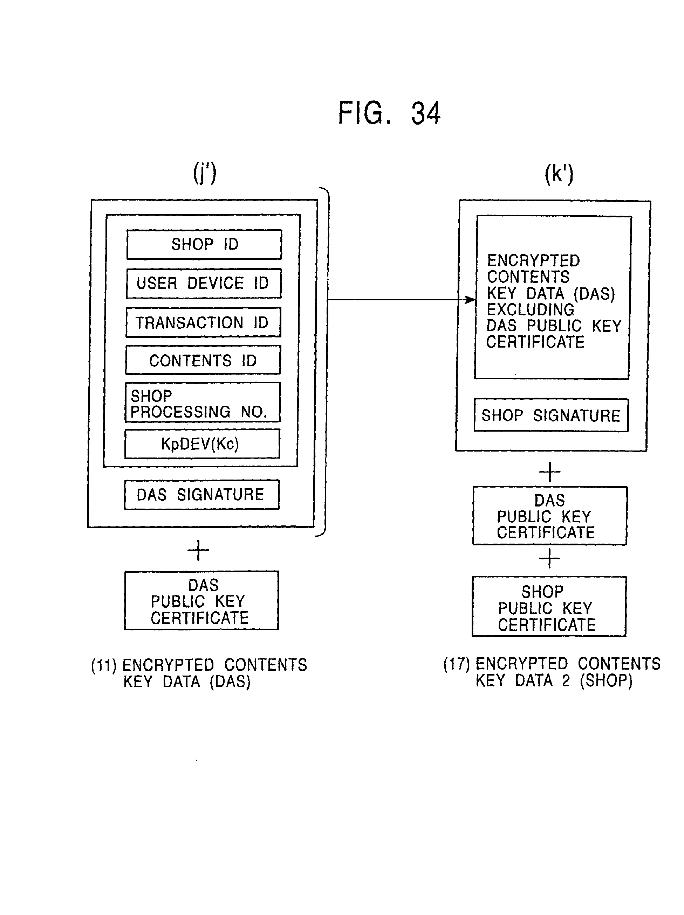

Also, in the event that the user device authentication server 300 is an entity acknowledged to be a reliable third party, an arrangement may be used wherein the encrypted contents key data (DAS) is not of a configuration containing the (8) encrypted contents key data 1 (shop) without change, as shown in Fig. 33(j), but rather wherein the user device authentication server 300 extracts the shop ID, the user device ID, the transaction ID, contents ID, shop processing No., and contents key KpDEV(Kc) encrypted with the public key of the user device, affixes the signature to these, and uses this as encrypted contents key data (DAS), as shown in Fig. 34(j'). The public key certificate that needs to be attached is the public key certificate of the user device authentication server 300.

### (12) Verify received data

The shop server 100 which has received the encrypted contents key data (DAS) (Fig. 33(j)) from the user device authentication server 300 executes verification processing of encrypted contents key data (DAS). This verification processing is the same processing as the flow of the processing shown in Fig. 15 described above, with a shop server 100 first executing verification of the public key certificate of the user device authentication server received from the user device authentication server 300 with the public key KpCA of the issuer authority (CA), and then using the public key KpDAS of the user device authentication server 300 extracted from the public key certificate to execute verification of electronic signature of the encrypted contents key data (DAS) shown in Fig. 33(j). Note that the same verification is executed in the event that the shop server 100 receives the simplified encrypted contents key data (DAS) shown in Fig. 34(j'). Further, an arrangement may be made wherein the encrypted contents key 1 (shop 1) within the encrypted contents data (DAS) shown in Fig. 33(j) is verified as necessary.

### (13) Mutual authentication, and

### (14) Transmit encrypted contents key request data

Next, the user device 200 transmits encrypted contents key request data to the shop server. Note that at this time, in the event that a request is to be executed with a different session from the previous request, mutual authentication is executed again, and encrypted contents key request data is transmitted from the user device 200 to the shop server 100, under the conditions that mutual authentication is established.

### (15) Verification processing, and

### (16) Billing processing

Upon receiving the encrypted contents key request data from the user device, the shop server 100 executes verification processing of the encrypted contents key request data. This is same processing that described with reference to Fig. 15. Upon the data verification finishing, the shop server 100 executes billing processing relating to the contents transaction. The billing processing is processing for receiving contents charges from a transaction account of the user. The received contents charges are distributed among various parties involved, such as the copyright holder of the contents, the shop, the user device authentication server administrator, etc.

Up to this billing processing, the key switching processing process of the encrypted contents keys by the user device authentication server 300 is mandatory, as with the above-described basic model 1, so the shop server 100 cannot execute billing processing only by processing with the user device. Also, the user device 200 cannot decrypt the encrypted contents key, and accordingly can not use the contents. The user device authentication server records contents transaction contents with all key switching processing that has been executed in the user device authentication server license management database described with reference to Fig. 6, and can know all contents transactions which are object of billing. Accordingly, contents transaction performed by the shop side alone become impossible, thereby preventing unauthorized contents sales.

### (17) Transmit encrypted contents key data 2 (shop)

Upon the billing processing at the shop server 100 ending, the shop server 100 transmits encrypted contents key data 2 (shop) to the user device 200.

Fig. 33(k) illustrates the configuration of the encrypted contents key data 2 (shop). The encrypted contents key data 2 (shop) has the user device ID which is the identifier of the user device 200 which is the requester of the encrypted contents key request, and the encrypted contents key data (DAS) received from the user device authentication server 300 (data excluding the public key certificates of the user device authentication server shown in Fig. 33(j)), with the electronic signature of the shop server 100 having been affixed to this data. Further, the public key certificate of the shop server 100 and the public key certificate of the user device authentication server 300 are attached to the encrypted contents key data 2 (shop), and sent to the user device 200. In the event that the user device 200 already holds the public key certificate of the user device authentication server and the public key certificate of the shop server, it is not necessarily needed to send this again.

Now, in the event that the user device authentication server 300 is an entity acknowledged to be a reliable third party, and in the event that the encrypted contents key data (DAS) which the shop server 100 receives from the user device authentication server 300, is the simplified encrypted contents key data (DAS) described earlier with reference to Fig. 34(j'), the shop server 100 sends the encrypted contents key data 2 (shop) shown in Fig. 34(k') to the user device. That is, the shop server attaches the public key certificate of the shop server 100 and the public key certificate of the user device authentication server 300 to the data wherein the signature of the shop server has been affixed to the simplified encrypted contents key data (DAS) shown in Fig. 34(j'), and sends this to the user device 200.

### (18) Verify received data

Upon receiving the encrypted contents key data 2 (shop) from the shop server 100, the user device 200 executes verification processing of the encrypted contents key data 2 (shop). This verification processing is the same as the processing in the processing flow described earlier with reference to Fig. 15, with the user device 200 first executing verification of the public key certificate of the shop server received from the shop server 100, using the public key KpCA of the issuer authority (CA), then executes verification of the electronic signature of the encrypted contents key data 2 (shop) shown in Fig. 33(k), using the public key KpSHOP of the shop server 100 extracted from the public key certificate. Further, verification of the public key certificate of the user device authentication server 300 is executed using the public key KpCA of the issuer authority (CA), and verification is executed on the signature of the (11) encrypted contents key data (DAS) contained in the encrypted contents key data 2 (shop) shown in Fig. 33(j), using the public key KpDAS of the user device authentication server 300 extracted from the public key certificate. Further, an arrangement may be made wherein the encrypted contents key data 1 (shop 1) contained in the encrypted contents data (DAS) shown in Fig. 33(j) is verified, as necessary.

### (19) Saving processing

The user device 200 which has verified the encrypted contents key data 2 (shop) received from the shop server 100 decrypts the encrypted contents key: KpDEV(Kc) encrypted with its own public key KpDEV contained in the encrypted contents key data 2 (shop), using its own secret key KsDEV, further generates the encrypted contents key: Ksto(Kc) by encryption using the storing key Ksto of the user device, and stores this in the storing means of the user device 200. At the time of using contents, the encrypted contents key: Ksto(Kc) is decrypted using the stored key Ksto and the contents key Kc is extracted, and the extracted contents key Kc is used to execute decryption processing of the encrypted contents Kc (Content), thereby reproducing and executing the contents (Content).

Thus, according to the basic distribution model 2, there is no data transmission/reception executed between the user device 200 and the user device authentication server 300, so all that is necessary for the user device 200 is to perform data transmission/reception with the shop server 100, thereby reducing the processing load on the user device.

### [1.2 Modification of the basic contents distribution model 2]

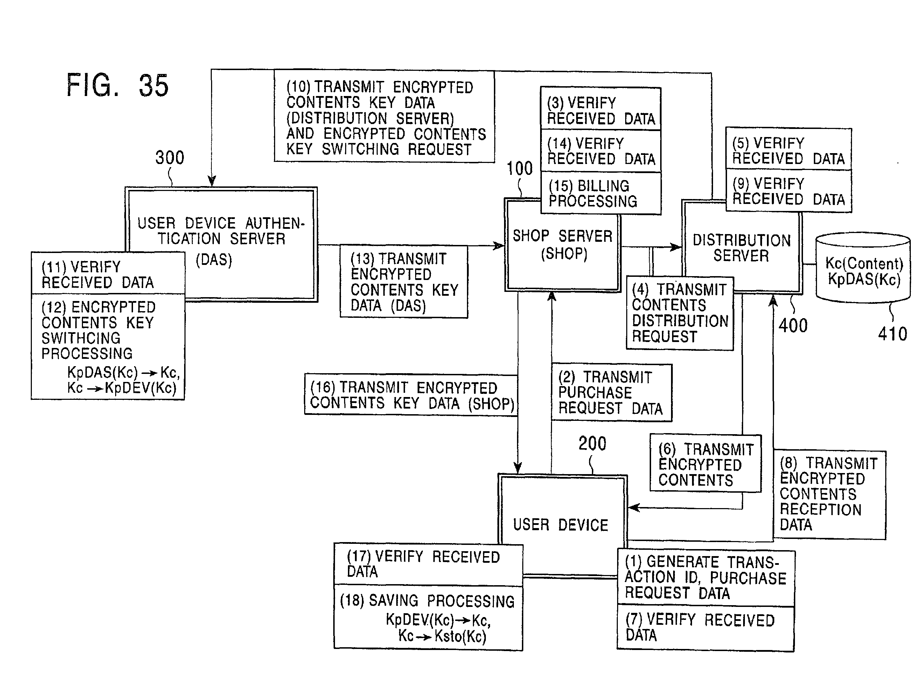

Next, a modification of the configuration of the basic contents distribution model 2 shown in Fig. 31 will be described. The configuration shown in Fig. 35 is a configuration wherein the functions of the shop server are divided, with a shop server and distribution server being provided. The shop server 100 receives contents purchasing requests from the user device 200, but distribution of the contents to the user device 200 is executed by the distribution server 400. With the present configuration, mutual authentication between the entities which execute data exchange is omitted, with the entities only performing signature verification of the received data. However, an arrangement may be made wherein mutual authentication processing is performed between the entities in the same way as with the basic contents distribution model 2.

The shop server 100 receives purchase request data from the user device 200, performs verification of the data (process (3) in Fig. 35), and verifies the validity of the request data, following which transmission of the contents distribution request to the distribution server 400 is executed (process (4) in Fig. 35). The distribution server 400 verifies contents distribution request data from the shop server 100, and in the event that confirmation is made that the data is authorized, the encrypted contents extracted from the contents database 410 are transmitted (process (6) in Fig. 35).

The user device 200 receives the encrypted contents form the distribution server 400, and following data verification, transmits the encrypted contents reception data to the distribution server 400 (processing (8) in Fig. 35). Following verification of the received data, the distribution server 400 transmits the encrypted contents key data (distribution server) and encrypted contents key switching request to the user device authentication server 300 (processing (10) in Fig. 35).

Processing following reception of the encrypted contents key data (distribution server) and the encrypted contents key switching request by the user device authentication server 300 from the distribution server 400, is the same as the embodiment based on the configuration shown in Fig. 31 earlier, except for the omission of the mutual authentication processing.

With the present configuration, the user device transmits contents purchase request to the shop server and receives encrypted contents from the distribution server, without performing mutual authentication. The shop server 100 receives contents requests from the user device and verifies the authorization thereof based on verification of the signature alone. Further, the encrypted contents key regarding which switching has been completed is received from the user device authentication server, and the authorization thereof is executed based on verification of the signature. The distribution server 400 performs confirmation of the authorization of the data received from the shop server by executing signature verification, and performs contents distribution.

The shop server 100 does not perform management or distribution of the contents themselves. Accordingly, this is a form suitable for a configuration wherein there are multiple distribution servers serving as various contents managing entities, such as music contents distribution servers for managing music data, game contents distribution servers for managing game contents, etc., and one shop server responds to a contents request from the user device and transmits a contents distribution request to distribution server managing the requested contents, according to the request. Also, due to this configuration, the user device and shop server perform interactive communication, which uses the Internet, but from the distribution server to the user device is one-way communication, so high-speed satellite communication can be used, which is advantageous.

With the present embodiment, mutual authentication is omitted and the authorization of the data is confirmed only by signature verification, so the processing can be made more efficient.

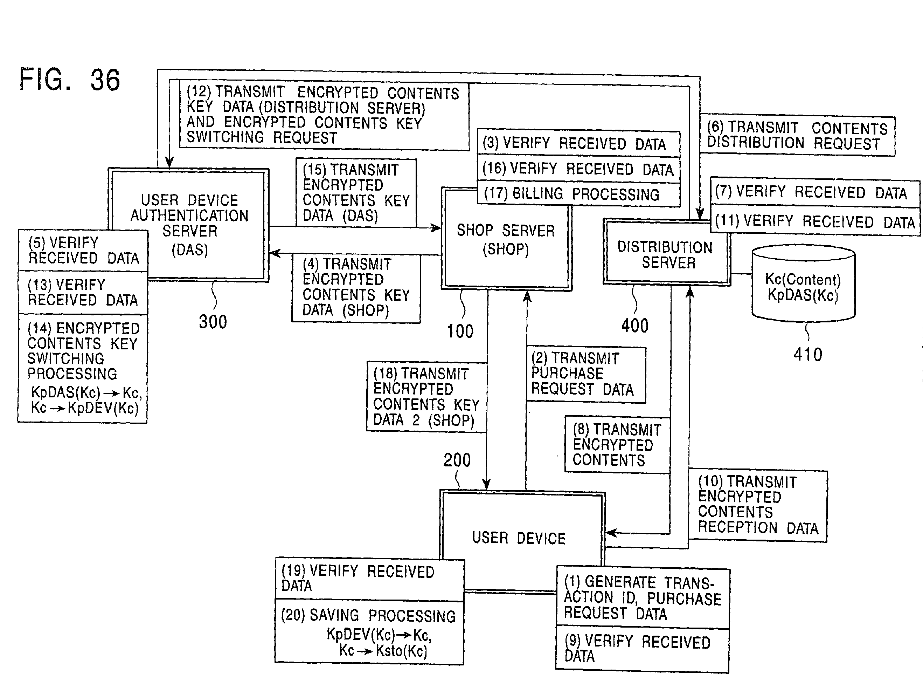

As with Fig. 35, the configuration shown in Fig. 36 is a configuration wherein the functions of the shop server are divided, with a shop server and distribution server being provided and mutual authentication is omitted. The shop server 100 receives contents purchasing requests from the user device 200, and performs signature verification. Distribution of the contents to the user device 200 is executed by the distribution server 400. This differs from the configuration shown in Fig. 35 in that a contents distribution request is not transmitted from the shop server 100 to the distribution server 400, and rather configuration is such that the user device authentication server 300 transmits contents distributions requests to the distribution server 400.

The shop server 100 receives purchase request data from the user device 200, performs verification of the data (process (3) in Fig. 36), and verifies the validity of the request data, following which transmission of the encrypted contents key data 1 (shop) to the device authentication server 300 is executed (process (4) in Fig. 36). Subsequently, the user device authentication server 300 verifies the data, (process (5) in Fig. 36), and in the event that confirmation is made that the request data is authorized, executes transmission of the contents distribution request to the distribution server 400 (process (6) in Fig. 36). The distribution server 400 verifies the contents distribution request data from the user device authentication server 300, and in the event that confirmation is made that this is authorized, the encrypted contents extracted from the contents database 410 is transmitted to the user device 200 (process (8) in Fig. 36). The subsequent processing is the same as the processing based on the configuration shown in Fig. 35 described earlier.

With the present configuration, the user device authentication server 300 can obtain and manage information of the user device which is a contents purchase requesting entity at the point that there is a contents purchase request to the shop server 100, before the key switching request from the distribution server 400. Accordingly, at the time of the key switching request from the distribution server 400, collation processing regarding whether or not this is an already-registered contents purchase requesting user device can be made. Also, in the event that the DAS is viewed as being a reliable entity, the distribution server does not need to verify the transmission data of the shop server, thereby making processing more efficient.

Thus, as described above, according to the contents distribution configuration of the present invention, following the user device obtaining the encrypted contents Kc (Content) up to the contents becoming usable, the key switching processing process of the encrypted contents keys by the user device authentication server is mandatory. Accordingly, the shop server cannot sell contents to user devices without notifying the user device authentication server and the user device cannot use the contents. The user device authentication server records all the contents of transaction with key switching processing that has been executed in the user device authentication server license management database (see Fig. 6), and thus can manage transactions of all shops, know transactions of contents billed, and accurately distribute contents charges received in the billing processing of the shops to the various parties involved, such as the copyright holders of the contents, shops, user device authentication server administrator, and so forth, thereby realizing a configuration which eliminates unauthorized contents usage.

### [2. Contents distribution model using electronic tickets]

Next, a configuration where an electronic tickets are issued describing profits distribution information with regard to the various related parties such as the copyright holders of contents, producers, license holders, shops, etc., based on usage (purchase) of contents by users, for executing profits distribution processing based on issued electronic tickets, will be described.

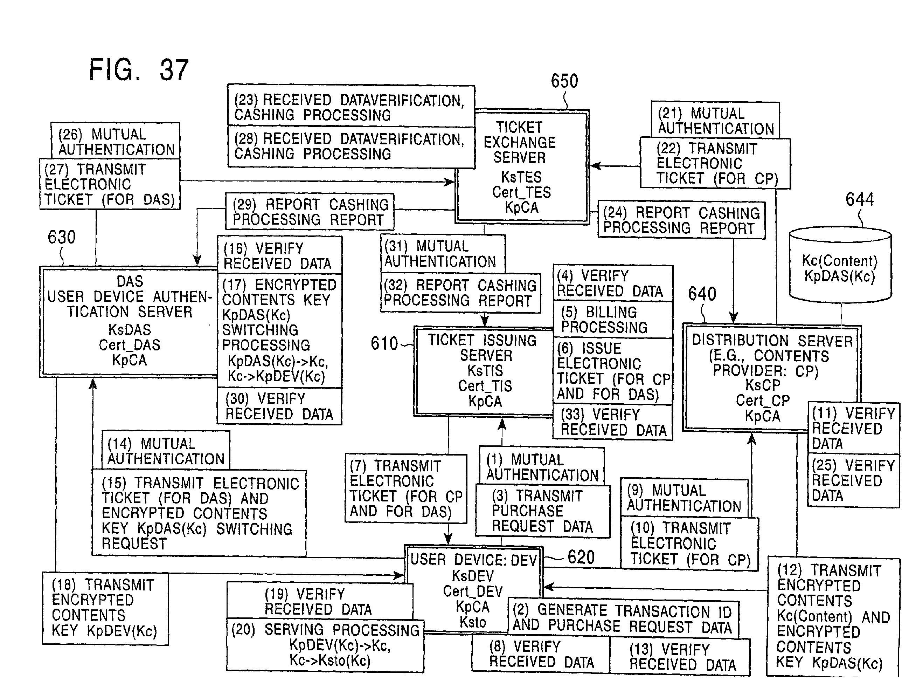

Fig. 37 illustrates the system configuration for executing profits distribution based on electronic tickets. The contents distribution system shown in Fig. 37 has as the primary components thereof, a Ticket Issuer Server (TIS) 610 for receiving purchase request for contents which user devices purchase, and issuing electronic tickets describing profits distribution information of uses fees and accompanying purchasing of the contents, a user device (DEV) 620 which is the contents purchasing entity, the user device authentication server (DAS) 630 functioning as an administration server for performing key switching for managing authorized contents transactions, a distribution server (CP: Content Provider) 640 such as a content provider (CP) or the like which distributes contents, and ticket exchange server (TES: Ticket Exchange Server) for performing caching process and such as transfers of usage fees based on electronic tickets.

### (Ticket issuer server)

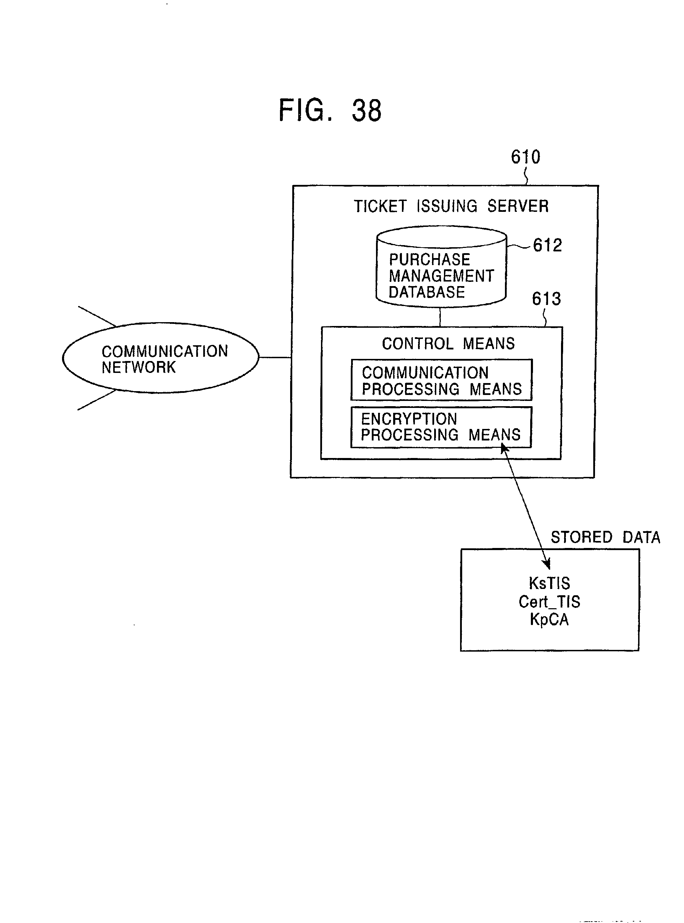

Fig. 38 shows the configuration of the ticket issuer server (TIS) 610 of the contents distribution system shown in Fig. 37. The ticket issuer server 610 receives purchase request for an user devices 620, and issues the electronic tickets describing the profits distribution information thereof corresponding to the contents which are the object of transaction, regarding which purchasing has been requested.

The ticket issuer server (TIS) 610 has a ticket issuing management database 612 which manages management data of issued tickets accompanying contents transactions, such as the identifier of the user device to which contents are sold and a contents identifier, and contents charges and the like, in a correlated manner. Further, this has control means 613 for executing contents purchase request verification from the user device 620, control of the ticket issuing management database, billing processing with regard to user devices based on tickets, communication processing with user devices and the like, and further data encryption processing at the time of the communicating processes.

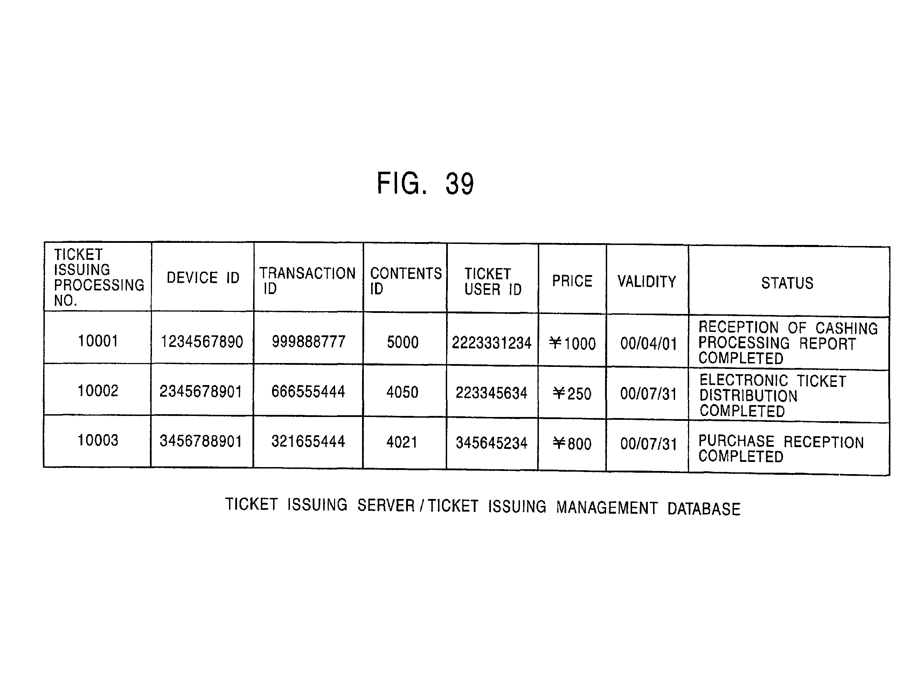

Fig. 39 shows the data configuration of the ticket issuing management database 612. The ticket issuing management database 612 has various information of: ticket issuing processing Nos. As identification numbers for the ticket issuer server to generate internally at the time of executing ticket issuing processing in response to contents transactions, the device ID which is an identifier of the user device which issued a contents purchasing commission, the transaction ID which the user device generates and issues as a contents transaction identifier at the time of executing transactions between the user device and ticket issuer server, a contents ID which is an identifier of contents which are the object of transaction, the ticket user ID which is an identifier of an entity which obtains compensation based on electronic tickets issued by the ticket issuer server 610, e.g., copyright holders, license holders, administrators, those related to contents sales, and so forth, the price which is the contents usage charges distribution monetary amount corresponding to each of the ticket user IDs, the valid period for exchanging processing based on the ticket, and status which indicates the status of the ticket issuing and managing processing at the ticket issuer server 610. The status is updated according to the progression of multiple processes accompanying the transaction of contents, and will be described later in detail.

The control means 613 of the ticket issuer server 610 also functions as encryption processing means and communication processing means as shown in Fig. 38, and the control means 613 are configured of a computer storing, for example, encryption processing programs and communication processing programs. The key data and the like used in the encryption processing executed by the encryption processing means of the control means 613 is securely stored in storing means within the control means. The encryption processing data such as encryption keys and the like stored by the ticket issuer server 610 include the secret key KsTIS of the ticket issuer server 610, the public key certificate Cert_TIS of the ticket issuer server 610, and the public key KpCA of the certificate authority (CA) serving as the public key certificate issuer authority which is the issuer authority of public key certificates.

The configuration of the control means 613 is the same configuration of the control means configuration described with reference to Fig. 4 earlier, i.e., a configuration having a Central Processing Unit (CPU), ROM (Read Only Memory), RAM (Random Access Memory), a display unit, input unit, storing means, communication interface, and so forth.

### (User device)

The user device (DEV) 620 is the same user device in the configuration shown in Fig. 1, i.e., the same configuration as the configuration in Fig. 7. The encryption processing data such as encryption keys and the like stored by the user device 600 include the secret key: KsDEV of the user device, the public key certificate Cert_DEV of the user device, the public key KpCA of the certificate authority (CA) serving as the public key certificate issuer authority which is the issuer authority of public key certificates, and a storing key Ksto applied as an encryption key at the time of storing contents in storing means such as the hard disk or the like, for example, of the user device.

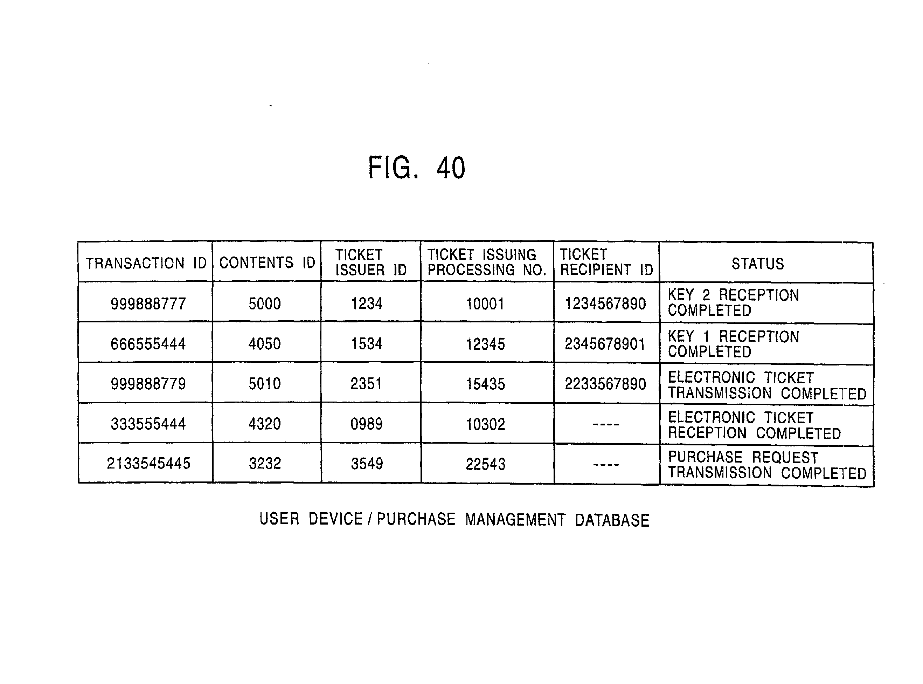

The purchase managing database of the user device 620 in the system which executes the ticket managing configuration shown in Fig. 37 has a data configuration with ticket managing functions. Fig. 40 illustrates the data configuration of the purchase management database. The purchase management database has the various information of: a transaction ID which is generated and issued at the user device at the time of executing contents transactions, a contents ID which is an identifier of contents which are the object of transaction, a ticket issuer ID which is an identifier of a ticket issuer which issues tickets accompanying contents transactions, a ticket issuing processing No. which the ticket issuing server 610 sets, a ticket transmission destination ID serving as an identifier of a transmission destination entity to which the ticket is transmitted, and further, status which indicates the status of processing of contents transactions at the user device. Though described later in detail, the status is updated according to the progress of multiple processes accompanying transactions of contents.

### (User device authentication server)

The user device authentication server (DAS) 630 is the same user device authentication server in the configuration shown in Fig. 1, i.e., the same configuration as the configuration in Fig. 5. The encryption processing data such as encryption keys and the like stored by the user device authentication server 630 include the secret key: KsDAS of the user device authentication server (DAS), the public key certificate Cert_DAS of the user device authentication server (DAS), and the public key KpCA of the certificate authority (CA) serving as the public key certificate issuer authority which is the issuer authority of public key certificates.

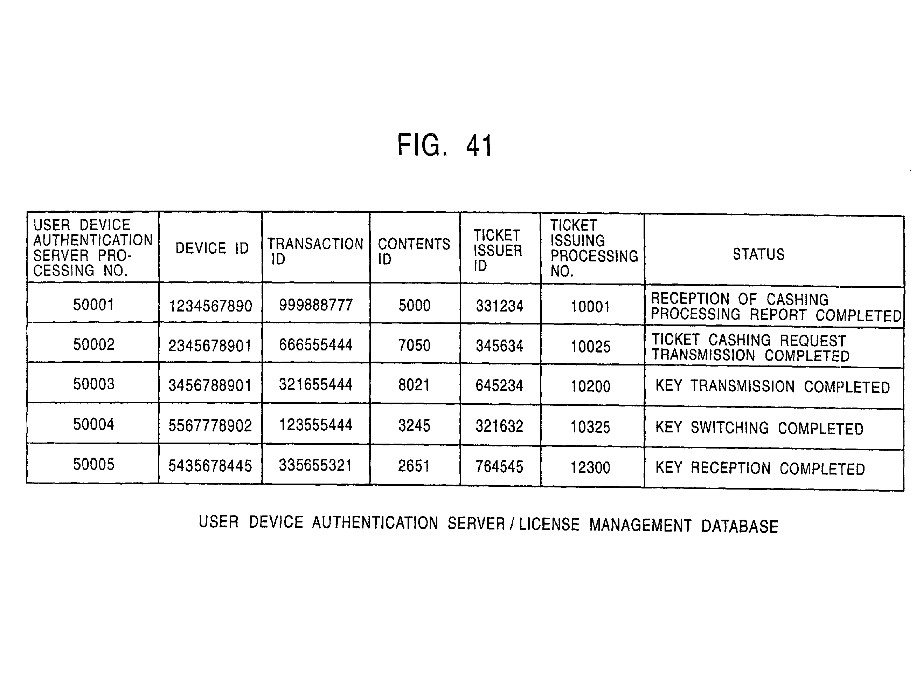

The license managing database of the user device authentication server 630 in the system which executes the ticket managing configuration shown in Fig. 37 has a data configuration with ticket managing functions. Fig. 41 illustrates the data configuration of the license management database. The license management database has the various information of: user device authentication server processing No. serving as a processing identifier internally generated by the processing executed by the user device authentication server (DAS) 630 at the time of contents transactions, a device ID which is an identifier of a user device issuing a contents purchase commission, a transaction ID which is generated and issued at the user device at the time of executing contents transactions, a contents ID which is an identifier of contents which are the object of transaction, a ticket issuer ID which is an identifier of a ticket issuer which issues tickets accompanying contents transactions, a ticket issuing processing No. which the ticket issuing server 610 sets, and further, status which indicates the status of processing of contents transactions at the user device authentication server (DAS). Though described later in detail, the status is updated according to the progress of multiple processes accompanying transactions of contents.

### (Distribution server)

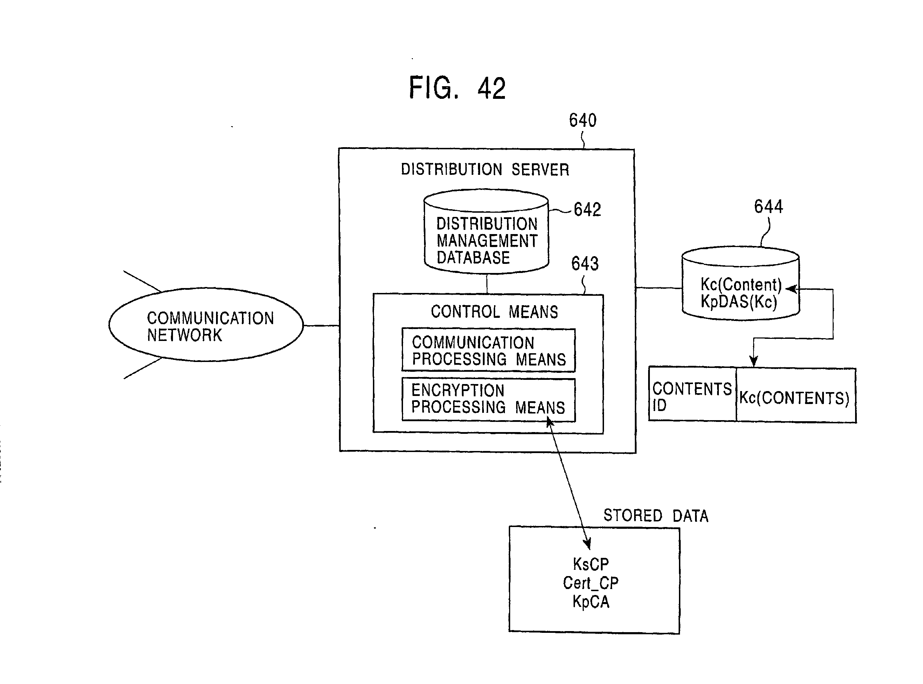

The configuration of the distribution server 640 of the contents distribution system shown in Fig. 37 is shown in Fig. 42. The distribution server 640 is a contents provider (CP), for example, and has Kc (Content) which is encrypted contents data wherein contents that are the object of transaction have been encrypted with a contents key, and a contents database 644 storing an encrypted contents key KpDAS(Kc) which is a contents key Kc that has been encrypted with the public key: KpDAS of the user device authentication server (DAS). Kc (Content) which are the encrypted contents data have contents IDs which are contents identifiers added to each, having a configuration which is identifiable based on the contents ID.

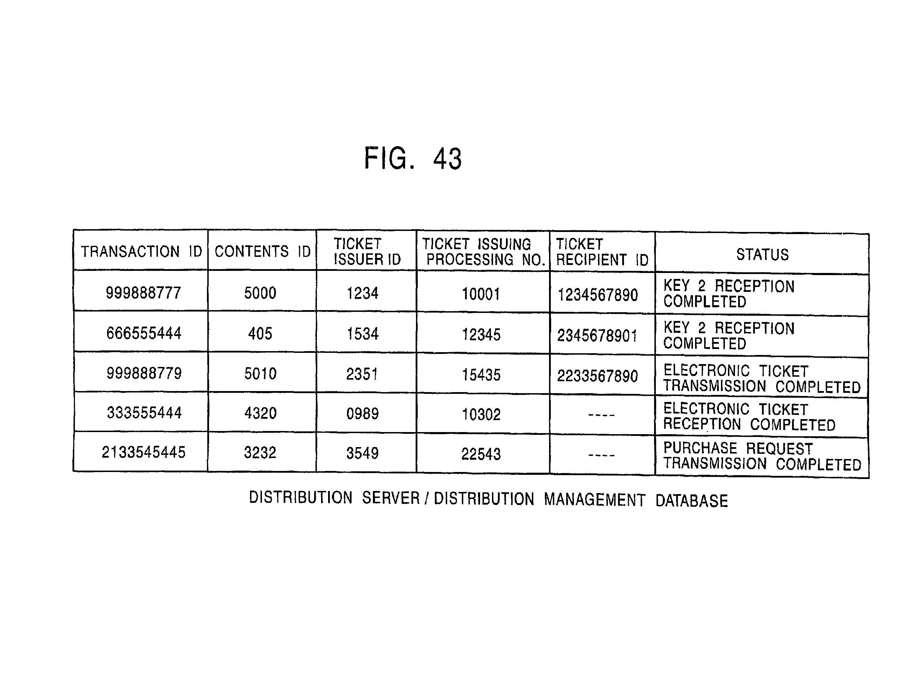

The distribution server 640 further has a distribution management database 642 for managing the distribution management data of the contents. The distribution management database 642 has a data configuration having ticket managing functions. The data configuration of the purchase management database is shown in Fig. 43. The distribution management database 642 has the various information of: a distribution server processing No. which the distribution server 640 sets at the time of executing contents distribution processing, a contents ID which is an identifier of contents which are the object of transaction, a user device ID which is an identifier to which to distribute contents to, a ticket issuer ID which is an identifier of a ticket issuer which issues tickets accompanying contents transactions, a ticket issuing processing No. which the ticket issuing entity sets, and further, status which indicates the status of processing of contents transactions at the distribution server. Though described later in detail, the status is updated according to the progress of multiple processes accompanying transactions of contents.

Further, the distribution server 640 has control means 643 for executing processing for extracting distribution contents from the contents database 644, processing for generating transaction data to be registered in the distribution management database 642 accompanying transactions, processing for communicating with the user device 620 and others, and further executing data encryption processing in communication processing. As shown in Fig. 42, the control means 643 functions as encryption processing means and communication processing means, and are configured of a computer storing, for example, encryption processing programs and communication processing programs. The key data and the like used in the encryption processing executed by the encryption processing means of the control means 643 is securely stored in storing means within the control means. The encryption processing data such as encryption keys and the like stored by the distribution server 640 include the secret key KsCP of the distribution server 640, the public key certificate Cert_CP of the distribution server 640, and the public key KpCA of the certificate authority (CA) serving as the public key certificate issuer authority which is the issuer authority of public key certificates.

The configuration of the control means 643 is the same configuration of the control means configuration described with reference to Fig. 4 earlier, i.e., a configuration having a Central Processing Unit (CPU), ROM (Read Only Memory), RAM (Random Access Memory), a display unit, input unit, storing means, communication interface, and so forth.

### (Ticket exchange server)

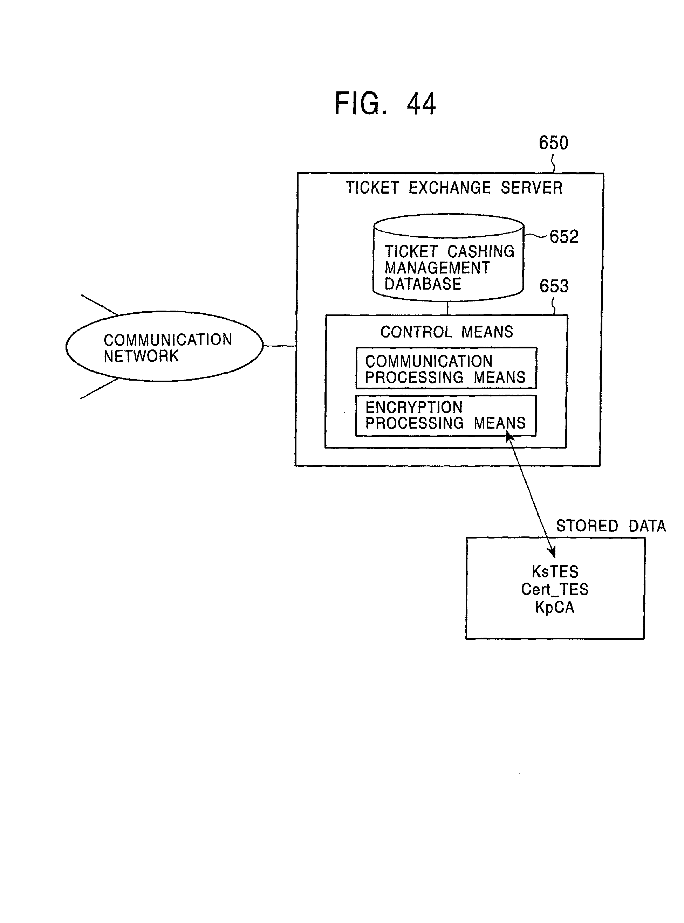

Fig. 44 illustrates the configuration of the ticket exchange server (TES) 650 in the contents distribution system shown in Fig. 37. The ticket exchange server 650 receives electronic tickets from various entities, verifies the received data, and subsequently performs cashing processing based on tickets, such as account transfer processing, or balance changing processing for e-cash or the like, with one specific example allowing a setting wherein the ticket exchange server 650 is a server within a bank which manages bank accounts of the entities.

The ticket exchange server 650 has a ticket exchange management database 652 for managing management data of cashing processing based on tickets issued accompanying contents transactions. Further, this has control means 653 for executing verification of tickets received form the entities, control of the ticket exchange management database, processing of communication with the entities, and further, data encryption processing at the time of the communication processes, and so forth.

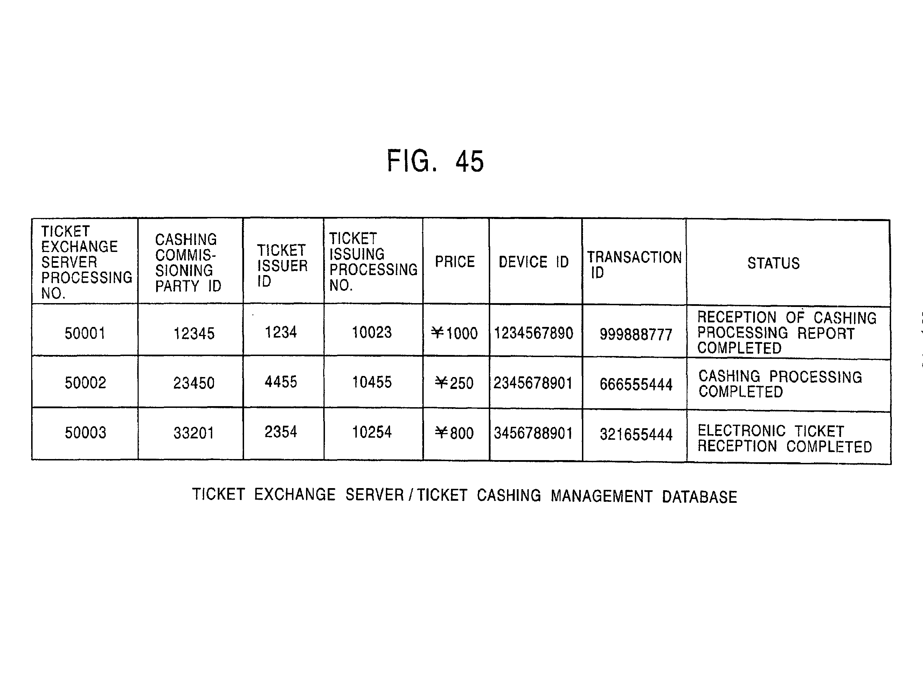

The data configuration of the ticket exchange management database 652 is shown in Fig. 45. The ticket exchange management database 652 has the various information of: a ticket exchange server processing No. serving as an identification number which is internally generated at the time of the ticket exchange server executing ticket cashing processing according to received tickets, cashing commissioning ID serving as a requesting entity identifier which has requested cashing based on tickets, a ticket issuer ID serving as an identifier of a ticket issuer for issuing tickets accompanying contents transactions, a ticket issuing processing No. which the ticket issuing server 610 sets, the cashing monetary amount based on the ticket, a user device ID which is an identifier of a user device which is the entity purchasing contents, a transaction ID generated at the user device at the time of executing contents transactions, and further, status which indicates the status of cashing processing at the ticket exchange server. Though described later in detail, the status is updated according to the progress of multiple processes accompanying transactions of contents.

Further, the ticket exchange server 650 has control means 653 for executing processing for generating data for the ticket exchange management database 652, updating processing, processing for verifying received tickets, processing for communicating with the entities, and further, executing processing for encrypting data in communication processing. As shown in Fig. 44, the control means 653 functioning as encryption processing means and communication processing means, and the control means 653 are configured of a computer storing, for example, encryption processing programs and communication processing programs. The key data and the like used in the encryption processing executed by the encryption processing means of the control means 653 is securely stored in storing means within the control means. The encryption processing data such as encryption keys and the like stored by the ticket exchange server 650 include the secret key KsTES of the ticket exchange server 650, the public key certificate Cert_TES of the ticket exchange server 650, and the public key KpCA of the certificate authority (CA) serving as the public key certificate issuer authority which is the issuer authority of public key certificates.

The configuration of the control means 653 is the same configuration of the control means configuration described with reference to Fig. 4 earlier, i.e., a configuration having a Central Processing Unit (CPU), ROM (Read Only Memory), RAM (Random Access Memory), a display unit, input unit, storing means, communication interface, and so forth.

### [Contents purchasing processing]

Next, returning to Fig. 37, description will be made regarding the processing for a user device to issue a contents purchase request to a ticket issuer server and save the contents in a usable state in the user device, on up to the contents charges being distributed (cashed) based on tickets. Processing proceeds in the order of numbers (1) through (32) in Fig. 37. The details of the processing will be described in order of the numbers.

### (1) Mutual authentication

The user device 620 which is attempting to purchase contents performs mutual authentication processing with the ticket issuer server 610. The mutual authentication processing is the processing described with reference to Fig. 12 or Fig. 13. In the mutual authentication processing, the session key generated in the mutual authentication processing is used to execute encryption of transmitted data as necessary and perform data communication.

### (2) Generate transaction ID and purchase request data, and

### (3) Transmit purchase request data

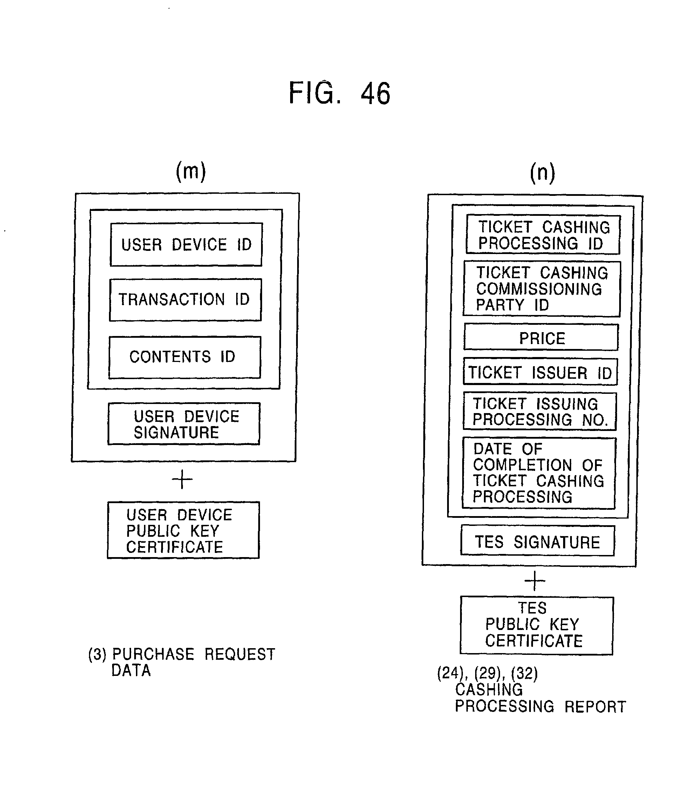

Upon success of mutual authentication between the ticket issuer server 610 and user device 620, the user device 620 generates contents purchase request data. Fig. 46(m) illustrates the configuration of the purchase request data. The purchase request data has the data of: a device ID which is an identifier of the user device 620 which is the requester of the contents purchase, a transaction ID which the encryption processing means of the user device 620 generates based on a random number for example, as an identifier for contents transactions, and further a contents ID serving as an identifier of the contents which the user device desires to purchase, with the electronic signature of the user device affixed to this data. Further, the public key certificate of the user device is attached to the purchase request data for signature verification, as necessary.

### (4) Verify received data

Upon receiving the purchase request data shown in Fig. 46(m) from the user device 620, the ticket issuer server 610 executes the verification processing of the received data. The details of the verification processing are as described with reference to Fig. 15 earlier.

### (5) Billing processing

### (6) Issue electronic ticket

### (7) Transmit electronic ticket

The ticket issuing server 610 next executes billing processing relating to contents transactions, and electronic ticket issuing processing. These processes are executed as processing for issuing electronic tickets within the user transaction monetary amount limit set based on a pre-registered user account or e-cash account or the like. The issued electronic tickets are transmitted to the user device 620.

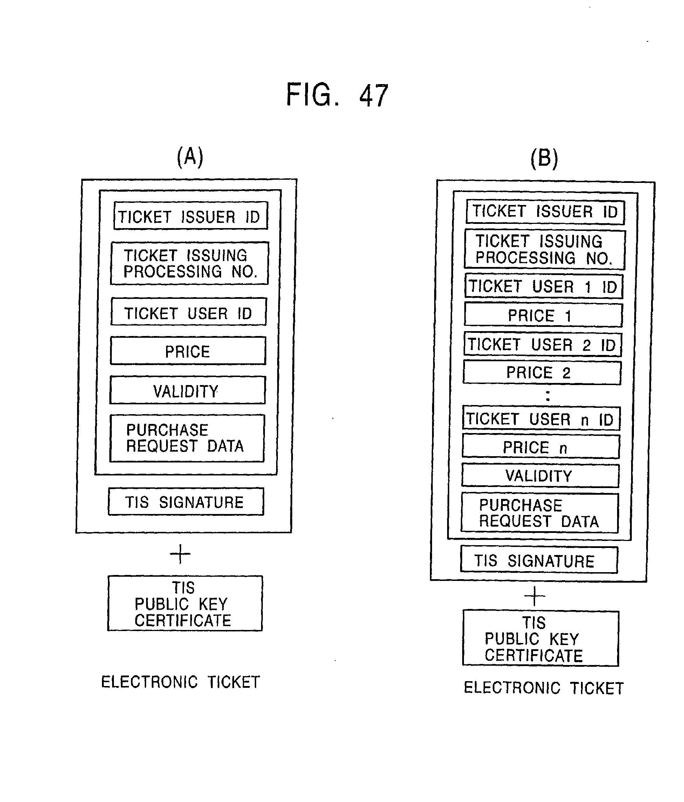

Fig. 47 shows an example of the configuration of an electronic ticket. Fig. 47(A) is a data configuration in the event that the charges distribution destination (charges receiving entity) based on the electronic ticket is singular, and contains a ticket issuer ID, a ticket issuing processing No., a user device ID indicating the charges distribution recipient (entity) based on the electronic ticket, the cashing monetary amount based on the electronic ticket, the valid period of the electronic ticket, i.e., the term through which a charges receiving entity can execute cashing (charges settlement) processing based on the ticket, and further, purchase request data (see Fig. 46(m)) transmitted from the user device to the ticket issuer server. Further, data such as the ticket issuing date and the like may be added. The electronic signature of the ticket issuer server 610 is added to this data. Further, the public key certificate of the ticket issuer server is added to the electronic ticket as necessary, for signature verification.

Fig. 47(B) is a data configuration in the event that the charges distribution destinations (entities) based on the electronic ticket are multiple, with multiple ticket user IDs (1 through n) stored, and monetary amounts 1 through n indicating the charges to be distributed based on the electronic ticket being stored for each ticker user ID. The entities which receive charges based on tickets receive the monetary amount corresponding to their own IDs.

With the processing example shown in Fig. 37, the ticket issuer server 610 issues electronic tickets for contents providers (CP) which manage distribution servers, and electronic tickets for user device authentication servers (DAS). The destination of issuing of these tickets differ according to the contents, and the contents copyright holders and the like may be included. The ticket issuer server has a table determining the ticket issuing destination and the distribution charges, based on the contents ID, and generates tickets upon obtaining the contents issuing destinations and the distribution charges data from the table, based on the contents ID contained in the contents purchase request from the user device.

### (8) Verify received data

Upon receiving a ticket from the ticket issuer server 610, the user device 620 executes verification processing of the ticket. This verification processing is processing the same as the processing flow in the above-described Fig. 15, with the user device 620 executing verification of the public key certificate of the ticket issuer server using the public key KpCA of the issuer authority (CA) first, and then next executing verification of the signature of the ticket using the public key KpTIS that has been extracted from the public key certificate.

### (9) Mutual authentication

### (10) Transmit electronic ticket (for CP)

Next, the user device 620 accesses the distribution server 640, and executes mutual authentication. Upon mutual authentication being established, the user device 620 transmits an electronic ticket for the distribution server (for CP) to the distribution server 640.

### (11) Verify received data

### (12) Transmit encrypted contents and encrypted contents key

Upon verification of the electronic ticket (for CP) being completed at the distribution server, and judgment made that this is an authorized electronic ticket with no data tampering, the distribution server 640 transmits the encrypted contents and an encrypted contents key to the user device. These are data containing the encrypted contents: Kc (content) encrypted with the contents key, and encrypted contents key data: KpDAS(Kc) wherein the contents key: Kc has been encrypted with the public key of the user device authentication server DAS 630.

### (13) Verify received data

### (14) Mutual authentication

### (15) Transmit electronic ticket (for DAS) and encrypted contents key switching request

Upon receiving the encrypted contents and an encrypted contents key from the distribution server 640, the user device 620 executes verification processing of the data. Following data verification, the user device 620 accesses the user device authentication server 630, and executes mutual authentication processing. Upon mutual authentication being established, the user device 620 transmits an electronic ticket (for DAS) and encrypted contents key switching request to the device authentication server 630. The key switching request is the contents key Kc encrypted with the public key of the user device authentication server that has been received from the distribution server 640 earlier. This is a request for processing to make the encrypted contents key KpDAS(Kc) a contents key encrypted with the public key KpDEV of the user device, i.e., KpDEV(Kc), and is the same as the switching processing described with reference to Fig. 1.

### (16) Verify received data

### (17) Encrypted contents key switching processing

Upon receiving the electronic ticket (for DAS) and encrypted contents key KpDAS(Kc) switching request from the user device 620, the user device authentication server 630 executes verification processing of the electronic ticket (for DAS) and encrypted contents key switching request. Once the verification has ended and judgment being made that the electronic ticket is an authorized electronic ticket with no data tampering, and that the key switching request is authorized, the user device authentication server 630 decrypts the data KpDAS(Kc) wherein the contents key: Kc has been encrypted with the public key KpDAS of the user device authentication server (DAS) 630 to obtain the contents key Kc, and further generates an encrypted contents key: KpDEV(Kc) wherein the contents key Kc is encrypted with the public key: KpDEV of the user device. That is to say, key switching processing is executed in the order of KpDAS(Kc) → Kc → KpDEV(Kc). This processing is processing following the flow shown in Fig. 16 described earlier.

### (18) Transmit encrypted contents key

### (19) Verify received data

### (20) Saving processing

The user device authentication server 630 transmits the encrypted contents key KpDEV(Kc) generated by key switching to the user device 620. Upon receiving the encrypted contents key KpDEV(Kc) from the user device authentication server 630, the user device 620 executes verification processing for received data, and following the verification, decrypts the encrypted contents key KpDEV(Kc) using its own secret key Ks DEV, and further generates the encrypted contents key: Ksto(Kc) by encryption using the storing key Ksto of the user device, and stores this in the storing means of the user device 620. At the time of using contents, the encrypted contents key: Ksto(Kc) is decrypted using the stored key Ksto and the contents key Kc is extracted, and the extracted contents key Kc is used to execute decryption processing of the encrypted contents Kc (Content), thereby reproducing and executing the contents (Content).

### (21) Mutual authentication

### (22) Transmit electronic ticket (for CP)

Following distribution of the encrypted contents to the user device 620, the distribution server 640 accesses the ticket exchange server 650, and executes mutual authentication processing. Upon mutual authentication being established, the distribution server 640 transmits an electronic ticket (for CP) for the distribution server to the ticket exchange server 650.

### (23) Received data verification, cashing processing

At the ticket exchange server 650, upon verification of the electronic ticket (for CP) being completed and judgment being made that this is an authorized electronic ticket with no data tampering, the ticket exchange server 650 executes cashing processing based on the received electronic ticket (for CP). The cashing processing is performed by transferring the monetary amount set in the electronic ticket (for CP) to a managed account or e-cash account or the like of the contents provider (CP) managing the distribution server that has been registered beforehand for example, from a managed user account of the user device. Or, an arrangement may be made wherein monetary amount set in the ticket is transferred from a ticket issuing server managed account wherein the ticket issuing server has already received as a pre-payment from the user, to the managed account of the contents provider (CP). Further, the ticket exchange server 650 verifies the valid period stored in the ticket, and executes the charges settlement processing based on the ticket, under the condition that confirmation has been made that the ticket is within the valid period.

### (24) Report cashing processing report

At the ticket exchange server 650, upon cashing based on the electronic ticket (for CP) being completed, the ticket exchange server 650 transmits a report to the distribution server 640 indicating that the cashing processing has finished.

Fig. 46(n) shows a configuration example of a cashing processing report. The cashing processing report has data such as a ticket cashing processing ID which is an identifier of each ticket cashing processing, a cashing commissioning ID as an identifier of a requesting entity requesting cashing based on the ticket, the monetary amount of cashing based on the ticket, a ticket issuer ID which is an identifier of the ticket issuer which has issued the ticket accompanying contents transactions, a ticket issuing processing No. set by the ticket issuing server 610, the ticket cashing processing completed date when the cashing processing was executed at the ticket exchange server 650, and so forth, with the electronic signature of the ticket exchange server 650 affixed thereto. Further, the public key certificate of the ticket exchange server is added to the cashing processing report as necessary, for signature verification.

### (25) Verify received data

Upon receiving the cashing processing report from the ticket exchange server 650, the distribution server 640 executes verification processing of the cashing processing report. In the event that the data verification shown the report to be authorized, completion of charges distribution accompanying contents transactions to the contents provider which is the managing entity of the distribution server is confirmed.

### (26) Mutual authentication

### (27) Transmit electronic ticket (for DAS)

### (28) Received data verification, cashing processing

### (29) Report cashing processing report

### (30) Verify received data

Processing the same as the processing (21) through (25) between the above-described distribution server 640 and ticket exchange server 650 is also executed between the user device authentication server 630 and the ticket exchange server 650, based on the electronic ticket (for DAS).

### (31) Mutual authentication

### (32) Report cashing processing report

### (33) Verify received data

In the event of having executed cashing processing based on tickets received from the entities, the ticket exchange server 650 performs mutual authentication with the ticket issuer server 610, and then transmits a cashing processing report (see Fig. 46(n)) the same as sent to the entities, to the ticket issuer server 610. The ticket issuer server 610 issues a verification of the cashing processing report received from the ticket exchange server 650, thus confirming that the cashing processing relating to the issued tickets has been completed.

### (Transition status in the devices)

In this series of processing relating to contents transactions with the entities such as the ticket issuer server 610 and the like shown in Fig. 37, the next processing is determined according to the status indicating the processing state. The status is managed for each of the contents transactions, in the ticket issuing management database shown in Fig. 39, the purchase management database of the user device shown in Fig. 40, and so forth, for example.

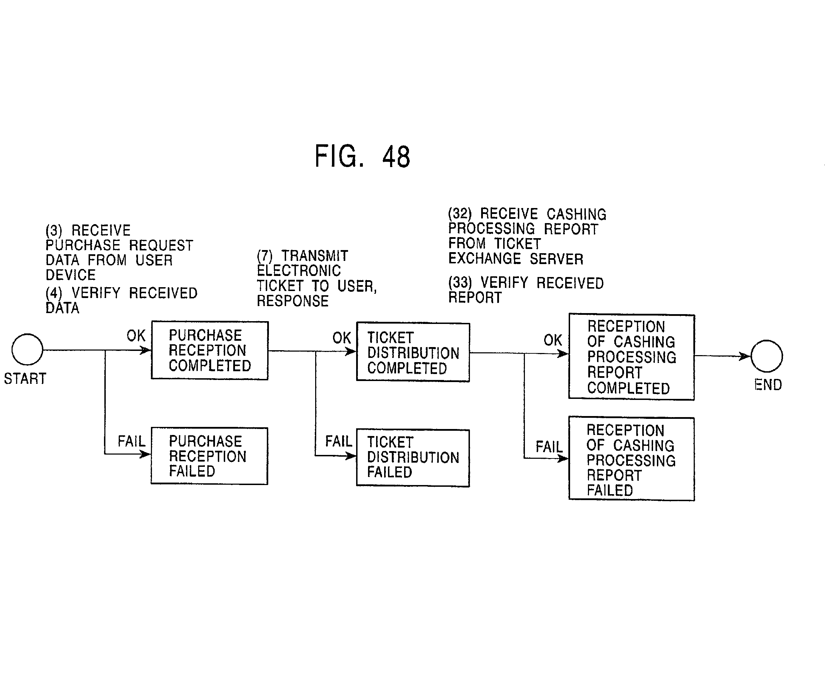

First, the status transition of the ticket issuer server 610 will be described with reference to Fig. 48. Processing starts for the ticket issuer server 610 by receiving contents purchase request data from the user device 620 (corresponding to process (3) in Fig. 37). The ticket issuer server 610 verifies the received data from the user device 620, and in the event that the verification succeeds, sets the status to "purchase reception completed", while in the event that judgement is not made from the data verification that the purchase request is valid, either the processing is cancelled, or similar processing, purchasing reception processing in this case, is repeated a predetermined number of times, following which the processing is cancelled, and the status is set to "purchase reception failed". The flow proceeds to the next step only in the event that the status is "purchase reception completed".

Upon the status making transition to "purchase reception completed", next, the ticket issuer server 610 transmits the electronic ticket to the user device 620 (corresponding to process (7) in Fig. 37), and receives a reception response (response) from the user device, and sets the status to "ticket distribution completed". In the event that no response is received, either the processing is cancelled, or similar processing, transmission processing of the electronic ticket in this case, is repeated a predetermined number of times, following which the processing is cancelled, and the status is set to "ticket distribution failed". The flow proceeds to the next step only in the event that the status is "ticket distribution completed".

In the event that the status makes transition to "ticket distribution completed", next, the ticket issuer server 610 receives the cashing processing report from the ticket exchange server, and executes verification of the report (corresponding to processes (32) and (33) in Fig. 37). In the event that the verification is successful, the status is set to "cashing processing report reception completed", and the processing ends. In the event that judgment is not made that the report is authorized, either the process is canceled, or the same processing, report reception and verification processing in this case, is repeated a predetermined number of times, following which the processing is cancelled, and the status is set to "cashing report reception failed". The ticket issuer server 610 executes such state transition for each contents transaction.

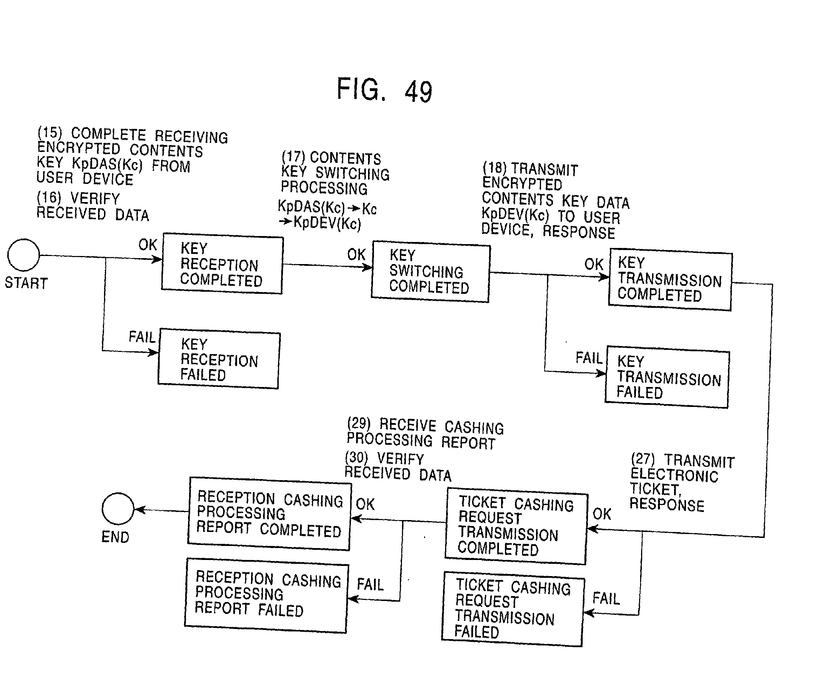

Next, transition status at the user device authentication server 630 will be described with reference to Fig. 49. The user device authentication server 630 starts processing by receiving an encrypted contents key KpDAS(Kc) from the user device 620 (corresponding to process (15) in Fig. 37). The user device authentication server 630 verifies the received data from the user device 620 including the electronic ticket (DAS), and in the event that the verification is successful, sets the status to "key reception completed", and in the event that judgement is not made from the data verification that the data is authorized, either the processing is canceled, or the same processing, reception processing of the encrypted contents key data (user device) in this case, is repeated a predetermined number of times, following which the processing is canceled, and the status is set to "key reception failed". Only in the event that the status is "key reception completed", does the flow proceed to the next step.

Upon the status making transition to "key reception completed", next, the user device authentication server 630 executes contents key switching processing (corresponding to process (17) in Fig. 37), and in the event that the key switching processing is successful, the status is set to "key switching completed". There is no assumption of a case wherein key switching would fail, so the only status transition that exists here is "key switching completed".

In the event that the status makes transition to "key switching completed", next, the user device authentication server 630 transmits encrypted contents key data (DAS) to the user device 620 (corresponding to process (18) in Fig. 37), and receives a data reception response from the user device 620. In the event that the data reception response is received, the status is set to "key transmission completed", while in the event that there is no reception of the data reception response, either the processing is canceled, or a similar processing, transmission processing of the encrypted contents key data (DAS) in this case, is repeated a predetermined number of times, following which the processing is canceled, and the status is set to "key transmission failed".

In the event that the status makes transition to "key transmission completed", next, the user device authentication server 630 transmits an electronic ticket (for DAS) to the user device 620 (corresponding to process (27) in Fig. 37), and receives a data reception response from the user device 620. In the event that the data reception response is received, the status is set to "ticket cashing request transmission completed", while in the event that there is no reception of the data reception response, either the processing is canceled, or the same processing, transmission processing of the ticket cashing request in this case, is repeated a predetermined number of times, following which the processing is canceled, and the status is set to "ticket cashing request transmission failed".

In the event that the status makes transition to "ticket cashing request transmission completed", next, the user device authentication server 630 receives the cashing processing report from the ticket exchange server 650, and executes verification processing of the report (corresponding to the processes (29) and (30) shown in Fig. 37). In the event that the verification is successful, the status is set to "cashing processing report reception completed", and the processing ends. In the event that there is no judgment from the report verification that the report is authorized, either the processing is canceled, or similar processing is executed, repeating the report reception and verification processing a predetermined number of times in this case, following which the processing is canceled, and the status is set to "cashing report reception failed". The user device authentication server 650 executes such state transition for each contents transaction.

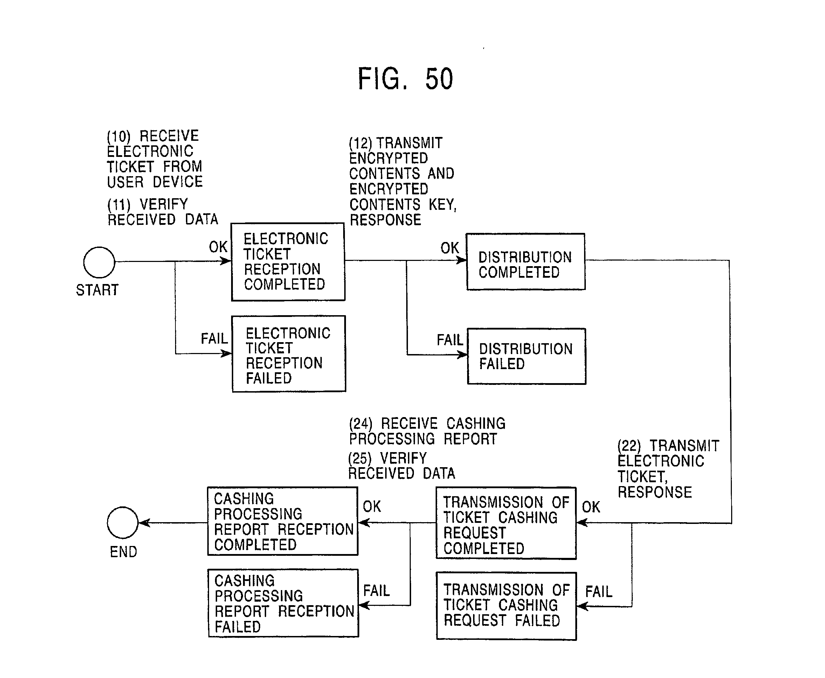

Next, status transition to the distribution server 640 will be described with reference to Fig. 50. The processing starts by the distribution server 640 receiving an electronic ticket (for CP) from the user device 620 (corresponding to the process (10) in Fig. 37). The distribution server 640 verifies the data received from the user device 620, and in the event that verification is successful, sets the status to "electronic ticket reception completed", and in the event that judgement is not made from the verification that the data is authorized, or the like, either the processing is canceled, or the same processing, ticket reception processing in this case, is repeated a predetermined number of times, following which the processing is canceled, and the status is set to "electronic ticket reception failed". The flow proceeds to the next step only in the event that the status is "electronic ticket reception completed".

In the event that the status makes transition to "electronic ticket reception completed", next, the distribution server 640 transmits the encrypted contents and encrypted contents key data KpDAS(Kc) to the user device 620 (corresponding to the processing (12) in Fig. 37), and receives the data reception response from the user device 620. In the event of receiving the data reception response, the status is set to "distribution completed", and in the event that there is no reception of data reception response, either the processing is canceled, or the same processing, transmission processing of the encrypted contents and encrypted contents key data KpDAS(Kc) in this case, is repeated a predetermined number of times, following which the processing is canceled, and the status is set to "distribution failed".

Upon the status making transition to "distribution completed", next, the distribution server 640 transmits an electronic ticket (for CP) to the ticket exchange server 650 (corresponding to the process (22) in Fig. 37), and receives a data reception response from the ticket exchange server 650. In the event of receiving the data reception response, the status is set to "ticket cashing request transmission completed", and in the event that there is no reception of the data reception response, either the processing is canceled, or the same processing, transmission processing of the ticket cashing request in this case, is repeated a predetermined number of times, following which the processing is canceled, and the status is set to "ticket cashing request failed".

In the event that the status makes transition to "ticket cashing request transmission completed", next, the distribution server 640 receives a cashing processing report from the ticket exchange server 650, and executes verification processing of the report (corresponding to processes (24) and (25) in Fig. 37). In the event that the verification is successful, the status is set to "cashing processing report reception completed", and the processing ends. In the event that judgement is not made from the report verification that the report is authorized, or the like, either the processing is canceled, or the same processing, report reception and verification processing in this case, is repeated a predetermined number of times, following which the processing is canceled, and the state is set to "cashing report reception failed". The distribution server 640 executes such state transition for each contents transaction.

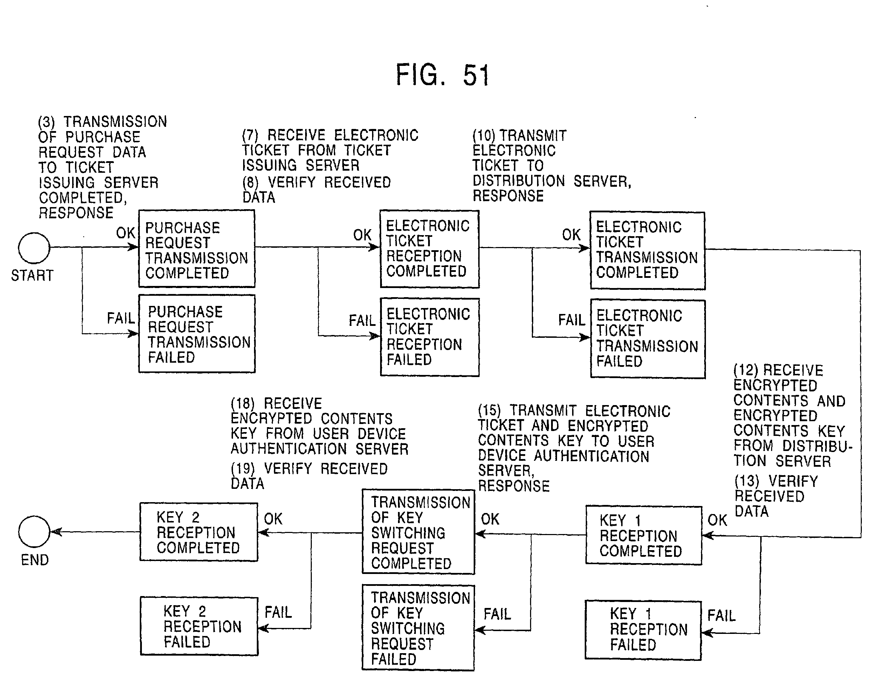

Next, transition of status at the user device 620 will be described with reference to Fig. 51. The processing starts by the user device 620 first transmitting purchase request data to the ticket issuer server 610 (corresponding to the process (3) in Fig. 37). The user device 620, upon receiving a reception completed response for the purchase request data to the ticket issuer server 610, sets the status to "purchase request transmission completed", and in the event that there is no response of reception completed received from the ticket issuer server 610, either the processing is canceled, or the same processing, the purchase request transmission processing in this case, is repeated for a predetermined number of times, following which the processing is canceled, and the status is set to "purchase request transmission failed". The flow proceeds to the next step only in the event that the status is "purchase request transmission completed".

In the event that the status makes transition to "purchase request transmission completed", next the user device 620 receives an electronic ticket from the ticket issuer server 610 (corresponding to the processing (7) and (8) in Fig. 37), and verifies the received data. In the event that verification of the ticket from the ticket issuer server 610 is successful, the status is set to "electronic ticket reception completed", and in the event that judgement is not made from the data verification that the ticket is authorized, or the like, either the processing is canceled, or the same processing, the ticket reception processing in this case, is repeated a predetermined number of times, following which the processing is canceled, and the status is set to "electronic ticket reception failed". Only in the event that the state is "electronic ticket reception completed", does the flow proceed to the next step.

In the event that the status makes transition to "electronic ticket reception completed", next, the user device 620 transmits the electronic ticket to the distribution service 640 (corresponding to the process (10) in Fig. 37), and receives the data reception response. In the event that the data reception response is received, the status is set to "electronic ticket transmission completed", and in the event that the data reception response is not received, either the processing is canceled, or the same processing, the ticket transmission processing in this case, it is repeated a predetermined number of times, following which the processing is canceled, and the status is set to "electronic ticket transmission failed". Only in the event that the status is "electronic ticket transmission completed", does the flow proceed to the next step.

Upon the status making transition to "electronic ticket transmission completed", next, the user device 620 receives the encrypted contents and encrypted contents key KpDAS(Kc) from the distribution server 640, and executes data verification (corresponding to the processes (12) and (13) in Fig. 37). In the event that data verification is successful, the status is set to "key 1 reception completed", and in the event that data verification is not successful, either the processing is canceled, or the same processing, key data reception processing in this case, is repeated a predetermined number of times, following which processing is canceled, and the status is set to "key 1 reception failed".

In the event that the status makes transition to "key 1 reception completed", next, the user device 620 transmits the electronic ticket (for DAS) and the encrypted contents key KpDAS(Kc) to the user device authentication server 630 (corresponding to process (15) in Fig. 37), and receives a data reception response. In the event that the data reception response is received, the data is set to "key switching request transmission completed", and in the event that the data reception response is not received, either the processing is canceled, or the same processing, transmission processing of the electronic ticket (for DAS) and the encrypted contents key KpDAS(Kc) in this case, is repeated a predetermined number of times, following which the processing is canceled, the status is set to "key switching request transmission failed". Only in the event that the status is "key switching request transmission completed", does the flow proceed to the next step.

In the event that the status makes transition to "key switching request transmission completed", next, the user device 620 receives the encrypted contents key KpDEV(Kc) from the user device authentication server 630, and executes data verification (corresponding to processes (18) and (19) in Fig. 37). In the event that the data verification is successful, the status is set to "key 2 reception completed", the processing ends. In the event that the data verification is not successful, or the like, either the processing is canceled, or the same processing, key data reception processing in this case, is repeated a predetermined number of times, following which the processing is canceled, and the status is set to "key 2 reception failed".

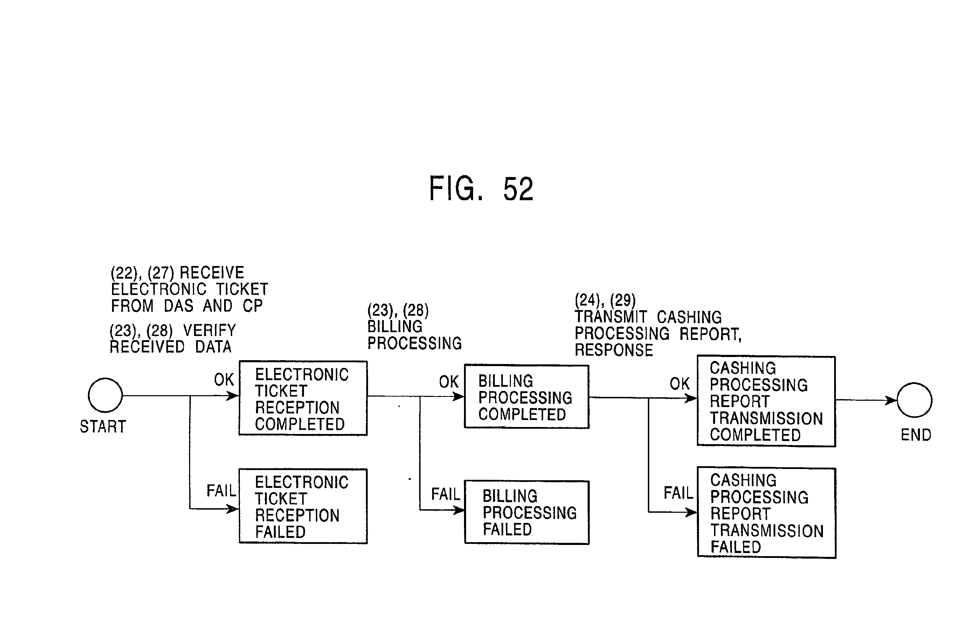

Next, transition of the status of the ticket exchange server 650 will be described with reference to Fig. 52. The processing starts by the ticket exchange server 650 receiving an electronic ticket from an entity which has distribution rights from the electronic ticket (corresponding to processes (22) and (27) in Fig. 37. The ticket exchange server 650 verifies the received ticket, and in the event that the verification is successful, sets the status to "electronic ticket reception completed", and in the event that judgement is not made from the data verification that the data is authorized, or the like, either the processing is canceled, or the same processing, ticket reception processing in this case, is repeated a predetermined number of times, following which the processing is canceled, and the status is set to "electronic ticket reception failed". Only in the event that the status is "electronic ticket reception completed", does the flow proceed to the next step.

In the event that the status makes transition to "electronic ticket reception completed", next, the ticket exchange server 650 executes cashing processing based on the electronic ticket. The cashing processing is performed by transferring a monetary amount set in the electronic ticket (for CP) to a managed account or e-cash account or the like of the profits distribution entity that has been registered beforehand, for example, a contents provider (CP) managing the distribution server, from a managed user account of the user device, or the monetary amount set in the ticket is transferred from a ticket issuing server managed account wherein the ticket issuing server has already received as a pre-payment from the user, to the managed account of the contents provider (CP). In the event that the cashing processing is completed, the status is set to "cashing processing completed", and in the event that the cashing processing could not be executed, the processing is canceled, and the status is set to "cashing processing failed".

In the event that the status makes transition to "cashing processing completed", next the ticket exchange server 650 transmits the cashing processing report to the entity which is sent the ticket thereto (corresponding to the processes (24) and (29) in Fig. 37), and receives the data reception response from the entities. In the event that the data reception response is received, the status is set to "cashing report transmission completed", and the processing ends. In the event that there is no reception of the data reception response, either the processing is canceled, or the same processing, processing for transmitting the cashing report in this case, is repeated a predetermined number of times, following which the processing is canceled, and the status is set to "cashing report transmission failed". The ticket exchange servers 650 execute such status transition for each contents transaction.

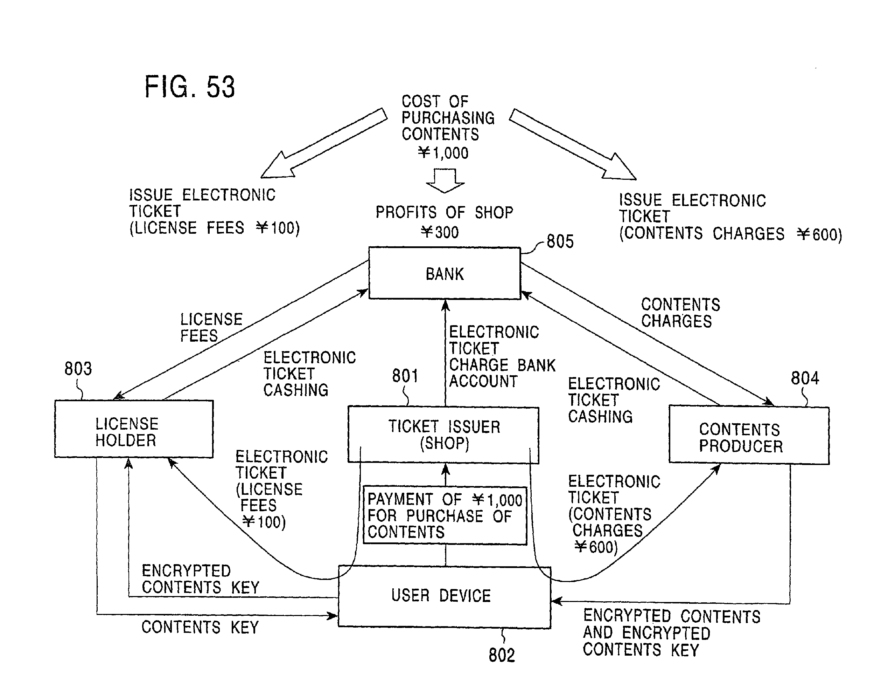

Fig. 53 illustrates a specific configuration example for performing settlement processing of contents charges by circulation of tickets issued by ticket issuers. In the event there is a contents purchase request from the user device 802 to a ticket issuer 801, the ticket issuer executes billing processing and electronic ticket issuing processing relating to the transaction of the contents. Such processing is executed as processing for issuing an electronic ticket within the transaction monetary amount to limit of the user set based on a user account or e-money account registered beforehand, for example. In the example shown in Fig. 53, the ticket issuer issues an electronic ticket worth 1000 yen as the price for purchasing contents, to the user device.

In the example in Fig. 53, the distribution of the contents charges 1000 yen is, as shown at the upper part of the figure, set such that the shop which is the ticket issuer receives 300 yen as shop profits as sales fees, the license holder (user device authentication server) 803 which is the system operator for contents distribution receives 100 yen as license fees, and a contents producer (distribution server) receives 600 yen as contents charges.

The ticket issuer 801 which has received the purchase request from the user device, obtains setting information of contents charges distribution ratio from the contents ID, and the event that there are multiple charges distribution recipients, issues electronic tickets for each. In the example shown in Fig. 53, an electronic ticket set with 100 yen in distribution fees as license fees to the license holder 803, and the ticket with 600 yen in contents charges to the contents producer, are distributed to the user device 802. The signature of the ticket issuer is generated in the electronic tickets to be distributed.

The user device 802 transmits the electronic tickets to the license holder 803 of the contents producer 804, respectively. The license holder 803 and contents producer 804 each verify the received electronic tickets, and following confirmation that the tickets are authorized, transmit the tickets to a bank (ticket exchange server) 805, execute signature verification at the exchange server, and upon confirmation that the tickets are authorized, cashing of the distribution charges is performed for each (e.g., transfer processing). Note that the signature verification of the tickets executed at the bank (ticket exchange server) is a verification of the signature of the ticket issuer generated with regard to the electronic tickets. Also, and verification of the user device signature of the purchase request data contained in the ticket, is also executed.

Further, an arrangement may be made wherein the contents producer and license holder, which are the ticket transmitting entities, generate signatures with regard to the transmitted data including the electronic tickets, and the bank (ticket exchange server) executes signature verification with regard to these signatures, as well.

With the configuration in Fig. 53, the ticket issuer (shop) 801 itself also sends its own electronic ticket worth 300 yen for the contents charges to the bank (ticket exchange server) 805, and cashes it.

Due to the cashing processing of these electronic tickets, distribution of contents charges is executed in a sure manner. Following verification of the electronic tickets received from the user device 802, the contents producer 804 transmits the encrypted contents encrypted with the contents key Kc, and the encrypted contents key KpDAS(Kc) wherein the contents key Kc is encrypted with the public key KpDAS of the license holder (user device authentication server), to the user device 802.

The user device 802 transmits the encrypted contents key KpDAS(Kc) received from the contents producer 804, along with electronic ticket (DAS), to the license holder 803. Following verification of electronic ticket, the license holder executes key switching processing of the encrypted contents key KpDAS(Kc), encrypts the contents key with the public key KpDEV of the user device, and generates KpDEV(Kc) which is transmitted to the user device 802. The user device 802 can decrypt KpDEV(Kc) with its own secret key KsDEV, so as to obtain the contents key Kc. Also, in the event of storing the contents key in the device, this is encrypted with its own stored key Ksto and saved.

As described above, due to the configuration wherein a ticket issued by a ticket issuer is received, encrypted contents and an encrypted contents key are transmitted to the user device by a distribution server (e.g., contents producer) under the condition that the ticket is authorized, while on the other hand, a license holder (user authentication device) also receives an electronic ticket in the same manner, and performs key switching of the encrypted contents under the condition that the ticket is authorized, and distributes this to the user device, thereby executing distribution of contents charges in an accurate manner based on electronic tickets, and enabling usage of contents at the user device.

### [3. Contents distribution management by log collection server]

Next, a contents distribution system wherein the actual distribution of contents can be accurately known by user devices accumulating the fact of purchasing contents in the form of a log in the user device, and the system operator performing log collection, will be described.

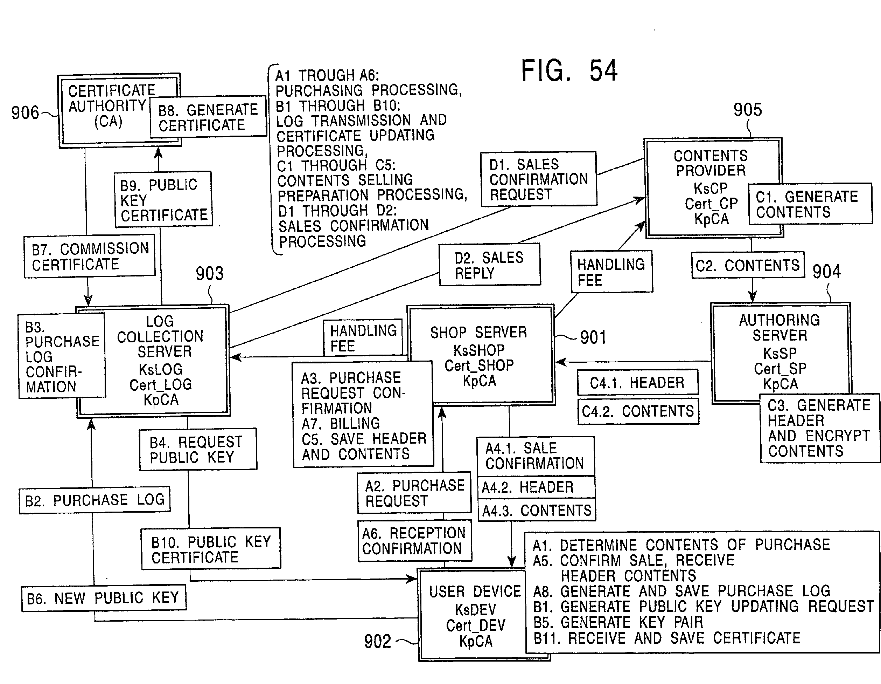

Fig. 54 illustrates the system configuration of a contents distribution system having a log collection system. The contents distribution system shown in Fig. 54 has as the primary components thereof, a shop server (SHOP) 901 for performing contents distribution services to user devices, a user device (DEVICE) 902 for receiving contents distribution from the shop server 901, and a log collection server 903 functioning as a log managing server for managing authorized contents transactions, and further, has an a contents provider 905 serving as a provider of contents, and an authorizing server 904 for generating various types of information such as contents usage restriction information and the like with regard to the contents provided from the contents provider, as a header, and providing this to the shop server, and further has a certificate authority (CA) for issuing public key certificates (Cert_xxx) to the entities.

In the configuration shown in Fig. 54, the contents provider 905 and authorizing server 904 are an example of an entity configuration for providing contents which are the object of distribution, to a shop server 901, and this is not restricted to the form shown in Fig. 54, rather, distributed contents are provided to the shop server in various other forms, as well. For example, contents may be directly provided to the shop server from a contents provider, or there may be cases where contents are provided to the shop server via multiple service providers from the copyright holder which is the holder of the contents.

The configuration example shown in Fig. 54 illustrates a contents provider 905 as a representative example of an entity which has rights to obtain a part of contents sales, in order to facilitate understanding of the description of the present invention. In the configuration example shown in Fig. 54, the contents provider 905 can obtain its own distribution profits in an accurate manner, by confirming the contents sales data managed based on the logs collected by the log collection server 903. In the event that there are other entities having profit distribution rights, these entities join the configuration shown in Fig. 54, and can confirm their own distribution profits based on the logs collected by the log collection server 903.

In the configuration example in Fig. 54, the shop server 901 is of the same configuration as those described with reference to Fig. 1 and the others, having a control unit capable of encryption processing and communication processing, executing status management accompanying contents transaction processing, and executing the transaction processing sequence at the devices. Also, the contents provider 905 and authorizing server 904 also have control units capable of encryption processing and communication processing, and execute status management accompanying contents transaction processing, and execute the transaction processing sequence at the devices.

### (User device)

The user device 92 is the same configuration as described with reference to Fig. 7 earlier, and has control means 230 capable of the encryption processing and communication processing (see Fig. 7). However, with the present apartment, the control means 230 generate log data each time a contents purchase processing is performed, and stores the generated log data in the purchase management database 220.

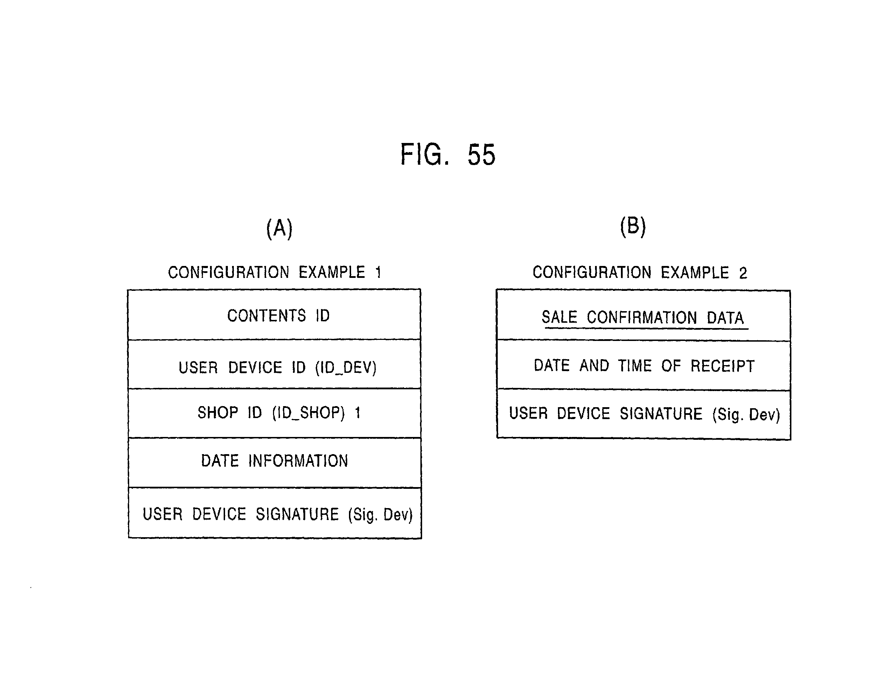

Fig. 55 illustrates a configuration example of log data generated and stored at the user device 902. Fig. 55 shows two examples of log data. (A) Configuration example 1 includes a contents ID which is an identifier of contents obtained by transaction of the user device 902 with a shop server 901, a user device ID (ID_DEV) which is an identifier of the user device, a shop ID (ID_SHOP) which is an identifier of the shop which performs the transaction, the information indicating the date and time of the transaction, with the signature of the user device (Sig.DEV) as to this data being generated. The log collection server executes verification processing of the electronic signature of the purchase log received from the user device. (B) Configuration example 2 is a configuration wherein the signature of the user device (Sig.DEV) is generated as to sales confirmation data and contents receipt date-and-time data. The sale confirmation data is data indicating that sales of contents have been executed, generated by the shop server 901 based on the contents purchase request from the user device 902. The sale confirmation data will be described later.

The user device 902 generates log data such as shown in Fig. 55, for example, at the time of contents purchase processing, and stores this in the user device. The stored log data is transmitted to the log collection server 903. The user device transmits the log data which it has accumulated so far to the log collection server 903, at the time of executing the updating process same of its own public key certificate. These processing sequences will be described in detail later with reference to flowcharts.

### (Log collection server)

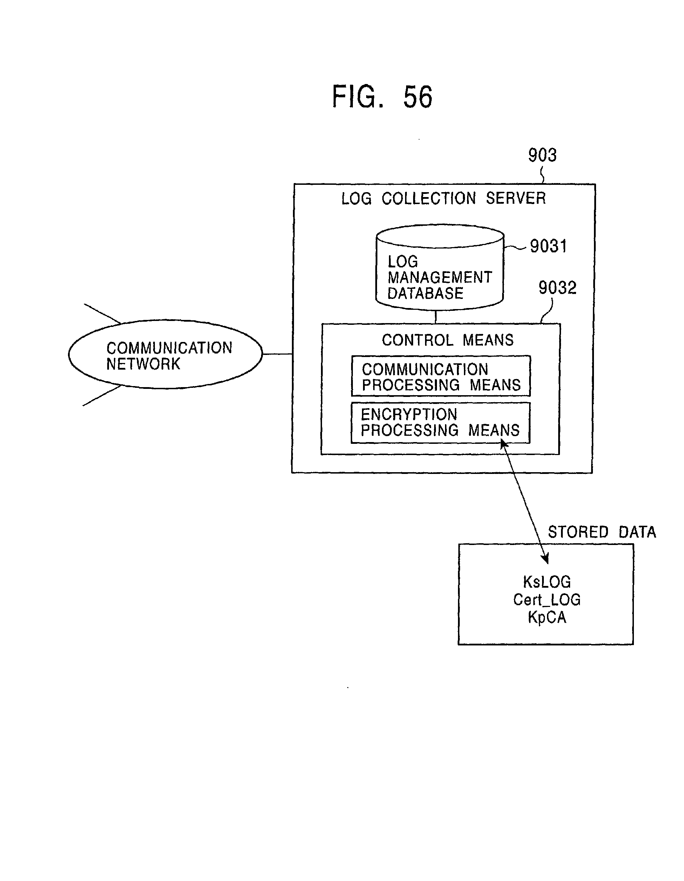

Fig. 56 shows the configuration of the log collection server 903. The log collection server has a collected log management database 9031. The collected log management database 9031 is a database for storing log data received from various user devices (see Fig. 55).

The log collection server 903 has control means 9032 for executing the encryption processing at the time of communication processing with the user device 902, shop server 901, etc., and further for communication processing. The control means 9032 has functions for serving as encryption processing means and communication processing means, in the same way as with the control means of the shop server, etc., described above. The configuration thereof is the same as the configuration described with reference to Fig. 4. Key data and the like used in the encryption processing executed by the encryption processing means of the control means 9032 is stored securely in the storing means with in the control means. Encryption processing data such as encryption keys and the like which the log collection server 903 stores include the log collection server 903 secret key: KsLOG, the public key certificate Cert_LOG of the log collection server 903, and the public key KpCA of the certificate authority (CA) serving as the public key certificate issuer authority which is the issuer authority of the public key certificate.

The log collection server 903 executes issuing procedure processing of public key certificates, in exchange with receipt of log data from the user devices 902. Specifically, an updating public key is received from the user device 902, the received public key is transferred to the certification authority 906, an issuing request of the public key certificate of the user device is performed, and the public key certificate issued by the certificate authority 906 is received and transmitted to the user device 902. This series of processes will be described later in detail, with reference to flowcharts.

### (Contents purchase processing)

As described at the top of Fig. 54, processing according to the present embodiment is classified into the four types of processing of;
A. Contents purchase processing
B. Log transmission and public key certificate updating processing
C. Contents selling preparation processing
D. Sales confirmation processing

These processes will be described with reference to flowcharts.

### (A. Contents purchase processing)

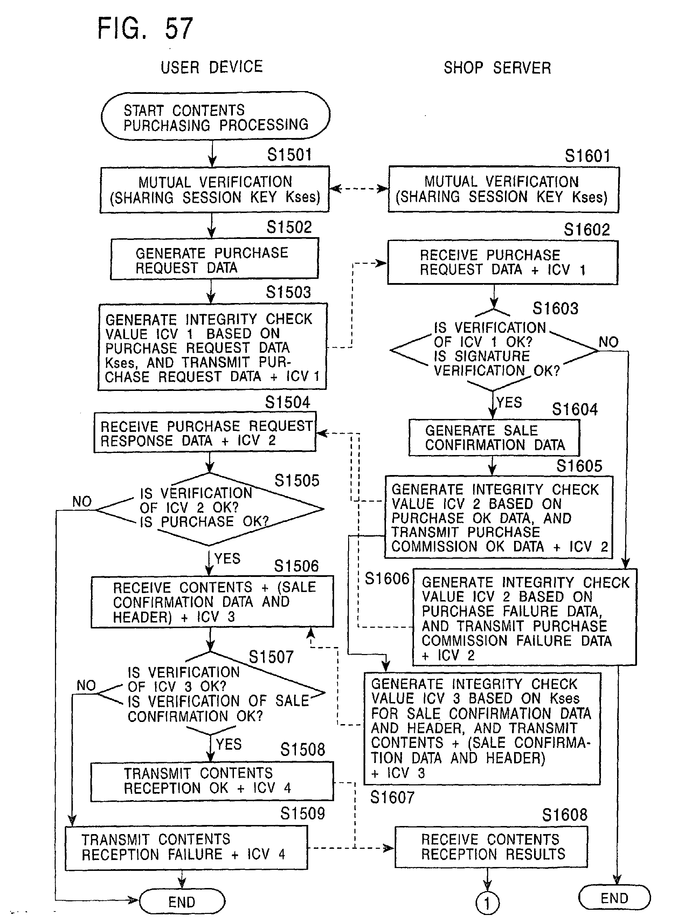

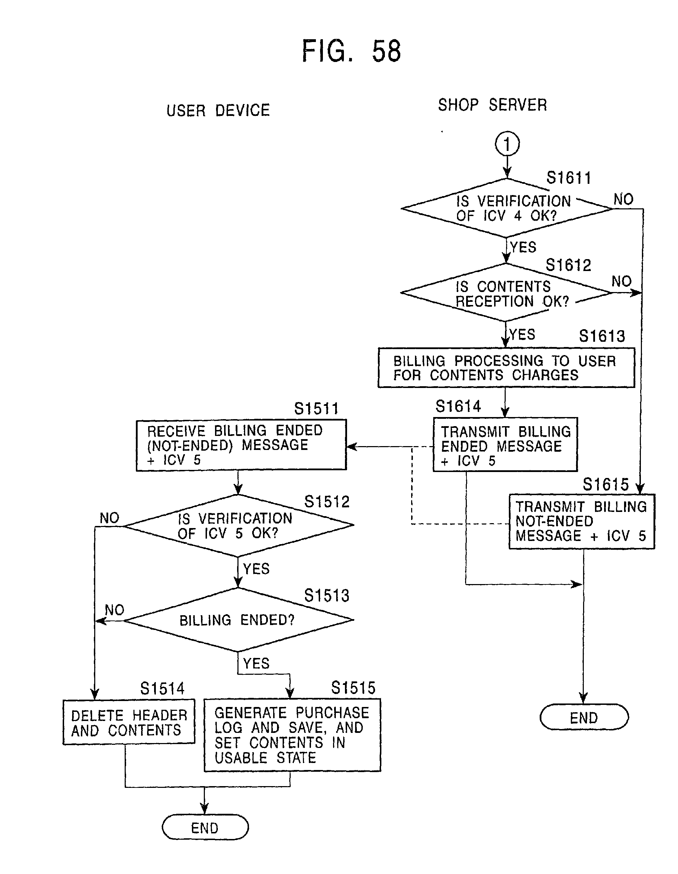

Contents purchase processing will be described with reference to Fig. 57 and Fig. 58. In Fig. 57 and Fig. 58, the left side indicates processing by the user device, and the right side, that of the shop server. First, as shown in Fig. 57, at the time of starting the processing, mutual authentication is executed between the user device and the shop server (S1501, S1601).

Mutual authentication processing is executed as processing based on the public key method described with reference to Fig. 13. This mutual authentication is performed using a public key certificate with a valid period set, that is issued by the certificate authority (CA) 906, and having a public key certificate that is within the valid period is a condition for establishing mutual authentication. Though described later, the updating processing of the public key certificate is executed as processing for transmitting a log to the log collection server 903.

The session key (Kses) generated in the mutual authentication processing is used for encrypting transmission data and executing data communication as necessary, or generating processing of an integrity check value (ICV) using the Kses. Generating of the ICV will be described later.

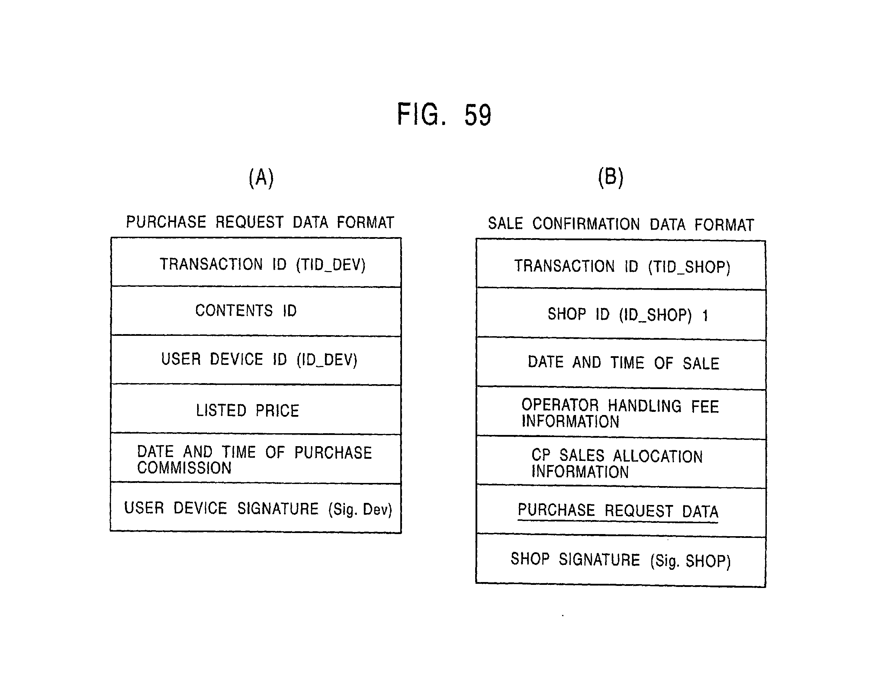

Upon establishment of mutual authentication, the user device generates a transaction ID to be applied to the contents transaction, based on a random number, for example, and generates purchase request data (S1502). An example of the format of the purchase request data is shown in Fig. 59 (A).

The purchase request data contains the above-described transaction ID (TID_DEV), a contents ID which is the identifier of the contents, the user device ID (ID_DEV) which is the identifier of the user device, the listed price which the price of the contents, and further the date and time of commissioning the purchase, with the signature of the user device (Sig.Dev) being generated as to this data.

Further, the user device generates an integrity check value (ICV 1) of the purchase request data, and transmits this to the shop server (S1503). The integrity check value (ICV) is used for calculation of the hash function as to the data which is the object of tampering checking, and as calculated by ICV = hash (Kicv, C1, C2, ···). Kicv is the ICV generating key. C1 and C2 are information of data which are the object of tampering checking, and a Message authentication Code (MAC) of important information of the data which is the object of tampering checking, is used.

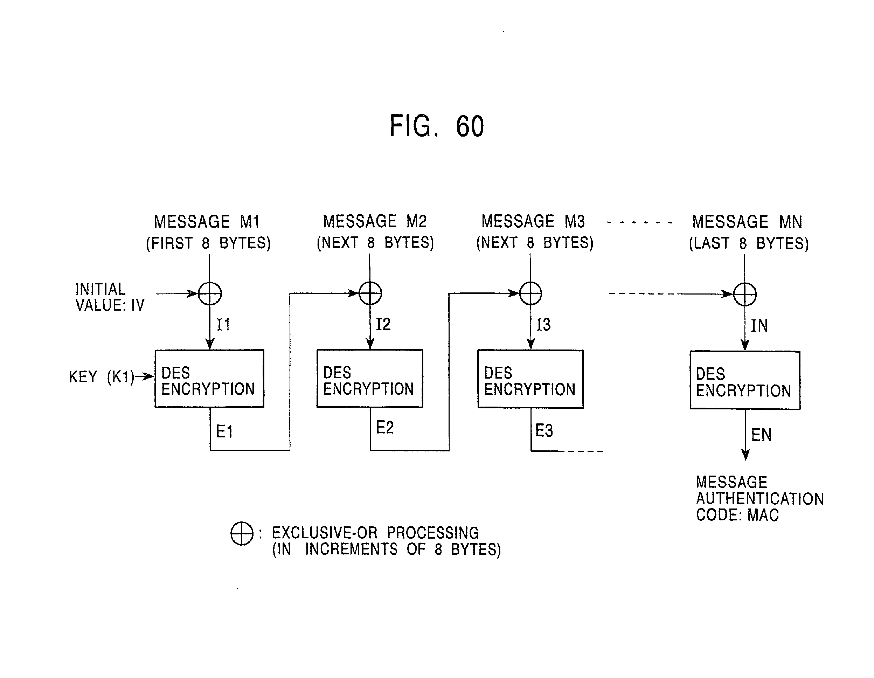

Fig. 60 illustrates an example of an MAC value generating stream using a DES encryption processing configuration. As shown in the configuration in Fig. 60, a message which is the object is divided into 8-byte increments (hereafter, the divided message will be indicated by M1, M2, ···, MN), and first, the exclusive-OR of the initial value (hereafter referred to as IV) and M1 is obtained (the results thereof as I1). Next, I1 is placed into the DES encryption unit, and encrypted using a key (hereafter referred to as K1 (the results thereof as E1). Then, the exclusive-OR is obtained between E1 and M2, the output I2 thereof is put into the DES encryption unit, an encrypted using the key K1 (output E2). Hereafter, this is repeated, and the entire message is subjected to encryption processing. The EN which comes out at the end is the Message Authentication Code (MAC). Note that partial data making up the data which is the object of verification can be used as the message.

The integrity check value (ICV) of data to be checked is configured of the MAC value generated using the ICV generating key Kicv. An ICV which is guaranteed to have no tampering, e.g., one generated at the data transmitting side at the time of generating data, and the ICV generated based on the received data at the data receiving side, are compared, and in the event that the same ICV is obtained, this guarantees that there is no tampering with the data, while in the event that the ICV differs, judgement is made that there has been tampering.

Here, the session key: Kses generated at the time of mutual authentication is used as the ICV generating key. The user device generates the integrity check value (ICV 1) for the purchase request data (see Fig. 59 (A)) applying the session key: Kses, and transmits the purchase request data + the ICV 1 to the shop server.

The shop server generates an integrity check value ICV 1' based on the verification of the ICV 1, on the received data, applying the session key: Kses, and judges whether or not the received ICV 1 = ICV 1'. In the event that this holds, judgement is made that there is no tampering. Further, the shop server performs the signature verification of the purchase request data (S1603). The signature verification is performed using the public key of the user device. The public key is extracted from the public key certificate Cert_DEV of the user device, with this being a public key certificate within the valid period being a condition. The public key certificates that are out of date are not used for signature verification at the shop server, as the purchase commission would fail. In the event that both the ICV check and signature verification are OK, the shop server generates sale confirmation data (51604).

The sale confirmation data has the data configuration shown in Fig. 59 (B), for example. This is the transaction ID (TID_SHOP) which the shop has generated, shop ID (ID_SHOP) which is the identifier of the shop, the date and time that the sale was made, information of charges of the operator with regard to contents sales, wherein the operator is, for example, the contents sales system managing entity (SH: System holder), and in Fig. 54 is an entity for managing the log collection server 903.

Further, CP (contents provider) sales distribution information, this is information illustrating distribution of the contents provider as to the sales of the contents. Further, this includes purchase request data (see Fig. 59 (A)), with a configuration wherein the signature of the shop (Sig.SHOP) is generated for this data.

The sale confirmation data format shown in Fig. 59 (B) records only the distribution information for the two entities of the operator (SH: System holder) and content provider (CP) as to sales of the contents, but in the event that there are other entities to distribute contents sales with, the distribution information of these entities are also stored.

In the event that both the ICV check and signature verification are OK, and sale confirmation data is generated (51604), the shop server generates an integrity check value (ICV 2) using the session key Kses and adds this to purchase OK data containing a message accepting purchase, and transmits this to the user device (S1605). In the event that either of the ICV check or signature verification fails, the shop server generates an integrity check value (ICV 2) using the session key Kses and adds this to purchase fail data containing a message declining purchase, and transmits this to the user device (S1606).

Further, in the event of transmitting purchase OK data to the user device, the shop server transmits the sale confirmation data (see Fig. 59 (B)), data wherein an integrity check value (ICV 3) is generated using the session key Kses as to the header (various types of contents-related information including usage information and the like of the contents), and the contents, to the user device (S1607).

The user device receives the contents, and purchase request response data (OK or fail) + the ICV 2 (S1504), performs verification of the ICV 2, and confirms the purchase request response (S1505). In the event that judgement is made from the ICV 2 that there is no data tampering, and purchase has been accepted (OK), the sale confirmation data (see Fig. 59 (B)) and the header (various types of contents-related information including usage information and the like of the contents) + ICV 3 are accepted (S1506), the ICV 3 is verified, signature verification of the sale confirmation data is performed, and in the event that all are OK, an ICV 4 is generated to a contents reception OK response, and transmitted to the shop server.

In the event that the judgment in step S1507 is No, in step S1509 an ICV 4 is generated to a contents reception fail response, and transmitted to the shop server. The shop server receives the contents reception OK or fail + ICV4 (S1608), performs verification of the ICV 4 (S1611), and in the event that the response from the user device is contents reception OK, executes billing processing for the contents to the user (S1613). As with the above embodiments, this billing processing is processing for receiving contents charges from a user transaction account or credit card specified account. Upon the billing processing ending, an ICV 5 is generated to a billing ended message, and transmitted to the user device (S1614). In the event that judgement in either step S1611 or step S1612 is No, an ICV 5 is generated to a billing not-ended message, and transmitted to the user device.

Upon receiving the billing ended (or not-ended) message + ICV5, the user device verifies the ICV 5, makes judgment regarding whether or not billing has successfully ended, and upon confirmation that the billing has ended, generates a purchase log (Fig. 55) and stores this in its own memory, and then uses the contents. In the event that judgement in either step S1512 or step S1513 is No, processing for deleting the letter and contents received the shop server is performed in step S1514.

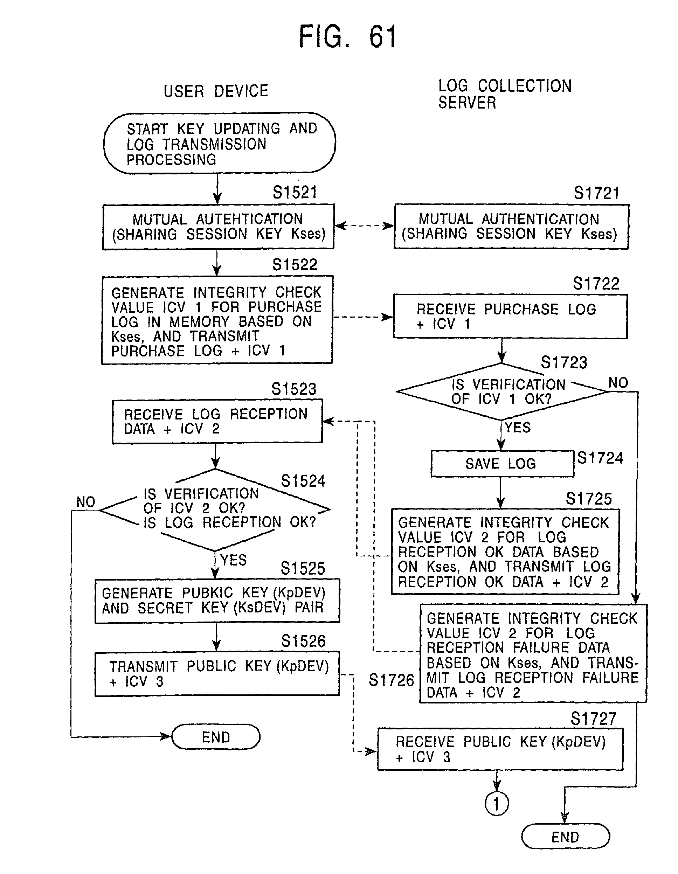

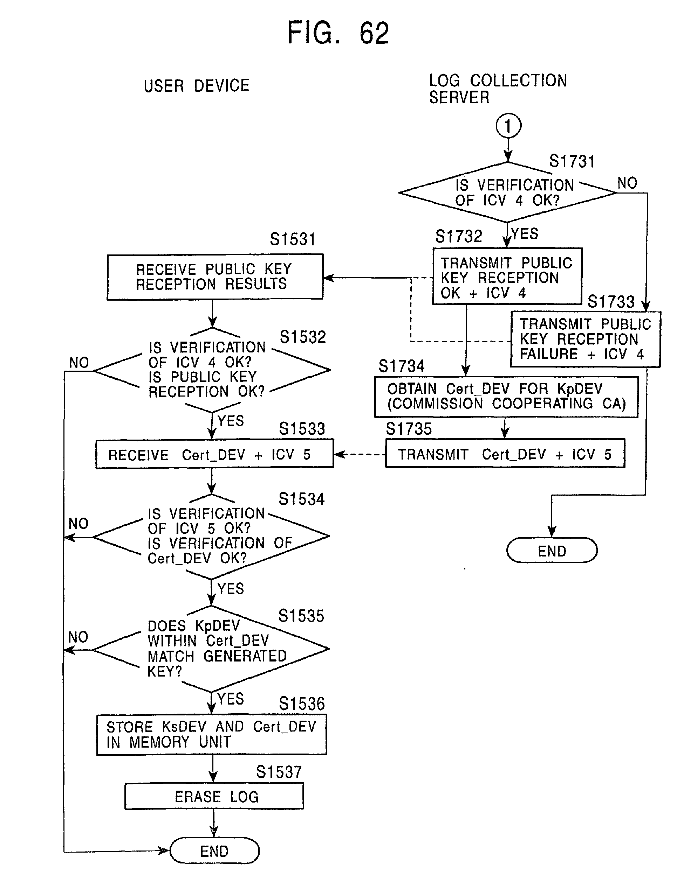

Next, description will be made regarding the key updating processing and log transmission processing performed between the user device and the log collection server, with reference to Fig. 61 and Fig. 62. In Fig. 61 and Fig. 62, the left side indicates the processing at the user device, and the right side, that at the log collection server. This processing is executed at the time of a user device which purchases contents from the shop server, updating the public key certificate of the user device stored in the user device. A valid period is set for the public key certificate of the user device, and needs to be updated at predetermined periods. Description will be made from the processing in Fig. 61.

First, the user device and log collection server perform mutual authentication (S1521, S1721), and generate a session key. Under the condition of establishment of authentication, the user device extracts the purchase log stored in the memory within the user device, generates an integrity check value (ICV 1) with the session key Kses as to the purchase log, and transmits the purchase log + ICV 1 to the log collection server (S1522).

The log collection server receives the purchase log + ICV 1 (S1722), executes verification of ICV 1 (S1723) in the event that the verification is OK, and saves the log in the database (S1724). Also an arrangement may be made wherein the log collection server performs verification processing of the electronic signature of the user device in the purchase log, to further check whether or not there is data tampering. The log collection server further generates an integrity check value (ICV 2) with the session key Kses for the log reception OK data, and transmits the log reception OK data + ICV 2 to the user device (S1725). In the event that verification of the ICV 1 fails in step S1723, the log collection server generates an integrity check value (ICV 2) with the session key Kses for the log reception fail data, and transmits the log reception OK data + ICV 2 to the user device (S1726).

The user device receives the log reception data + ICV 2 (S1523), and in the event that verification of the ICV to is OK and log reception OK (S1524), a pair of updating public key (KpDEV) and secret key (KsDEV) are generated (S1525), an integrity check value (ICV 3) is generated and added to the generated public key (KpDEV), and transmitted to the log collection server (S1526).

Upon receiving the public key (KpDEV)+ ICV 3 from the user device (S1727), the log collection server executes verification of the ICV 3 (S1731), and in the event that the verification is OK, an ICV 4 is generated and added to a public key reception OK message and transmitted to the user device (S1732). In the event that verification of the ICV 3 fails, an ICV 4 is generated an added to a public key reception fail message and transmitted to the user device (S1733).

Further, in the event that the log collection server generates an ICV 4 and adds to the public key reception OK message and transmits this to the suffice (S1732), issuing of a public key certificate as well as the reception public key is requested to the issuer authority (CA), thereby obtaining the updated public key certificate of the user device (Cert_DEV) (S1734), and further an integrity check value ICV 5 is generated and added to the updated public key certificate (Cert_DEV) and transmitted to the user device (S1735).

Following receiving the public key reception result (OK or fail) + ICV 4, the user device performs verification of the ICV 4, and in the event that the ICV 4 verification is OK and the public key reception OK (S1532), reception of the updated public key certificate + ICV 5 (S1533) is executed, and verification of the ICV 5 and verification of the received public key certificate is executed (S1534). In the event that both verifications are OK, the public key within the public key certificate is extracted, comparison is made with the public key transmitted from itself (S5035), and in the event that these match, the secret key generated for updating and the public key certificate that has been received, are stored in the memory of the user device (S1536), and log (the log already sent to the log collection server) deletion processing is executed (S1537).

In the event that judgement in any of the steps S1532, S1534, or S1535 is No, updating processing of the valid public key certificate is not executed, and the processing ends.

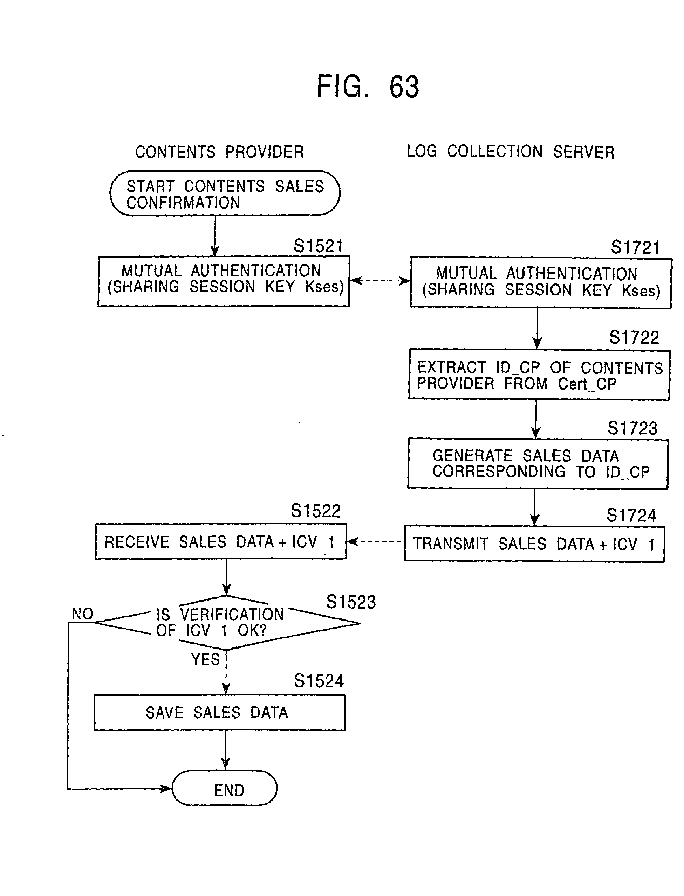

Next, the contents sales confirmation processing executed between the contents provider and log collection server will be described based on the flowchart in Fig. 63. The log collection server manages charges distribution information with regard to one or multiple charges receiving entities of contents charges, based on purchase logs received from user devices, and executes response processing based on charges distribution information according to the sales confirmation requests from charges receiving entities. The log collection server can calculate the sales of the charges receiving entities based on sales of contents, from the contents ID contained in the purchase log and contents charges distribution information held by the log collection server beforehand. Now, in the event of a configuration for receiving logs storing the sale confirmation data shown in Fig. 55(B), the sales of the charges receiving entities can be calculated based on the distribution information contained in the sale confirmation data.

First, mutual authentication is executed between the contents provider and log collection server (S1521, S1721), and a session key Kses is generated. Under the condition that mutual authentication established, the log collection server extracts the identifier ID_CP of the contents provider from the public key certificate Cert_CP of the contents provider (CP) (S1722), and generates sales data corresponding to the ID_CP, based on the log information stored in the database (S1723). The collected log data stores distribution information of the contents provider as described above, and distribution charges of the contents providers are obtained based on the log data. Further, the log collection server generates an integrity check value ICV 1 for the sales data, and attaches and sends this to the contents provider (CP) (S1724).

The contents provider (CP) receives the sales data + ICV 1 from the log collection server (S1522), performs verification of the ICV 1 to confirm that there is no tampering with the data (S1523), and stores the sales data in the memory (S1524). In the event that verification is performed and there is data tampering, there is no data saving executed to the memory, and the processing ends. In this case, a sales data request is made to the log collection server again.

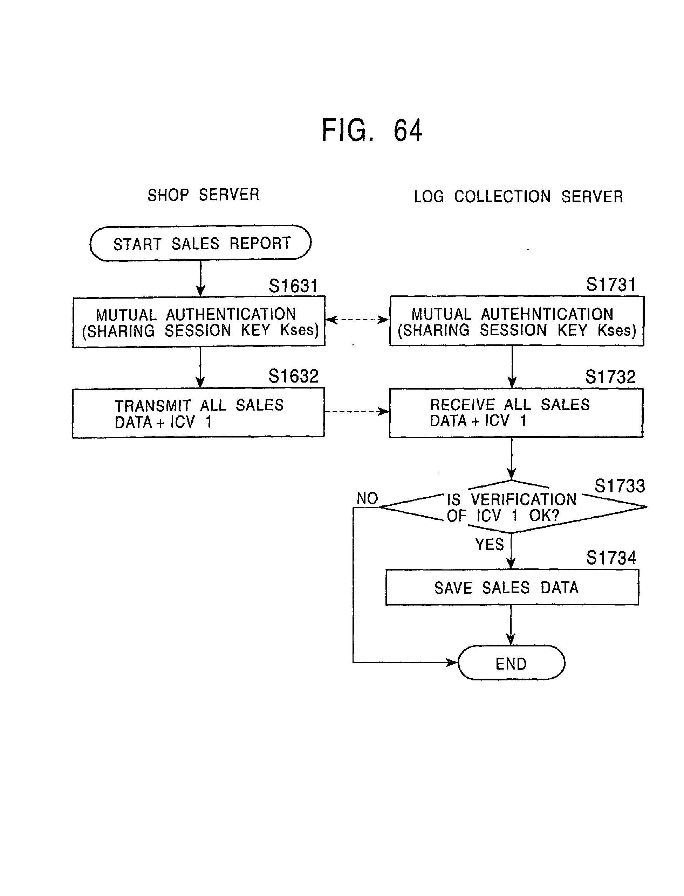

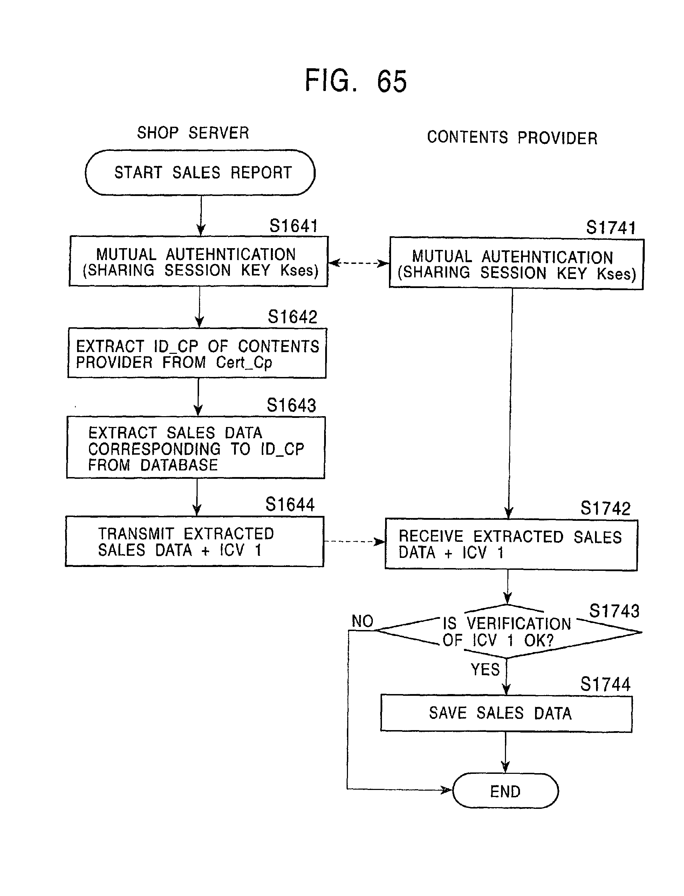

Next, sales reporting processing executed between the shop server and the log collection server, and contents provider, will be described with reference to the flowcharts shown in Fig. 64 and Fig. 65.

The shop server manages contents sales data, and executes processing for transmitting all sales data within a predetermined period or the sales data per charges receiving entities, to the log collection server. Fig. 64 is processing wherein all contents sale processing which the shop server has executed is collectively transmitted to the log collection server, and the processing in Fig. 65 is processing wherein, of the contents sale processing with the shop server has executed, sales relating to contents provided by a particular contents provider are selected and transmitted to the contents provider.

This sales batch report processing shown in Fig. 64 will be described first. First, mutual authentication is executed between the shop server and log collection server (S1631, S1731), and the session key Kses is generated. Under the condition of the establishment of mutual confirmation, the shop server extracts all sales data in particular period from the database, and generates an integrity check value ICV 1 for all sales data, and attaches this and transmits this to the log collection server (S1632).

The log collection server receives all sales data + ICV 1 from the shop server (S1732), performs verification of the ICV 1 to confirm that there is no data tampering (S1733), and saves the sales data in the memory (S1734). In the event that verification of ICV 1 is performed and there is data tampering, data saving to memory is not performed, and the processing ends. In this case, the sales data request is made to the shop server again.

The specified contents provider sales report processing shown in Fig. 65 will be described. First, mutual authentication is executed between the shop server and contents provider (S1641, S1741), and the session key Kses is generated. Under the condition of the establishment of mutual confirmation, the shop server extracts the identifier ID_CP of the contents provider from the public key certificate Cert_CP of the contents provider obtained and mutual authentication (S1642), searches for the sales data based on the extracted ID_CP, and obtains the sales data of the contents which the specified contents provider has provided (S1643). Further, an integrity check value ICV 1 for the sales data is generated and attached, and transmitted to the log collection server (S1644).

The log collection server receives all sales data + ICV 1 from the shop server (S1742), performs verification of the ICV 1 to confirm that there is no data tampering (S1743), and saves the sales data in the memory (S1744). In the event that verification of ICV 1 is performed and there is data tampering, data saving to memory is not performed, and the processing ends. In this case, the sales data request is made to the shop server again.

According to the configuration of the present embodiment, contents purchase log data can be collected according to the updating processing of the public key certificate of the use a device, and the system operator (SH: System Holder) which manages the log collection server can tell the state of contents sales in an accurate manner. The public key certificate of the user device is necessary for the mutual authentication processing with a shop server, so having a public key certificate with a valid period set therein is a condition for executing contents purchasing. Also, verification of the signature added to the purchase request data and the like from the user device is executed by the public key extracted from the public key certificate of the user device, so having a public key certificate with a valid period set is a condition for signature verification, as well. Accordingly, in order for the user device to purchase contents, there is the need to transmit the log data to the log collection server, perform updating of the public key certificate, and hold a public key certificate with a valid period set. Setting the valid period of the public key certificate to, for example, one month, three months, etc., enables the system operator (SH: System Holder) which manages the log collection server to collect the accumulated logs in each setting entity, in a sure manner.

As described above, log data is collected from user devices in a sure manner by a log collection server which the system operator manages, so the contents sales state can be managed. Further, contents sales can be distributed to sales profit obtaining right holders such as content providers and the like, in an accurate manner.

Also, with the present embodiment, the session key Kses generated at the time of mutual authentication is used as the generating key for the integrity check value (ICV) for data communicated between the entities, and the ICV is added to the transmitted data and communicated, so the security of the communication data further increases.

Also, with the above-described embodiment, a configuration has been described wherein each of mutual authentication processing, and signature generation and signature verification processing, is executed between the user device and shop server, a configuration can be made wherein one is executed, i.e., wherein only mutual authentication processing, or only signature generation and signature verification processing, is executed, with usage of a public key certificate within a valid period being mandatory for either.

### [4. Public key certificate or attributes certificate usage configuration recording attributes data]

Next, the usage configuration of a public key certificate or attributes certificate usage configuration which has recorded attributes data, will be described. In the above-described contents distribution configuration, there is the possibility that shop operators with malicious intent may execute fictitious transactions of contents under the guise of the user device, or perform fictitious contents transactions between the contents provider and shop. Also, in the event that a user device attempting to execute an authorized transaction believes that this is a shop server and starts communication, and executes a contents purchase request to be made with a shop server, e.g., execution of credit card number transmission processing, there is the danger of processing being executed such as illegally obtaining the credit card number from the user device, in the event that the other party is an unauthorized server under the guise of a shop server. Further, the possibility that a user device may execute fictitious sales of contents to other user devices under the guise of a shop, is undeniable. In the event that such situations occur, it becomes difficult for the system operator to accurately know the actual distribution of contents.

The following is a description of the public key certificate or attributes certificate usage configuration the recording attributes data, as a configuration for preventing fictitious transactions and the like, other than the legal contents distribution route.

Attributes data is data for identifying the type of entity making up the contents distribution system, such as user device (DEVICE), shop (SHOP), contents provider (CP), service operator (SH), registration authority for issuing and examining public key certificates and attributes certificates, and so forth.

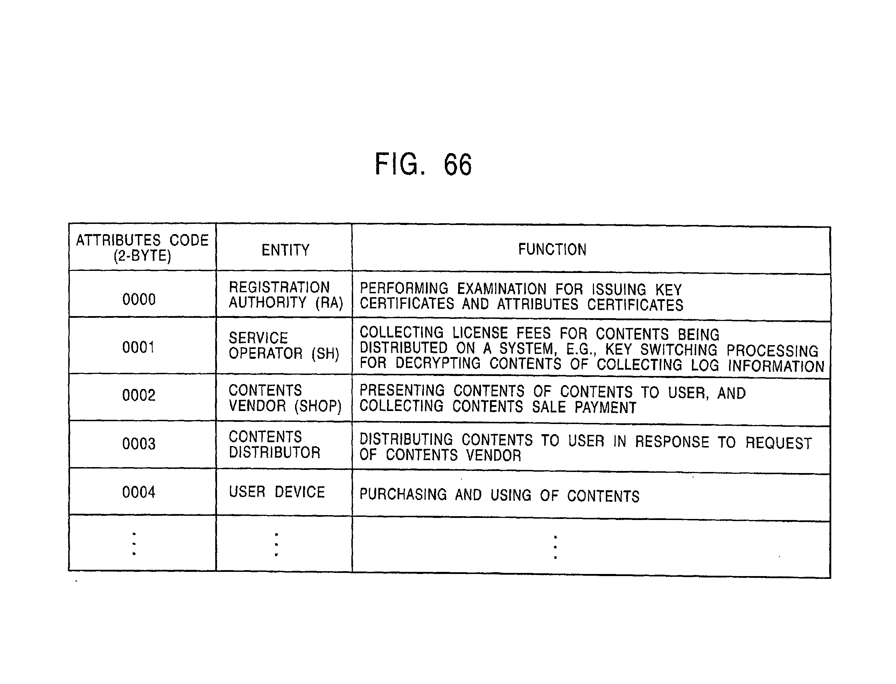

The contents of attributes data are shown in the table in Fig. 66 as a configuration example of attributes data. As shown in Fig. 66, different codes are appropriated to different entities. For example, a public key certificate or attributes certificate issuing request is accepted from a user device or shop or the like, and "0000" is appropriated as an attributes code to a registration authority for performing examination, and "0001" is appropriated to a service operator serving as a system holder for collecting license fees for contents being distributed on the contents distribution system. In the above-described example, the service operator may be an entity which manages a user device authentication server which executes key switching processing, or maybe an entity which manages a log information collection server which collects log information.

Further, the code "0002" is appropriated to contents vendors serving as shops for selling contents to user devices, "0003" is appropriated to contents distributors which are distribution server operating entities for distributing contents to users in response to requests from shops (contents vendors), and "0004" is appropriated to user devices which purchase and use the contents. Different codes according to the type of also appropriated to other entities relating to contents distribution. Now, this is not necessarily restricted to a configuration wherein one code is appropriated to shops, and in the event that their shops with different roles and functions, different codes may be appropriated to differentiate, and the configuration may be made wherein different attributes codes are appropriated to user devices as well, according to some sort of category.

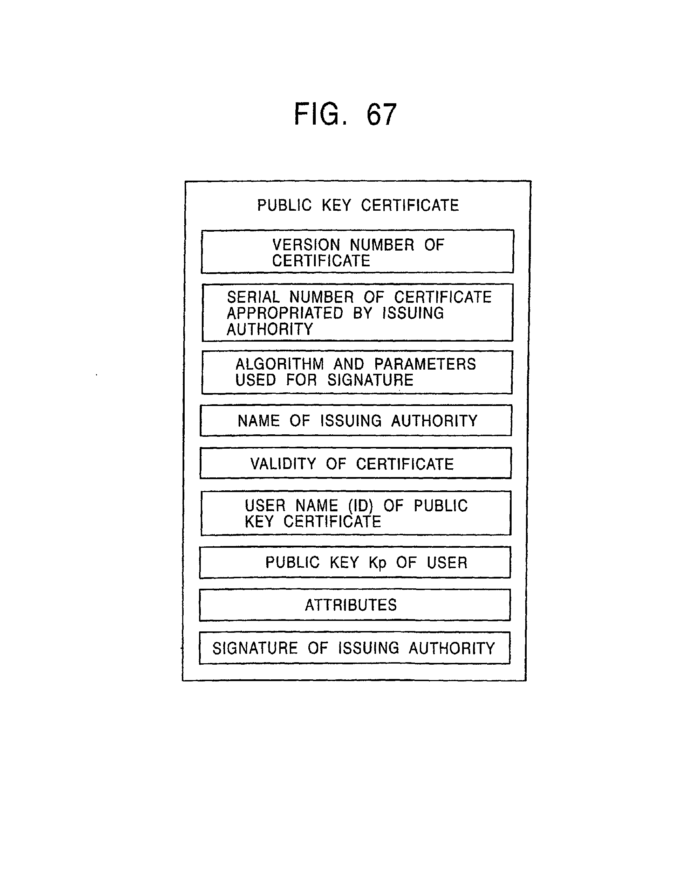

There is a configuration wherein the above-described attributes information is included in a public key certificate, and the configuration wherein an attributes certificate is issued separately from the public key certificate, so as to identify attributes by the attributes certificate. Fig. 67 illustrates that configuration example of a public key certificate having attributes information.

The public key certificate shown in Fig. 67 contains the version number of the certificate, the serial number of the certificate to be appropriated to the certificate user by the public key certificate issuer authority (CA), algorithms and parameters used for the electronic signature, the name of the issuer authority, the validity of the certificate, the name of the certificate user (e.g., user device ID), the public key of the certificates user, and further, the above-described attributes information such as [0000], [0001] ··· [nnnn], and further, an electronic signature. The serial number of the certificate is, for example, the issuing year (4 bytes), month (2 bytes), date (2 bytes), and serial number (8 bytes), for a total of 16 bytes. For the user name, an identifiable name set by the registration authority, a random number, or a serial number, may be used. Or, a configuration may be made wherein the higher order bytes are the category, and the lower order bytes are the serial number.

The electronic signature is data wherein the version number of the certificate, the serial number of the certificate to be appropriated to the certificate user by the public key certificate issuer authority (CA), algorithms and parameters used for the electronic signature, the name of the issuer authority, the validity of the certificate, the name of the certificate user, the public key of the certificate user, and all of the attributes data is subjected to application of the hash function so as to generate a hash value, and is generated using the secret key of the issuer authority with regard to the hash value.

The public key certificate issuer authority (CA) issues the public key certificates shown in Fig. 67, updates public key certificates that are out of date, and creates, manages, and distributes a list of unauthorized users for revoking users who have performed illegalities (this is called revocation).

On the other hand, at the time of using the public key certificate, the user uses of the public key KpCA of the issuer authority which the user holds, to verify that electronic signature of the public key certificate, and following success of electronic signature verification, the public key is extracted from the public key certificate, and the public key is used. Accordingly, all users using the public key certificate need to hold a shared public key of the public key certificate issuer authority.

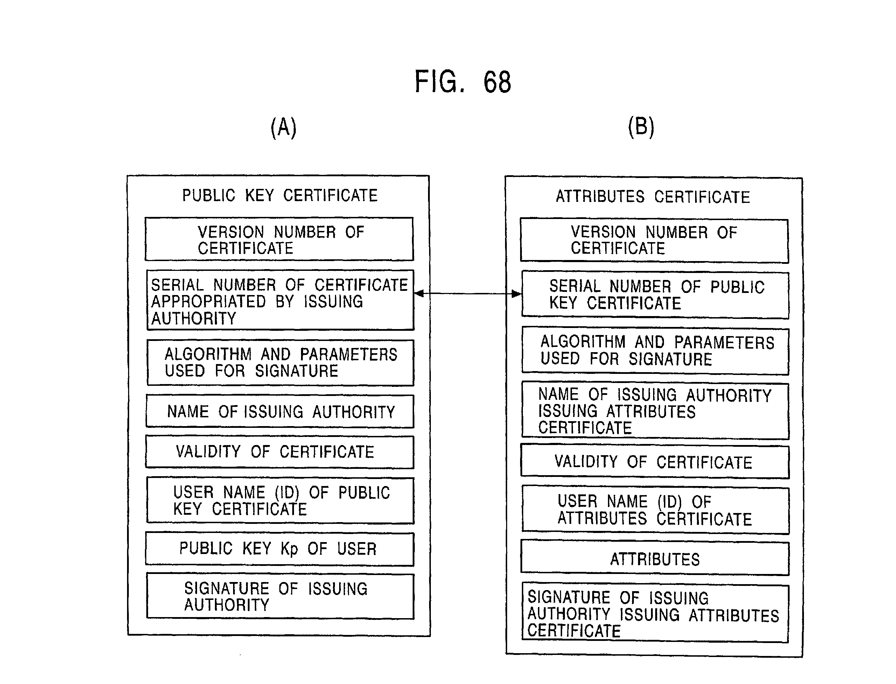

Next, Fig. 68 illustrates the data configuration of a public key certificate which does not have attributes information, and an attributes certificate. (A) is the public key certificate which does not have attributes information, and has a data configuration wherein attributes information has been removed from the public key certificate shown in Fig. 67, and is issued by the public key certificate issuer authority. (B) is an attributes certificate. Attributes certificates are issued by an attributes certificate issuer authority (AA: Attribute Authority).

The attributes certificate shown in Fig. 68 has a version number of the certificate, and the serial number of the public key certificate corresponding to the attributes certificate issued by the attributes certificate issuer authority (AA) which is the same as the certificates serial number of the corresponding public key certificate, functioning as linked data for correlating both certificates. An entity which is attempting to confirm the attributes of the other party of communication by an attributes certificate makes confirmation of the attributes certificate linked with a public key certificate, based on the public key certificate serial number stored in common in the public key certificate and attributes certificate, and can obtain attributes information from that attributes certificate storing the same public key certificate serial number as the public key certificate. The serial number of the certificate is, for example, the issuing year (4 bytes), month (2 bytes), date (2 bytes), and serial number (8 bytes), for a total of 16 bytes. Further, algorithms and parameters used for the electronic signature, the name of the attributes certificate issuer authority, the validity of the certificate, the name of the certificate user (e.g., user device ID) which is the same as the user name of the corresponding public key certificate, for which an identifiable name set by the registration authority, a random number, or a serial number, may be used, or, a data configuration may be made wherein the higher order bytes are the category, and the lower order bytes are the serial number. Further included are the above-described attributes information such as [0000], [0001] ··· [nnnn], and the electronic signature of the attributes certificate issuer authority (AA).

The electronic signature is data wherein the version number of the certificate, the serial number of the public key certificate, algorithms and parameters used for the electronic signature, the name of the issuer authority, the validity of the certificate, the name of the certificate user, and all of the attributes data is subjected to application of the hash function so as to generate a hash value, and is generated using the secret key of the attributes certificate issuer authority with regard to the hash value.

The attributes certificate issuer authority (AA) issues the attributes certificates shown in Fig. 68(B), updates attributes certificates that are out of date, and creates, manages, and distributes a list of unauthorized users for revoking users who have performed illegalities (this is called revocation).

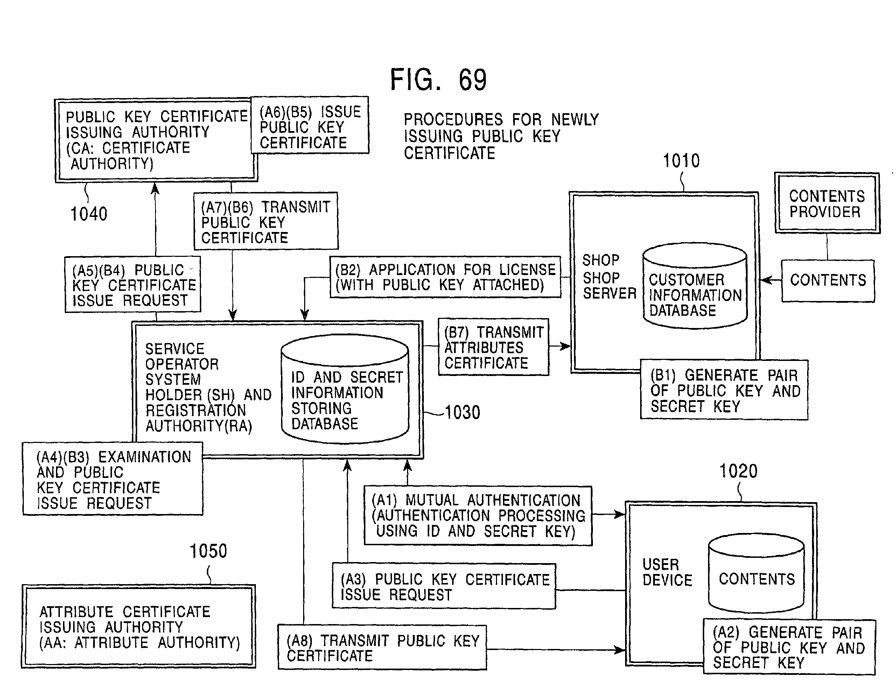

Fig. 69 illustrates a diagram explaining the procedures for user device and shop server participating in contents transactions each newly issuing public key certificates to be used. Here, the shop server 1010 and the user device 1020 have the same configuration as describe with reference to Fig. 1 earlier. The service operating entity 1030 is a system holder (SH) managing all contents distribution, and can tell the state of contents distribution by means such as the above-described contents key switching processing, or collecting logs generated by user device is purchasing contents. Here, this also functions as a Registration Authority (RA) for executing reception and examination of public key certificate and attributes certificate issuing requests from the shop server 1010, user device 1020, and others. In the present embodiment, the service operating entity 1030 is of a configuration having functions of a system holder (SH) and functions of a registration authority (RA), but these may be configured as separate independent entities.

In Fig. 69, the procedures for newly issuing a public key certificate at the user device 1020 are indicated by A1 through A8, and the procedures for newly issuing a public key certificate at the shop server 1010 are indicated by B1 through B7. First, description will be made regarding the procedures for newly issuing a public key certificate at the user device 1020.

### (A1) Mutual authentication

First, the user device 1020 executes mutual authentication with the service operating entity 1030. However, at this point, the user device 1020 does not have a public key certificate, so mutual authentication using a public key certificate cannot be executed, and accordingly, the symmetric key encryption method described with reference to Fig. 12 earlier, i.e., mutual authentication processing using a shared secret key, and identifier (ID), is executed (see the description relating to Fig. 12 for details).

### (A2) Generate pair of public key and secret key

### (A3) Public key certificate issue request

### (A4) Examination and public key certificate issue request

### (A5) Public key certificate issue request

Upon mutual authentication being established, the user device 1020 generates a pair of public key and secret key to be newly registered, in the encryption processing unit of its own device, and transmits the generated public key to the service operating entity 1030, along with the certificate issuing request. The service operating entity 1030 which has received the public key certificate issuing request examines the issuing request, and in the event that the criteria for an entity issuing a public key certificate are satisfied, transmits the certificate issuing request to the public key certificate issuer authority (CA) 1040. Here, in the event that the public key certificate to be issued is a public key certificate having attributes information such as shown in Fig. 68 (A), the service operating entity 1030 judges the attributes of the entity which has transmitted the certificate issuing request based on the ID.

A user device identifier (ID) and secret key serving as secret information are stored beforehand in the user device participating in contents distribution, with the user device ID and secret key being a of a configuration managed by the service operating entity 1030, where in the service operating entity 1030 searches the secret information storing database based on the ID transmitted from the user device, and following confirmation that the user device ID has been registered beforehand, extracts the secret key, performs mutual authentication with the user device based on Fig. 12 using this key, and only in the event that the mutual authentication is successful is the user device confirmed to be capable of participating in contents distribution.

### (A6) Issue public key certificate

### (A7) Transmit public key certificate

### (A8) Transmit public key certificate

Upon receiving the public key certificate issuing request from the service operating entity 1030, the public key certificate issuer authority 1040 stores the public key of the user device, issues a public key certificate having the electronic signature of the public key certificate issuer authority 1040 (Fig. 67 or Fig. 68(A)), and transmits this to the service operating entity 1030. The service operating entity 1030 transmits the public key certificate received from the public key certificate issuer authority 1040 to the user device 1020. The user device stores the secret key generated earlier in (A2) along with the received public key certificate within itself, and thus is capable of using mutual authentication, data encryption, decryption processing, etc., at the time of contents transactions.

On the other hand, the procedures for issuing the public key certificate for the shop server 1010 are basically the same as the certificate issuing procedures for the user device, but shop server needs to be approved by the service operating entity 1030 as an entity which handles selling of contents. Accordingly, along with its own public key, the shop server 1010 needs to execute license application (the procedures in Fig. 69 B2). This is executed by the shop server 1010 accepting execution of selling contents following the policies set down by the service operating entity 1030, for example. In the event that the shop server 1010 is capable of executing a selling of contents following the policy set down by the service operating entity 1030, and the shop server 1010 accepts confirming to these policies, the service operating entity 1030 proceeds with the procedures for issuing the public key certificate for the shop. The processing for the public key certificate issuing procedures is the same as the case for the user device, described above.

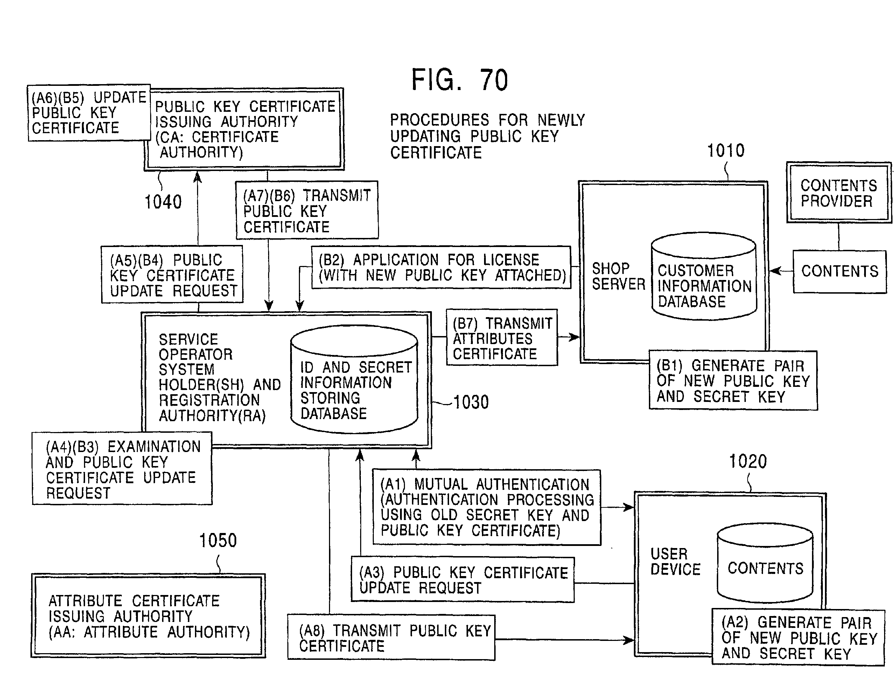

Next, the processing for updating public key certificates will be described with reference to Fig. 70. As shown in Fig. 67 and Fig. 68 (A), public key certificates have a valid period, and entities using public key certificates cannot use certificates that are out of date, so there is the need to execute updating processing while still valid, and perform issuing procedures for a public key certificate with the new of valid period set.

In Fig. 70, the public key certificate updating procedures for the user device 1020 are indicated by A1 through A8, and the public key certificate updating procedures for the shop server 1010 are indicated by B1 through B7. First, description will be made regarding the public key certificate updating procedures for the user device 1020.

### (A1) Mutual authentication

First, the user device 1020 executes mutual authentication with the service operating entity 1030. At this point, to user device 1020 has it currently valid public key certificate, so mutual authentication using the public key certificate is executed. This is the mutual authentication processing described with reference to Fig. 13 earlier. Note that in the event that the public key certificate at hand is out of date, mutual authentication processing using the shared secret key and identifier (ID) as described with reference to Fig. 12 may be executed first in the same manner as with the new issuing procedures.

### (A2) Generate pair of new public key and secret key (A3) Public key certificate issue request

### (A4) Examination and public key certificate update request

### (A5) Public key certificate update request

Upon mutual authentication having been established, the user device 1020 generates a pair of updating new public key and secret key, at the encryption processing unit within its own device, and transmits the generated public key to the service operating entity 1030, along with the certificate updating request. Upon receiving the public key certificate update request, the service operating entity 1030 examines the update request, and in the event that the updating criteria are satisfied, transmits the certificate update request to the public key certificate issuer authority (CA) 1040. Note that in the event that the public key certificate to be issued here is a public key certificate having attributes information such as shown in Fig. 68 (A), the servers operating entity 1030 judges that attributes of the entity which has transmitted the certificate issuing request, based on the ID.

### (A6) Update public key certificate

### (A7) Transmit public key certificate

### (A8) Transmit public key certificate

Upon receiving the public key certificate update request from the service operating entity 1030, the public key certificate issuer authority 1040 stores the new public key of the user device, issues a public key certificate having the electronic signature of the public key certificate issuer authority 1040 (Fig. 67 or Fig. 68 (A)), and transmits this to the service operating entity 1030. The service operating entity 1030 transmits the public key certificate received from the public key certificate issuer authority 1040, to the user device 1020. The user device stores the secret key generated in (A2) earlier along with the received public key certificate in its own device, and thus is capable of using mutual authentication, data encryption, decryption processing, etc., at the time of contents transactions.

On the other hand, the procedures for issuing the public key certificate for the shop server 1010 are basically the same as the certificate updating procedures for the user device, but execution of license application updating (the procedures in Fig. 70 B2) is necessary. In the event that the service operating entity 1030 permits updating of the license of the shop server 1010, the service operating entity 1030 proceeds with the procedures for updating the public key certificate for the shop. The processing for the public key certificate updating procedures is the same as the case for the user device, described above.

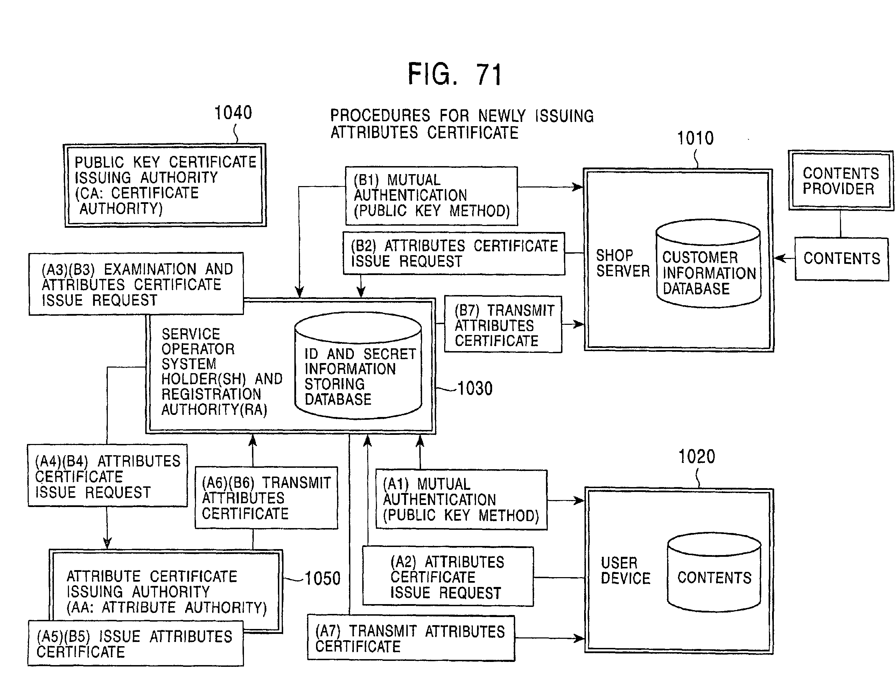

Next, procedures for newly issuing an attributes certificate will be described with reference to Fig. 71. An attributes certificate is the certificate shown in Fig. 68 (B), with and attributes certificate being issued following issuing of the public key certificate shown in Fig. 68 (A). In Fig. 71, the procedures for newly issuing an attributes certificate for the user device 1020 are indicated by A1 through A7, while the procedures for newly issuing a public key certificate for the shop server 1010 are indicated by B1 through B7. First, the procedures for newly issuing a public key certificate at the user device 1020 will be described.

### (A1) Mutual authentication

First, the user device 1020 executes mutual authentication with the service operating entity 1030. At this point, the user device 1020 already has a public key certificate issuer authority public key certificate, so mutual authentication using the public key certificate is executed.

### (A2) Attributes certificate issue request

### (A3) Examination and attributes certificate issue request

### (A4) Attributes certificate issue request

Upon mutual authentication been established, the user device 1020 transmits and attributes certificate issue request to the service operating entity 1030. Upon receipt of the attributes certificate issuing request, the service operating entity 1030 examines the issuing request, and in the event that the criteria as an entity for issuing attributes certificates are satisfied, transmits the certificate issue request to the attributes certificate issuer authority (AA) 1050. Here, the service operating entity 1030 judges the attributes of the entity transmitting the certificate issue requests, based on the ID. As described above, a user device identifier (ID) is stored beforehand in the user device to participate in contents distribution, with the user device IDs being managed by the service operating entity 1030, so that the service operating entity 1030 can confirm the user device is capable of participating in contents distribution, by making comparison of the ID transmitted from the user device and the user device ID that has already been registered.

### (A5) Issue attributes certificate

### (A6) Transmit attributes certificate

### (A7) Transmit attributes certificate

Upon receiving the attributes certificate issue request from the service operating entity 1030, the attributes certificate issuer authority 1050 stores the attributes information of the user device, issues an attributes certificate having the electronic signature of the attributes certificate issuer authority 1050 (Fig. 68 (B)), and transmits this to the service operating entity 1030. The service operating entity 1030 transmits the attributes certificate received from the attributes certificate issuer authority 1050, to the user device 1020. The user device stores the received attributes certificate in its own device, and uses it for attributes confirmation processing at the time of contents transactions.

On the other hand, the procedures (B1 through B7) for issuing the attributes certificate for the shop server 1010 are basically the same as the certificate issuing procedures for the user device. Also, the attributes certificate updating procedures are also the same as the new issuing procedures.

Next, description will be made regarding contents transactions accompanied by attributes confirmation processing by an attributes certificate or attributes confirmation processing by attributes information stored in public key certificates.

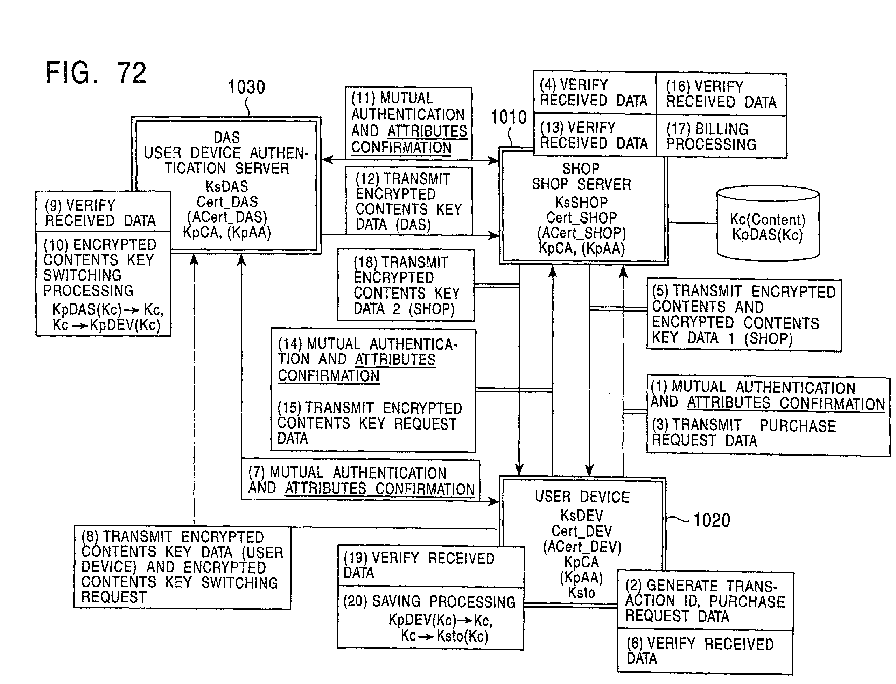

Fig. 72 illustrates the processing configuration for executing attributes confirmation processing at the time of mutual authentication. The configuration in Fig. 72 is the same as the system configuration in Fig. 1 described earlier. That is, the components are a shop server 1010 for executing selling of contents, the user device 1020 executing purchasing of contents, and the user device authentication server 1030. Here, the user device authentication server 1030 is under the management of the above-described service operating entity. The processing proceeds in order from number (1) through (20) in Fig. 72. The details of processing will be described in order of the numbers.

### (1) Mutual authentication and attributes confirmation processing

The user device 1020 attempting to purchase contents from a shop server 1010 performance mutual confirmation processing with a shop server. Between two means executing data exchange, confirmation is made by either side regarding whether or not the other party is the correct data communicator, following which the necessary data transfer is performed. The confirmation processing regarding whether or not the other party is the correct data communicator, is mutual authentication processing. A configuration wherein a session key is generated at the time of mutual confirmation processing, and encryption processing is executed with the generated session key as a shared key to perform data transmission, is one preferable data transfer method. Mutual authentication processing according to the public key method is executed by extracting the public key of the other party, following signature verification of the issuer authority of the public key certificate. For details, see the description relating to Fig. 13, made earlier.

Further, with the present embodiment, attributes confirmation processing is executed. In the event that attributes data is stored in the public key certificate of the other party of communication, the shop server 1010 makes confirmation that the attributes are data indicating a user device. In the event that there is no attributes data stored in the public key certificate, attributes are confirmed using an attributes certificate. A signature is affixed to that attributes certificate using the secret key of the attributes certificate issuer authority, so signature verification is executed using the public key: KpAA of that attributes certificate issuing authority, confirmation is made that the certificate is authorized, and confirmation is made that the "serial number" and/or "user (ID)" of the attributes certificate match the "serial number" and/or "user (ID)" of the public key certificate, following which confirmation is made of attributes information with in the certificate.

On the other hand, in the event that attributes data is stored in the public key certificate of the other party of communication, the user device 1020 makes confirmation that the attributes are data indicating a shop. In the event that there is no attributes data stored in the public key certificate, the authorization of an attributes certificate is confirmed by executing signature verification using the public key: KpAA of the attributes certificate issuing insuring authority, and confirmation is made that the "serial number" and/or "user (ID)" of the attributes certificate match the "serial number" and/or "user (ID)" of the public key certificate, following which confirmation is made of attributes information with in the certificate.

The shop server 1010 confirms that the attributes of the public key certificate or attributes certificate of the contents purchase requesting entity is the user device, the user device 1020 confirms that the attributes of the public key certificate or attributes certificate of the contents purchase request destination is a shop, and makes transition to subsequent processing.

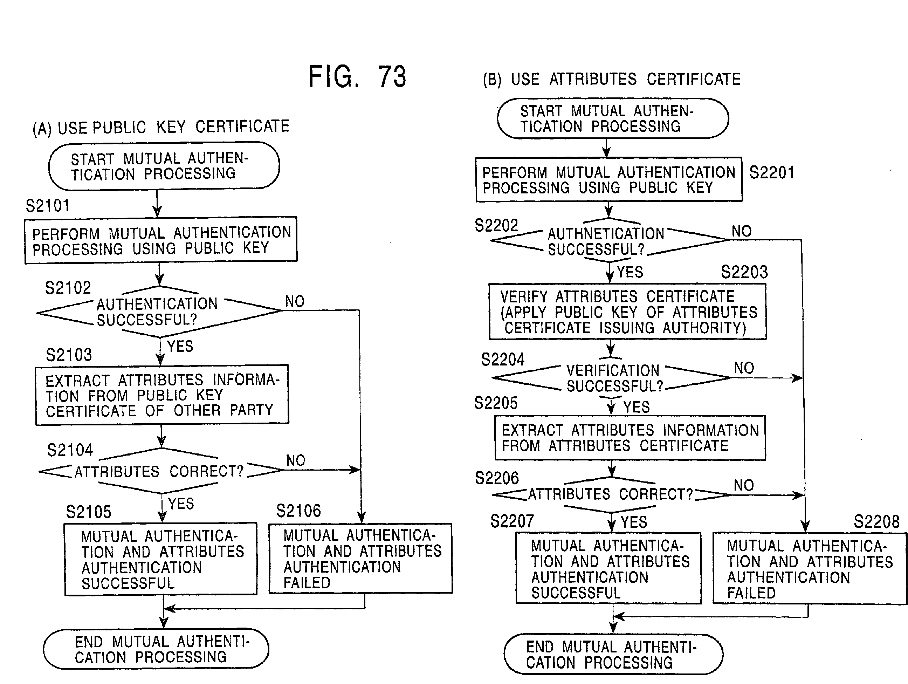

Fig. 73 shows of flowchart of the attributes confirmation processing. Fig. 73(A) is attributes confirmation processing using a public key certificate in the event that attributes data is stored in the public key certificate, and (B) is attributes confirmation processing using an attributes certificate.

The flow in Fig. 73(A) will be described first. First, in step S2101, mutual authentication processing using a public key certificate is executed (see Fig. 13), and under the conditions that authentication has been established (a judgment of Yes in S2102), attributes information is extracted from the public key certificate of the other party. In the event that the attributes information is authorized (a judgment of Yes in S2104), judgement is made that mutual authentication and attributes confirmation has succeeded (S2105), and the flow proceeds to subsequent processing. Here, the term "attributes are authorized" means that for example, in the event that the user device is attempting to access a shop server to execute a contents purchase request, this is judged to be authorized in the event that the attributes indicated shop, and then in the event that this is an attributes code indicating something other than a shop, for example, a user device, judgement is made that this is not authorized. With the judgment processing, in the event of executing a contents purchase request to a shop server for example, a step for executing attributes code comparison processing is included in the contents purchase request processing sequence (e.g., execution program), and the code [0002] provided to the shop beforehand is compared with the attributes code obtained from the public key certificate or attributes certificate of the other party of communication (entity), and in the event that these match, judgement is made that this is authorized, and in the event that these do not match, judgement is made that this is not authorized. Or, an arrangement may be made wherein, the attributes code obtained from the public key certificate or attributes certificate of the other party of communication (entity) is displayed on a display or the like, with the user comparing this with the attributes code set to the entity which the user had assumed to be the other party of communication, and passing judgment him/herself. In the event that the judgment is No in step S2102 and S2104, judgement is made that the mutual authentication and attributes confirmation has failed (S2106), and subsequent processing is canceled.

As described above, for judgment of authorized attributes, with a processing execution program for a shop, a step is executed as processing comparing between the code [0002] provided to the shop beforehand and the attributes code obtained from the public key certificate or attributes certificate of the other party of communication (entity), and with a key switching request processing executions sequence (e.g., program) for example, executed by a user device with regard to user device authentication server, a step is executed as processing for comparing between a code [0001] provided to the user device authentication server beforehand, and the attributes code obtained from the public key certificate or attributes certificate of the other party of communication (entity). Further, in communication processing between a shop and a user device authentication server, in a processing sequence (e.g., program) for specifying the other party of communication at each entity and executing, a step is executed as processing for comparing between an attributes code set as an authorized other party of communication beforehand, and the attributes code obtained from the public key certificate or attributes certificate of the other party of communication (entity).

Next, the flowchart in Fig. 73 (B) applying that attributes certificate will be described. First, in step S2201, mutual authentication processing using a public key certificate is executed (see Fig. 13), and under the conditions that authentication has been established (a judgment of Yes in S2202), verification of attributes certificate of the other party is executed using the public key of the attributes certificate issuer authority (S2203), and under the condition that the verification succeeds and that the attributes certificate linking with the public key certificate has been confirmed based on the public key certificate serial number stored in both the public key certificate and attributes certificate (a judgment of Yes in S2204), that attributes information is extracted from the attributes certificate storing the same public key certificate serial number as the public key certificate (S2205). In the event that the attributes information is authorized (a judgment of Yes in S2206), judgement is made that mutual authentication and attributes confirmation has succeeded (S2207), and the flow proceeds to subsequent processing. In the event that the judgment is No in step S2202, S2204, and S2206, judgement is made that the mutual authentication and attributes confirmation has failed (S2208), and subsequent processing is canceled.

### (2) Generate transaction ID, purchase request data, and

### (3) Transmit purchase request data

Upon success of mutual authentication between the above-described shop server 1010 and user device 1020, and attributes confirmation, the user device 1020 generates contents purchase request data. The configuration of purchase request data is the configuration shown in Fig. 14(a) described earlier, having a shop ID which is an identifier of the shop server 1010 and which is the destination of the request of contents purchasing, a transaction ID generated based on a random number for example, by the encryption processing means of the user device 1020, as an identifier for transactions, and further a contents ID serving as an identifier of the contents which the user device desires to purchase, and the electronic signature of the user device is affixed to this data.

### (4) Verify received data

Upon receiving the purchase request data shown in Fig. 14(a) from the user device 1020, the shop server executes the verification processing of the received data. As described earlier with reference to Fig. 15, in the verification processing, first, verification of the public key certificate Cert_DEV of the user device is performed, following which the user device public key: KpDEV is extracted from the public key certificate, and verification processing of the user device signature of the purchase request data is executed using the public key Kp_DEV of the user device.

In the event that judgment is made that verification is OK, i.e., that there is no tampering with the purchase request data, judgment is made that the received data is authorized contents purchase request data. In the event that the verification is not established, judgement is made that there is tampering with the purchase request data, and processing with regard to that purchase request data is cancelled.

### (5) Transmit encrypted contents and encrypted contents key data 1 (shop)

Upon verification of the purchase request data being completed at the shop server 1010, and judgment being made that this is an authorized contents purchase request with no data tampering, the shop server 1010 transmits encrypted contents and encrypted contents key data 1 (shop) to the user device. Both of these are data stored in the contents database, and are encrypted contents: Kc (content) wherein contents are encrypted with a contents key, and encrypted contents key data: KpDAS(Kc) wherein the contents key: Kc is encrypted with a public key of the user device authentication server (DAS) 1030.

The encrypted contents key data 1 (shop) has the configuration shown in Fig. 14(b), described earlier. That is, this has a user device ID which is the identifier of the user device 1020 which is the requester of the contents purchase, purchase request data (the data in Fig. 14(a) excluding the user device public key certificate), the shop processing No. generated by the shop server 1010 accompanying the contents transaction, and the encrypted contents key data: KpDAS(Kc), with the electronic signature of the shop server 1010 affixed to this data. Further, the public key certificate of the shop server 1010 is attached to the encrypted contents key data 1 (shop), and is sent to the user device 1020. Now, in the event that the shop server public key certificate has already been sent to the user device side at the time of the above-described to mutual authentication processing, or in processing prior to that, there is not necessarily the need to send it again.

### (6) Verify received data

Upon receiving the encrypted contents: Kc (content) and the encrypted contents key data 1 (shop) shown in Fig. 14(b) from the shop server 1010, the user device 1020 executes verification processing of the encrypted contents key data 1 (shop). This verification processing is processing similar to the processing flow in the above-described Fig. 15, with the user device 1020 executing verification of the public key certificate of the shop server received from the shop server 1010 using the public key KpCA of the issuer authority (CA) first, and then next executing verification of the shop signature of the encrypted contents key data 1 shown in Fig. 14(b) using the public key KpSHOP of the shop server that has been extracted from the public key certificate.

### (7) Mutual authentication and attributes confirmation processing

Upon the user device 1020 receiving the encrypted contents: Kc (content) and the encrypted contents key data 1 (shop) from the shop server 1010 and ending verification of the encrypted contents key data 1 (shop), the user device 1020 accesses the user device authentication server 1030, and executes mutual authentication processing and attributes confirmation processing between the user device 1020 and the user device authentication server 1030. This processing is executed by procedures which are the same as the mutual authentication processing and attributes confirmation processing between the shop server 1010 and user device 1020, described above.

### (8) Transmit encrypted contents key data (user device) and encrypted contents key switching request

Upon establishment of mutual authentication and attributes confirmation processing between the user device 1020 and user device authentication server 1030, the user device 1020 transmits the encrypted contents key KpDAS(Kc) received from the shop server 1010 earlier, and an encrypted contents key switching request, to the user device authentication server 1030. The configuration of the encrypted contents key data (user device) is a shown in Fig. 14(c), described earlier. That is, this has a user device authentication server ID which is the identifier of the user device authentication server 1030 which is the destination of the encrypted contents key switching request, and the encrypted contents key data received from the shop server 1010 (the data in Fig. 14(b) excluding the shop public key certificate), with the electronic signature of the user device 1020 affixed to this data. Further, the public key certificate of the shop server 1010 and the public key certificate of the user device 1020 are attached to the encrypted contents key data (user device), and is sent to the user device authentication server 1030. Now, in the event that the user device authentication server 1030 already has the user device public key certificate and the shop server public key certificate, there is not necessarily the need to send it again.

### (9) Verify received data

Upon receiving the encrypted contents key data (user device) and the encrypted contents key switching request (Fig. 14(c)) from the user device 1020, the user device authentication server 1030 executes verification processing of the encrypted contents key switching request. This verification processing is processing the same as the processing flow in the above-described Fig. 15, with the user device authentication server 1030 first executing verification of the public key certificate of the user device received from the user device 1020 using the public key KpCA of the issuer authority (CA), and then executing verification of the electronic signature of the encrypted contents key data (user device) shown in Fig. 14(c) using the public key KpDEV of the user device that has been extracted from the public key certificate. Further, verification of the public key certificate of the shop server is executed using the public key KpCA of the issuer authority (CA), and next verification of the shop signature of the (5) encrypted contents key data 1 contained in the encrypted contents key data (user device) shown in Fig. 14(c) is performed using the public key KpSHOP of the shop server extracted from the public key certificate. Also, in the event that a telegram which the user device has transmitted is in the format shown in Fig. 14(c), verification of the telegram is executed as necessary.

### (10) Encrypted contents key switching processing

At the user device authentication server 1030, upon verification of the encrypted contents key data (user device) and encrypted contents key switching request received from the user device 1020 been completed, and judgment being made that this is an authorized key switching request, the user device authentication server 1030 decrypts the encrypted contents key contained in the encrypted contents key data (user device), i.e., the data: KpDAS(Kc) wherein the contents key: Kc is encrypted with the public key KpDAS of the user device authentication server (DAS) 1030, with a secret key KsDAS of the user device authentication server 1030, to obtain the contents key Kc, and further generates an encrypted contents key: KpDEV(Kc) wherein the contents key Kc is encrypted with the public key: KpDEV of the user device. That is to say, key switching processing is executed in the order of KpDAS(Kc) → Kc → KpDEV(Kc).

As described earlier with reference to Fig. 16, with this processing, the contents key data: KpDAS(Kc) encrypted with the public key KpDAS of the user device authentication server (DAS) 1030 is extracted from the encrypted contents key data (user device), and next, this is decrypted with the secret key KsDAS of the user device authentication server 1030, and the contents key Kc is obtained, and next, the contents key Kc obtained by decryption is re-encrypted with the public key: KpDEV of the user device, generating the encrypted contents key: KpDEV(Kc).

### (11) Mutual authentication and attributes confirmation processing

Upon the above-described key switching processing of the encrypted contents key been completed at the user device authentication server 1030, the user device authentication server 1030 accesses the shop server 1010, and mutual authentication and attributes confirmation processing is executed between the user device authentication server 1030 and the shop server 1010. This processing is executed by procedures the same as the mutual authentication processing and attributes confirmation processing between the shop server 1010 and the user device 1020, described above.

### (12) Transmit encrypted contents data

Upon the mutual authentication and attributes confirmation processing being established between the user device authentication server 1030 and the shop server 1010, the user device authentication server 1030 transmits encrypted contents key data (DAS) to the shop server 1010. The configuration of the encrypted contents key data (DAS) is as described with reference to Fig. 17(d) above. This has a shop ID which is an identifier of the shop server 1010 which is the destination of the contents purchase request, the encrypted contents key data (user device) (the data excluding the shop and the user device public key certificate shown in Fig. 14(c)), and further the encrypted contents key data: KpDEV(Kc) generated by the user device authentication server 1030 in the above-described key switching processing, with the electronic signature of the user device authentication server 1030 being affixed to the data. Further, the public key certificates of the user device authentication server 1030 and the user device 1020 are attached to the encrypted contents key data (DAS), and sent to the shop server 1010. Note that in the event that the shop server already holds these public key certificates, sending again is not necessarily needed.

Also, in the event that the user device authentication server 1030 is an entity acknowledged to be a reliable third party, an arrangement may be used wherein the encrypted contents key data (DAS) is not of a configuration containing the (8) encrypted contents key data (user device) generated by the user device without change, as shown in Fig. 17(d), but rather wherein the user device authentication server 1030 extracts the data of the user device ID, the transaction ID, contents ID, shop processing No., and contents key KpDEV(Kc) encrypted with the public key of the user device, affixes the signature to these, and uses this as encrypted contents key data (DAS) as shown in Fig. 18(d'). In this case, verification of the (8) encrypted contents key data (user device) is unnecessary, so the public key certificate of the user device authentication server 1030 is the only public key certificate that needs to be attached.

### (13) Verify received data

The shop server 1010 which has received the encrypted contents key data (DAS) (Fig. 17(d)) from the user device authentication server 1030 executes verification processing of encrypted contents key data (DAS). This verification processing is the same processing as the flow of the processing shown in Fig. 15 described above, with a shop server 1010 first executing verification of the public key certificate of the user device authentication server received from the user device authentication server 1030 with the public key KpCA of the issuer authority (CA), and then using the public key KpDAS of the user device authentication server 1030 extracted from the public key certificate to execute verification of electronic signature of the encrypted contents key data (DAS) shown in Fig. 17(d). Further, verification of the public key certificate of the user device is executed using the public key KpCA of the issuer authority (CA), and next, verification is executed with regard to the user device signature of the (8) encrypted contents key data (user device) contained in the encrypted contents key data (DAS) shown in Fig. 17(d), using the public key KpDEV of the user device extracted from the public key certificate. Also, in the event that a telegram which the user device has transmitted is in the format shown in Fig. 14(c), verification of the telegram is executed as necessary.

Now, in the event that the shop server 1010 receives the simplified encrypted contents key data (DAS) described above with reference to Fig. 18(d'), the shop server 1010 only performs processing of executing verification of the public key certificate of the user device authentication server using the public key KpCA of the issuer authority (CA), and then executing verification of the electronic signature of the encrypted contents key data (DAS) shown in Fig. 18(d') using the public key KpDAS of the user device authentication server 1030 extracted from the public key certificate.

### (14) Mutual authentication and attributes confirmation

### (15) Transmit encrypted contents key request data

Next, the user device 1020 transmits encrypted contents key request data to the shop server. Note that at this time, in the event that a request is to be executed with a different session from the previous request, mutual authentication and attributes confirmation are executed again, and encrypted contents key request data is transmitted from the user device 1020 to the shop server 1010, under the conditions that mutual authentication and attributes confirmation are established. Also, in the event that a telegram which the user device has transmitted is in the format shown in Fig. 14(c), verification of the telegram is executed as necessary.

The configuration of the encrypted contents key request data is as shown in Fig. 17(e). The encrypted contents key request data has the shop ID which is the identifier of the shop server 1010 which is the destination of the contents purchase request, the transaction ID which is the identifier of contents transaction generated by the encryption processing means of the user device 1020 based on a random number, and further a contents ID which is the identifier of contents which the user device desires to purchase, and further the shop processing No. contained within the data which the shop has generated earlier and transmitted to the user device 1020 as encrypted contents key data 1 (shop) (see Fig. 14(b)), with the electronic signature of the user device being affixed to this data. Further, the public key certificate of the user device is attached to the encrypted contents key request data, and sent to the shop server 1010. Note that in the event that the public key certificate is already held at the shop side, it is not necessarily needed to send this again.

### (16) Verification processing, and

### (17) Billing processing

Upon receiving the encrypted contents key request data from the user device, the shop server 1010 executes verification processing of the encrypted contents key request data. This is the same processing as that described with reference to Fig. 15. Upon the data verification finishing, the shop server 1010 executes billing processing relating to the contents transaction. The billing processing is processing for receiving contents charges from a transaction account of the user. The received contents charges are distributed among various parties involved, such as the copyright holder of the contents, the shop, the user device authentication server administrator, etc.

Up to this billing processing, the key switching processing process of the encrypted contents keys by the user device authentication server 1030 is mandatory, so the shop server 1010 cannot execute billing processing only by processing with the user device. Also, the user device 1020 cannot decrypt the encrypted contents key, and accordingly can not use the contents. The user device authentication server records contents transaction contents with all key switching processing that has been executed in the user device authentication server license management database described with reference to Fig. 6, and can know all contents transactions which are object of billing. Accordingly, contents transaction performed by the shop side alone become impossible, thereby preventing unauthorized contents sales.

### (18) Transmit encrypted contents key data 2 (shop)

Upon the billing processing at the shop server 1010 ending, the shop server 1010 transmits encrypted contents key data 2 (shop) to the user device 1020.

The configuration of the encrypted contents key data 2 (shop) is as shown in Fig. 17(f). This has the user device ID which is the identifier of the user device 1020 which is the requester of the encrypted contents key request, and the encrypted contents key data (DAS) received from the user device authentication server 1030 (data excluding the public key certificates of the user device and user device authentication server shown in Fig. 17(d)), with the electronic signature of the shop server 1010 having been affixed to this data. Further, the public key certificate of the shop server 1010 and the public key certificate of the user device authentication server 1030 are attached to the encrypted contents key data 2 (shop), and sent to the user device 1020. In the event that the user device 1020 already holds the public key certificate of the user device authentication server and the public key certificate of the shop server, it is not necessarily needed to send this again.

Now, in the event that the user device authentication server 1030 is an entity acknowledged to be a reliable third party, and in the event that the encrypted contents key data (DAS) which the shop server 1010 receives from the user device authentication server 1030, is the simplified encrypted contents key data (DAS) described earlier with reference to Fig. 18(d'), the shop server 1010 sends the encrypted contents key data 2 (shop) shown in Fig. 18(f') to the user device. That is, the shop server attaches the public key certificate of the shop server 1010 and the public key certificate of the user device authentication server 1030 to the data wherein the signature of the shop server has been affixed to the simplified encrypted contents key data (DAS) shown in Fig. 18(d'), and sends this to the user device 1020.

### (19) Verify received data

Upon receiving the encrypted contents key data 2 (shop) from the shop server 1010, the user device 1020 executes verification processing of the encrypted contents key data 2 (shop). This verification processing is the same as the processing in the processing flow described earlier with reference to Fig. 15, with the user device 1020 first executing verification of the public key certificate of the shop server received from the shop server 1010, using the public key KpCA of the issuer authority (CA), then executes verification of the electronic signature of the encrypted contents key data 2 (shop) shown in Fig. 17(f), using the public key KpSHOP of the shop server 1010 extracted from the public key certificate. Further, verification of the public key certificate of the user device authentication server 1030 is executed using the public key KpCA of the issuer authority (CA), and verification is executed of the signature of the (12) encrypted contents key data (DAS) contained in the encrypted contents key data 2 (shop) shown in Fig. 17(f), using the public key KpDAS of the user device authentication server 1030 extracted from the public key certificate. Also, in the event that some sort of transmitted telegram is in the format shown in Fig. 17(f), verification of the telegram is executed as necessary.

### (20) Saving processing

The user device 1020 which has verified the encrypted contents key data 2 (shop) received from the shop server 1010 decrypts the encrypted contents key: KpDEV(Kc) encrypted with its own public key KpDEV contained in the encrypted contents key data 2 (shop), using its own secret key KsDEV, further generates the encrypted contents key: Ksto(Kc) by encryption using the storing key Ksto of the user device, and stores this in the storing means of the user device 1020. At the time of using contents, the encrypted contents key: Ksto(Kc) is decrypted using the stored key Ksto and the contents key Kc is extracted, and the extracted contents key Kc is used to execute decryption processing of the encrypted contents Kc (Content), thereby reproducing and executing the contents (Content).

As described above, with each of the processes accompanying contents distribution, the entities which execute communication are of a configuration which enables processing following confirmation of the attributes of the other party by attributes confirmation, such as being a user device, for example, so unauthorized contents transactions, such as processing wherein a shop pretends to be a user device and executes contents transactions, or wherein someone pretends to be a shop server and illegally obtains credit card numbers from the user device, for example, can be prevented.

For example, in the event that the user device can confirm by attributes confirmation that the other party of communication of the user device is a shop, the user device can execute processing accompanying purchasing of contents as processing with regard to a shop without worry, and also, in the event that confirmation is made in the attributes confirmation that the other party of communication of the user device is a user device authentication server, processing with regard to a user device authentication server, e.g., transmission of key switching requests, can be executed. According to the present confirmation, the attributes of the other party of communication can be confirmed by performing attributes confirmation, so authorized processing according to each other party of communication is executed. Further, erroneously transmitting secret data to an unauthorized other party of communication can be done away with, thereby preventing data leaking as well.

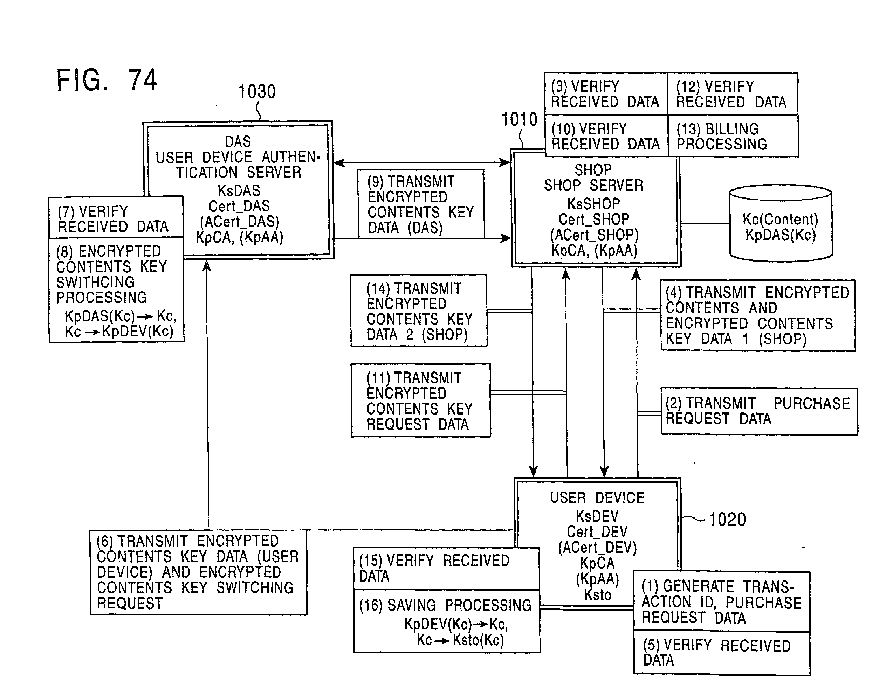

Next, a form wherein mutual confirmation by mutual confirmation processing is not executed, and only signature verification of the received data is executed to execute conformation of data tampering and attributes, thereby executing contents transactions, will be described with reference to Fig. 74.

The processing shown in Fig. 74 is executed as processing with the mutual confirmation processing being omitted from the processing shown in Fig. 72. The processing proceeds in the order of number (1) through (16) in Fig. 74. The processes will be described in detail in order of the numbers.

### (1) Generate transaction ID, purchase request data, and

### (2) Transmit purchase request data

First, the user device 1020 generates contents purchase request data, and transmits this to the shop server 1010. The configuration of the contents purchase request data is the confirmation described with reference to Fig. 14(a) earlier.

### (3) Verify received data

Upon receiving the purchase request data shown in Fig. 14(a)from the user device 1020, the shop server executes verification processing of the received data. With the verification processing according to the present embodiment, attributes information checking is performed along with checking for tampering of the purchase request data.

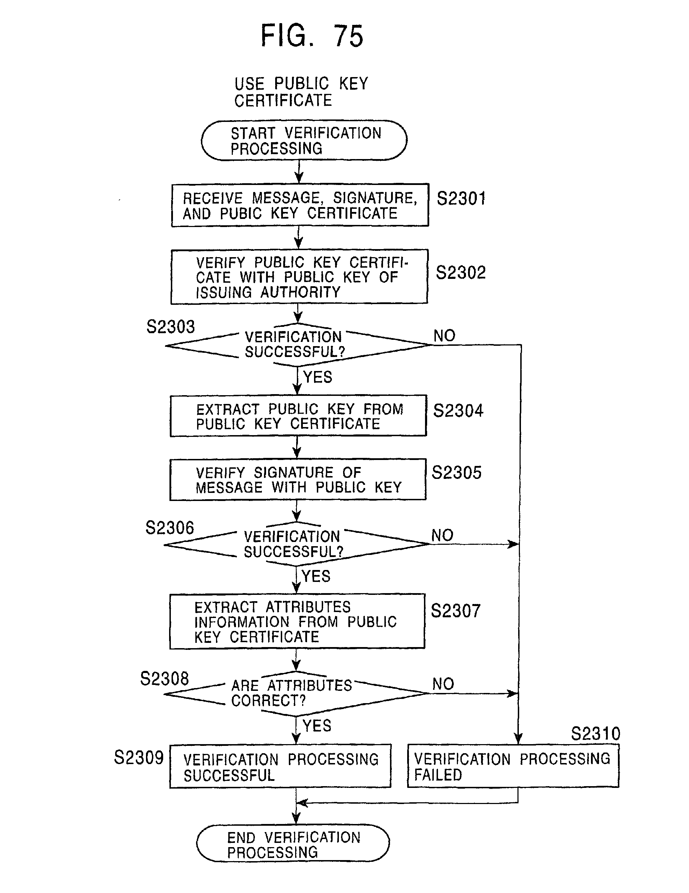

Fig. 75 shows a received data verification processing flow in the event that attributes information is stored in the public key certificate. First, upon receiving a message and signature (purchase request data), and the public key certificate of the user device (S2301), the shop server 1010 verifies the public key certificate of the user device using the public key KpCA of the public key certificate issuer authority (S2302). In the event that verification is established (Yes in S2303), the public key KpDEV of the user device is extracted from the public key certificate (S2304), and verification of the user device signature of the purchase request data is performed using the public key KpDEV of the user device (S2305). Further, in the event that verification is successful (Yes in S2306), attributes information is extracted from the public key certificate (S2307), judgement is made regarding whether or not these are authorized attributes (here, attributes indicating a user device) (S2308), and in the event that these are authorized, the verification processing is taken to be successful (S2309), and the flow proceeds to the next processing. In the event that judgement is No in step S2303, S2306, or S2308, processing is canceled as the verification processing having failed (S2310).

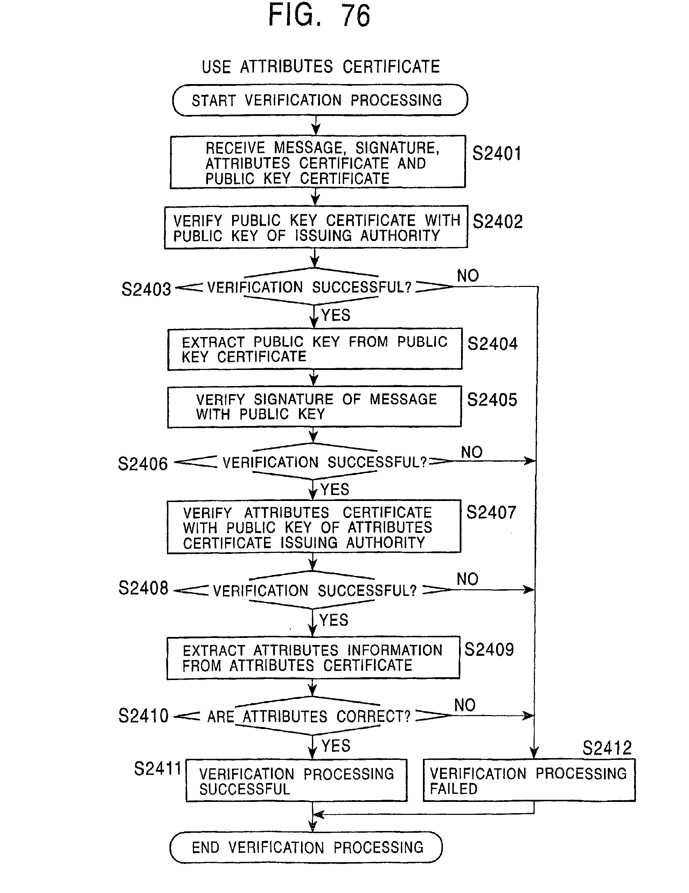

Next, the reception data verification processing using the public key certificate and attributes certificate will be described using the flowchart in Fig. 76. First, upon receiving a message and signature (purchase request data), and the public key certificate and attributes certificate of the user device (S2401), the shop server 1010 verifies the public key certificate of the user device using the public key KpCA of the public key certificate issuer authority (S2402). In the event that verification is established (Yes in S2403), the public key KpDEV of the user device is extracted from the public key certificate (S2404), and verification of the user device signature of the purchase request data is performed using the public key KpDEV of the user device (S2405). Further, in the event that verification is successful (Yes in S2406), the attributes certificate is verified with the public key KpAA of the attributes certificate issuer authority (S2407). Under the condition that verification is successful (Yes in S2408), attributes information is extracted from the attributes certificate (S2409), judgement is made regarding whether or not these are authorized attributes (here, attributes indicating a user device) (S2410), and in the event that these are authorized, the verification processing is taken to be successful (S2411), and the flow proceeds to the next processing. In the event that judgement is No in step S2403, S2406, S2408, or S2410, processing is canceled as the verification processing having failed (S2412).

### (4) Transmit encrypted contents and encrypted contents key data 1 (shop)

Upon the verification of the purchase request data being completed at the shop server 1010, and judgment made that the contents purchase request is authorized and without data tampering, and the attributes confirmed, the shop server 1010 transmits the encrypted contents and encrypted contents key data 1 (shop) (see Fig. 14(b)) to the user device.

### (5) Verify received data

Upon receiving the encrypted contents: Kc (content) and encrypted contents key data 1 (shop) shown in Fig. 14(b) from the shop server 1010, the user device 1020 executes verification processing and attributes confirmation processing for the encrypted contents key data 1 (shop). This verification processing is processing the same as the processing in the flowcharts in Fig. 75 and Fig. 76, described above. In this case, in the event that the attributes of the public key certificate or attributes certificate do not indicate shop, the processing is cancelled.

### (6) Transmit encrypted contents key data (user device) and encrypted contents key switching request

Next, the user device 1020 transmits the encrypted contents key KpDAS(Kc) received earlier from the shop server 1010, and an encrypted contents key switching request (see Fig. 14(c)), to the user device authentication server 1030.

### (7) Verify received data

Upon receiving the encrypted contents key data (user device) and encrypted contents key switching request (Fig. 14(c)) from the user device 1020, the user device authentication server 1030 executes verification processing of the encrypted contents key switching request. This verification processing is processing the same as the processing in the flowcharts in Fig. 75 and Fig. 76, described above, wherein attributes confirmation is also executed. In this case, in the event that the attributes of the public key certificate or attributes certificate do not indicate user device, the processing is cancelled.

### (8) Encrypted contents key switching processing

Next, at the user device authentication server 1030, key switching processing is executed as KpDAS(Kc) → Kc → KpDEV(Kc).

### (9) Transmit encrypted contents data

Next, the user device authentication server 1030 transmits the encrypted contents key data (DAS) to the shop server 1010. The confirmation of the encrypted contents key data (DAS) is the configuration shown in Fig. 17(d) described earlier.

### (10) Verify received data

Upon receiving the encrypted contents key data (DAS) (Fig. 17(d)) from the user device authentication server 1030, the shop server 1010 executes verification processing of the encrypted contents key data (DAS). This verification processing is processing the same as the processing in the flowcharts in Fig. 75 and Fig. 76, described above, wherein attributes confirmation is also executed. In this case, in the event that the attributes of the public key certificate or attributes certificate do not indicate user device authentication server (service operating entity), the processing is cancelled.

### (11) Transmit encrypted contents key request data

Next, the user device 1020 transmits encrypted contents key request data to the shop server. The configuration of the encrypted contents key request data is as shown in Fig. 17(e).

### (12) Verification processing, and

### (13) Billing processing

Upon receiving the encrypted contents key request data from the user device, and shop server 1010 executes verification processing of the encrypted contents key request data. This is processing the same as the processing in the flowcharts in Fig. 75 and Fig. 76, described above, wherein attributes confirmation is also executed. In this case, in the event that the attributes of the public key certificate or attributes certificate do not indicate user device, the processing is cancelled. Upon the data verification ending, the shop server 1010 executes billing processing relating to the contents transaction.

### (14) Transmit encrypted contents key data 2 (shop)

Upon the billing processing at the shop server 1010 ending, the shop server 1010 transmits the encrypted contents key data 2 (shop) to the user device 1020. The configuration of the encrypted contents key data 2 (shop) is as shown in Fig. 17(f), described earlier.

### (15) Verify received data

### (16) Saving processing

Upon receiving the encrypted contents key data 2 (shop) from the shop server 1010, the user device 1020 executes verification processing of the encrypted contents key data 2 (shop). This verification processing is processing the same as the processing in the flowcharts in Fig. 75 and Fig. 76, described above, wherein attributes confirmation is also executed. In this case, in the event that the attributes of the public key certificate or attributes certificate do not indicate shop, the processing is cancelled. Upon the data verification ending, the user device 1020 performs contents saving processing, i.e., decrypting the encrypted contents key: KpDEV(Kc) encrypted with its own public key KpDEV using its own secret key KsDEV, and further encrypting with the stored key Ksto of the user device to generate the encrypted contents key: Ksto(Kc), and storing in the storing means of the user device 1020.

In this way, with the processing shown in Fig. 74, attributes confirmation is not made at the time of mutual authentication, but is of a configuration wherein processing is executed for confirming attributes in the signature verification of the received data, so the processing is simplified, and efficiency of processing accompanying contents transactions is achieved.

Though the above-described embodiment to which attributes confirmation by attributes data has been described with regard to a configuration wherein key switching processing is executed that the service operating entity, attributes confirmation processing can be applied to configurations such as the above-described configuration applying a log collection server, for example. The safety of data communication and certain security can be further heightened in other general entities which execute data exchange, by setting attributes based on the functions characterize in each of the entities, storing the set attributes in public key certificates or attributes certificates, and executing attributes confirmation processing of the other party of communication using these certificates. Also, attributes confirmation processing can be executed along with conventional mutual authentication processing and signature verification processing, so one or a combination of signature verification processing, mutual authentication processing, and attributes confirmation processing, can be selectively used depending on the degree of security, such as performing only signature verification are only mutual authentication for normal data communication, and performing attributes confirmation processing as necessary.

Now, the present invention has been described in detail with reference to a particular embodiment. However, it is self-evident that one skilled in the art can make various modifications and substitutions to the embodiment without departing from the scope or spirit of the present invention. In other words, the present invention has been disclosed in the form of an example, and the embodiment should not be interpreted restrictively. The scope of the present invention is to be determined solely by the claims given at the beginning.

### Industrial Applicability

As described above, with the contents charges settlement system based on tickets and contents charges settlement method based on tickets according to the present invention, a ticket issuer server which receives contents purchase requests sends, to the user device, tickets storing as contents charges information charges receiving entity identifiers and distribution charges data for the charges receiving entities, under the condition that billing processing with regard to the contents purchase request of the user device has ended, enabling billing processing accompanying purchasing of contents in a sure manner.

Further, with the contents charges settlement system based on tickets and contents charges settlement method based on tickets according to the present invention, following verification of the tickets and following confirmation of the authorization of the tickets, entities having charges distribution rights accompanying contents distribution execute processing such as key switching or contents distribution or the like, and execute cashing processing based on tickets, so the entities can receive the distribution charges of the contents in a sure manner.

Further, with the contents charges settlement system based on tickets and contents charges settlement method based on tickets according to the present invention, processing for switching a contents key KpDAS(Kc) encrypted with a public key of the user device authentication server (DAS) with a contents key KpDEV(Kc) encrypted with a public key KpDEV of the user device is executed under the condition of receipt of a ticket by the user device authentication server (DAS) managing contents distribution, so the user device authentication server can accurately know transactions of contents.

Further, with the contents charges settlement system based on tickets and contents charges settlement method based on tickets according to the present invention, at least one of mutual authentication processing or signature generation and verification processing are executed in data communication executed between user devices, shops, and user device authentication servers, so the security of data communication and data tampering can be checked.

With the contents distribution system and the contents distribution method having a log management configuration according to the present invention, contents purchase log data can be collected according to the updating processing of public key certificates of user devices which purchase contents, so the system operator (SH: System Holder) managing the log collection server can accurately know the state of sales of contents.

Further, with the contents distribution system and the contents distribution method having a log management configuration according to the present invention, the public key certificate of the user device is mandatory for mutual authentication processing with the shop server, or for verification processing of signatures added to the purchase request data from the user device, so the user device needs to transmit log data to the log collection server and update the public key certificate so as to hold a valid public key certificate, in order to purchase contents. Accordingly, a user device cannot purchase contents having an out-of-date public key certificate, thus encouraging updating of public key certificates.

Further, with the contents distribution system and the contents distribution method having a log management configuration according to the present invention, log data is collected from user devices in a sure manner by the log collection server managed by the system operator, so the state of sales of contents can be managed. Further, contents sales can be accurately distributed to sales profits obtaining rights holders such as contents providers and the like, based on the sales distribution information in the log data.

Further, with the contents distribution system and the contents distribution method having a log management configuration according to the present invention, a session key Kses generated at the time of mutual confirmation is used as a generating key for a integrity check value (ICV) for data communicated between the entities such as user devices, shop servers, log collection servers, etc., and the ICV is added to the transmitted data and communicated, so the safety of the communicated data is further heightened.

With the data communication system containing attributes confirmation processing and the data communication method containing attributes confirmation processing according to the present invention, between entities which execute data communication, attributes information set to an entity which is the other party of communication is obtained from the public key certificate or attributes certificate of the entity which is the other party of communication, and attributes confirmation based on the obtained attributes information is a condition for processing execution, so an entity which is the other party of communication is prevented from executing processing in guise of another entity, so safe data communication, e.g., processing accompanying contents transactions, is enabled.

Further, with the data communication system containing attributes confirmation processing and the data communication method containing attributes confirmation processing according to the present invention, different attributes codes are provided to for each function of, for example, user devices which execute purchasing of contents, shop servers which receive purchase requests for contents, a system holder which manages distribution of contents, and so forth, and attributes confirmation is executed based on the attributes codes, so data transmission accompanying various contents purchasing processing is enabled following confirmation by a user device that the other party of communication is a shop server, for example, thereby preventing leaking of secret data, and the like.

Further, with the data communication system containing attributes confirmation processing and the data communication method containing attributes confirmation processing according to the present invention, the attributes information is stored in a public key certificate or attributes certificate, and the signature of the public key certificate issuer authority or the attributes certificate issuer authority is generated and stored in each of the certificates, whereby unauthorized processing using unauthorized attributes information can be prevented.

## Claims

1. A contents charges settlement system based on tickets, comprising:
a ticket issuing server for issuing tickets storing a charges reception entity identifier as contents charges information accompanying processing for purchasing of contents, and allocated charges data with regard to said charges reception entity, under the conditions that billing processing based on purchase request data from a user device has been completed;
a user device for transmitting a contents purchase request to said ticket issuing server, and receiving said ticket;
a user device authentication server, which is a user device authentication server configured as one of said charges reception entity, for executing conversion from an encrypted contents key which is undecryptable with a stored key in said user device to an encrypted contents key which is decryptable with a stored key in said user device by key-changing processing, under the conditions that said ticket has been received from said user device; and
a ticket cashing server for executing charges settlement processing based on the received ticket, according to receipt of a ticket from said charges reception entity.

2. A contents charges settlement system based on tickets, according to Claim 1; wherein tickets issued by said ticket issuing server store one or a plurality of charges reception entity identifiers as contents charges information and allocated charges data with regard to one or a plurality of charges reception entities, and in the event of issuing a ticket with a plurality of charges reception entity identifiers said ticket issuing server issues to said user device a number of tickets corresponding to said charges reception entity identifiers;
and wherein said user device has a configuration for executing processing for transmitting the received tickets to each of the entities corresponding to the charges reception entity identifiers.

3. A contents charges settlement system based on tickets, according to Claim 1; wherein a transaction identifier for identifying contents transaction processing is stored in tickets issued by said ticket issuing server, and in the event of issuing a plurality of tickets with regard to one contents transaction from said user device, the plurality of tickets are issued storing a common transaction identifier.

4. A contents charges settlement system based on tickets, according to Claim 1; wherein tickets issued by said ticket issuing server store a charges reception entity identifier as contents charges information and allocated charges data with regard to said charges reception entity, and also contain an electronic signature of said ticket issuing server;
wherein the charges reception entity which executes processing based on receipt of said ticket executes signature verification processing of the electronic signature of said ticket issuing server contained in the received ticket, and executes processing based on the receipt of said ticket under the conditions that conformation is made that there is no tampering with data.

5. A contents charges settlement system based on tickets, according to Claim 1; wherein a user device authentication server configured as one of said charges reception entity is of a configuration for executing,
as conditions for receipt of said ticket;
key switching processing consisting of decrypting an encrypted contents key KpDAS(Kc) encrypted with a public key KpDAS of said user device authentication server (DAS) with own secret key KsDAS to obtain a contents key Kc, and further re-encrypting with a public key KpDEV of said user device (DEV).

6. A contents charges settlement system based on tickets, according to Claim 1; wherein validity data is contained in a ticket issued by said ticket issuing server, as a valid processing period for charges settlement processing based on tickets;
and wherein said ticket cashing server executes charges settlement processing based on said ticket following verification of said validity, under the conditions that validity is confirmed.

7. A contents charges settlement system based on tickets, according to Claim 1; further having a distribution server as a charges reception entity for executing distribution of encrypted contents and encrypted contents keys under the conditions of receipt of tickets from said user device;
wherein encrypted contents keys transmitted by said distribution server are encrypted contents keys which are undecryptable by a stored key of said user device.

8. A contents charges settlement system based on tickets, according to Claim 1; wherein contents purchase request data which said user device generates and transmits to said ticket issuing server is configured as data having a user device ID serving as a user device identifier, a transaction ID serving as a contents transaction identifier, and a contents ID serving as a contents identifier which is the object of purchase request, along with containing an electronic signature of the user device;
wherein said ticket issuing server checks whether or not there is data tampering by executing signature verification of said contents purchase request data, and adds a new entry in a ticket issuing management database based on said contents purchase request data, sets status information indicating the processing state with regard to said added entry, and manages the processing sequence transition at said ticket issuing server based on said status information.

9. A recording medium, storing electronic tickets containing data exchanged between entities relating to contents transactions according to contents transaction processing;
said recording medium storing charges reception entity identifiers serving as contents charges information accompanying contents purchase processing and allocated charges data with regard to said charges reception entities.

10. A recording medium storing electronic tickets, according to Claim 9, wherein said tickets are of a configuration storing, as contents charges information, a plurality of charges reception entity identifiers and allocated charges data to each of said plurality of charges reception entities.

11. A recording medium storing electronic tickets, according to Claim 9, wherein said tickets are of a configuration storing validity data as a valid processing period for charges settlement processing based on tickets.

12. A recording medium storing electronic tickets, according to Claim 9, wherein said tickets are of a configuration storing an electronic signature of a ticket issuing server.

13. A contents charges settlement method based on tickets, comprising:
a step for transmitting a contents purchase request from a user device to a ticket issuing server;
a step at the ticket issuing server for executing billing processing based on contents purchase request data from the user device, and issuing tickets storing a charges reception entity identifier as contents charges information accompanying processing for purchasing of contents, and allocated charges data with regard to said charges reception entity, under the conditions the billing processing has been completed;
a step at the user device for receiving said ticket;
a step at a user device authentication server, which is configured as one of said charges reception entity, for executing conversion from an encrypted contents key which is undecryptable with a stored key in said user device to an encrypted contents key which is decryptable with a stored key in said user device by key-changing processing, under the conditions that said ticket has been received from said user device; and
a step at a ticket cashing server for executing charges settlement processing based on the received ticket, according to receipt of a ticket from said charges reception entity.

14. A contents charges settlement method based on tickets, according to Claim 13; wherein tickets issued by said ticket issuing server store one or a plurality of charges reception entity identifiers as contents charges information and allocated charges data with regard to a plurality of charges reception entities, and in the event of issuing a ticket with one or a plurality of charges reception entity identifiers said ticket issuing server issues to said user device a number of tickets corresponding to charges reception entity identifiers;
and wherein said user device executes processing for transmitting the received tickets to each of the entities corresponding to the charges reception entity identifiers.

15. A contents charges settlement method based on tickets, according to Claim 13; wherein a transaction identifier for identifying contents transaction processing is stored in tickets issued by said ticket issuing server, and in the event of issuing a plurality of tickets with regard to one contents transaction from said user device, the plurality of tickets are issued storing a common transaction identifier.

16. A contents charges settlement method based on tickets, according to Claim 13; wherein tickets issued by said ticket issuing server store a charges reception entity identifier as contents charges information and allocated charges data with regard to said charges reception entity, and also contain an electronic signature of said ticket issuing server;
wherein the charges reception entity which executes processing based on receipt of said ticket executes signature verification processing of the electronic signature of said ticket issuing server contained in the received ticket, and executes processing based on the receipt of said ticket under the conditions that conformation is made that there is no tampering with data.

17. A contents charges settlement method based on tickets, according to Claim 13; wherein a user device authentication server configured as one of said charges reception entity executes key switching processing which generates an encrypted contents key KpDEV(Kc), consisting of decrypting an encrypted contents key KpDAS(Kc) encrypted with a public key KpDAS of said user device authentication server (DAS) with own secret key KsDAS to obtain a contents key Kc, and further re-encrypting with a public key KpDEV of said user device (DEV);
with receipt of said ticket as the condition thereof.

18. A contents charges settlement method based on tickets, according to Claim 13; wherein validity data is contained in a ticket issued by said ticket issuing server, as a valid processing period for charges settlement processing based on tickets;
and wherein said ticket cashing server executes charges settlement processing based on said ticket following verification of said validity, under the conditions that validity is confirmed.

19. A contents charges settlement method based on said tickets, according to Claim 13; further having a distribution server as a charges reception entity for executing distribution of encrypted contents and encrypted contents keys under the conditions of receipt of tickets from said user device;
wherein encrypted contents keys transmitted by said distribution server are encrypted contents keys which are undecryptable by a stored key of said user device.

20. A contents charges settlement method based on tickets, according to Claim 13; wherein contents purchase request data which said user device generates and transmits to said ticket issuing server is configured as data having a user device ID serving as a user device identifier, a transaction ID serving as a contents transaction identifier, and a contents ID serving as a contents identifier which is the object of purchase request, along with containing an electronic signature of the user device;
wherein said ticket issuing server checks whether or not there is data tampering'by executing signature verification of said contents purchase request data, and adds a new entry in a ticket issuing management database based on said contents purchase request data, sets status information indicating the processing state with regard to said added entry, and manages the processing sequence transition at said ticket issuing server based on said status information.

21. A program providing medium for providing a computer program for executing contents charges settlement processing based on tickets on a computer system, said computer program comprising:
a step for receiving tickets storing a charges reception entity identifier as contents charges information accompanying processing for purchasing of contents, and allocated charges data with regard to said charges reception entity;
a step for executing signature verification processing of the electronic signature of said ticket issuing server contained in the received ticket;
a step for executing processing based on the receipt of said ticket under the conditions that conformation is made that there is no tampering with data by verification of the signature;
a step for executing a charges settlement request based on said ticket.

22. A contents distribution system having a log managing configuration, comprising:
a shop server for receiving contents purchase requests from a user device, and transmitting sales confirmation data to the user device;
a user device for transmitting contents purchase request data to the shop server and executing contents purchase requesting processing based on procedures using a public key certificate of the user device having validity set, and also receiving said sales confirmation data and generating and storing a purchase log based on the received sales confirmation data; and
a log collection server for receiving an updating request for a public key certificate of said user device based on receipt of said purchase log, and transmitting an updated public key certificate of the user device issued by a public key certificate authority to the user device.

23. A contents distribution system having a log managing configuration, according to Claim 22, wherein procedures using a public key certificate having validity set consist of mutual authentication processing using a public key certificate, executed between said user device and shop server.

24. A contents distribution system having a log managing configuration, according to Claim 22, wherein procedures using a public key certificate having said validity set is signature verification processing executed by said shop server with regard to an electronic signature generated by said user device as to contents purchase request data sent from said user device to said shop server, and said signature verification processing is processing using a public key stored in a public key certificate of the user device.

25. A contents distribution system having a log managing configuration, according to Claim 22, wherein at least part of data exchanged between said user device and said shop server is transmitted with an integrity check value (ICV), based on a session key Kses generated at the time of mutual authentication executed between said user device and said shop server, added thereto, and wherein data tampering check processing based on the ICV is executed at the receiving side.

26. A contents distribution system having a log managing configuration, according to Claim 22, wherein said user device adds, to a purchase log transmitted to said log collection server, an integrity check value (ICV) based on a session key Kses generated at the time of mutual authentication executed between said user device and said log collection server, and transmits, and wherein data tampering check processing based on the ICV is executed at the log collection server side.

27. A contents distribution system having a log managing configuration, according to Claim 22, wherein said user device generates and adds to a purchase log transmitted to said log collection server an electronic signature of said user device, and wherein said log collection server executes verification processing of the electronic signature of said user device.

28. A contents distribution system having a log managing configuration, according to Claim 22, wherein said log collection server manages charges allocation information as to one or more charges reception entities for contents charges, based on a purchase log received from said user device, and executes response processing based on said charges allocation information corresponding to sales confirmation requests from charges reception entities.

29. A contents distribution system having a log managing configuration, according to Claim 22, wherein said shop server manages contents sales data, and executes processing for transmitting all sales data within a predetermined period or sales data per charges reception entity to said log collection server.

30. A contents distribution system having a log managing configuration, according to Claim 22, wherein said contents purchase request data which said user device generates and transmits to said shop server is configured as data containing a transaction ID serving as a contents transaction identifier, and a contents ID serving as a contents identifier which is the object of purchase request, along with containing an electronic signature of the user device;
wherein said shop server checks whether or not there is data tampering by executing signature verification of said contents purchase request data, and executes processing for generating said sale confirmation data based on said contents purchase request data and transmitting to said user device.

31. A log collection server for executing sales management of contents transacted between a shop server and a user device;
wherein said log collection server accepts a public key certificate updating request from said user device under the conditions that a purchase log generated by said user device according to contents purchased by said user device is received, and executes contents sales management based on the received purchase log.

32. A contents distribution method having a log managing configuration, comprising:
a step for transmitting contents purchase request data from a user device to a shop server and executing contents purchase requesting processing based on procedures using a public key certificate having validity set;
a step at the shop server for receiving a contents purchase request from the user device, and transmitting sales confirmation data to the user device;
a step at the user device for receiving said sales confirmation data and generating a purchase log based on the received sales confirmation data; and
a step at a log collection server for receiving an updating request for a public key certificate of said user device based on receipt of said purchase log, and transmitting an updated public key certificate of the user device issued by a public key certificate authority to the user device.

33. A contents distribution method having a log managing configuration, according to Claim 32, wherein procedures using a public key certificate having said validity set consist of mutual authentication processing using a public key certificate, executed between said user device and shop server.

34. A contents distribution method having a log managing configuration, according to Claim 32, wherein procedures using a public key certificate having said validity set is signature verification processing executed by said shop server with regard to an electronic signature generated by said user device as to contents purchase request data sent from said user device to said shop server, and said signature verification processing is processing using a public key stored in a public key certificate of the user device.

35. A contents distribution method having a log managing configuration, according to Claim 32, wherein at least part of data exchanged between said user device and said shop server is transmitted with an integrity check value (ICV), based on a session key Kses generated at the time of mutual authentication executed between said user device and said shop server, added thereto, and wherein data tampering check processing based on the ICV is executed at the receiving side.

36. A contents distribution method having a log managing configuration, according to Claim 32, wherein said user device adds, to a purchase log transmitted to said log collection server, an integrity check value (ICV) based on a session key Kses generated at the time of mutual authentication executed between said user device and said log collection server, and transmits, and wherein data tampering check processing based on the ICV is executed at the log collection server side.

37. A contents distribution method having a log managing configuration, according to Claim 32, wherein said user device generates and adds to a purchase log transmitted to said log collection server an electronic signature of said user device, and wherein said log collection server executes verification processing of the electronic signature of said user device.

38. A contents distribution method having a log managing configuration, according to Claim 32, wherein said log collection server manages charges allocation information as to one or more charges reception entities for contents charges, based on a purchase log received from said user device, and executes response processing based on said charges allocation information corresponding to sales confirmation requests from charges reception entities.

39. A contents distribution method having a log managing configuration, according to Claim 32, wherein said shop server manages contents sales data, and executes processing for transmitting all sales data within a predetermined period or sales data per charges reception entity to said log collection server.

40. A contents distribution method having a log managing configuration, according to Claim 32, wherein said contents purchase request data which said user device generates and transmits to said shop server is configured as data containing a transaction ID serving as a contents transaction identifier, and a contents ID serving as a contents identifier which is the object of purchase request, along with containing an electronic signature of the user device;
wherein said shop server checks whether or not there is data tampering by executing signature verification of said contents purchase request data, and executes processing for generating said sale confirmation data based on said contents purchase request data and transmitting to said user device.

41. A program providing medium for providing a computer program for executing contents distribution management on a computer system, said computer program comprising:
a step for receiving a purchase log which a user device generates according to contents purchased by said user device;
a step for executing verification of said purchase log; and
a step for accepting a public key certificate updating request from said user device under the conditions that the authority of the received log has been confirmed by the verification of said purchase log, obtaining the updated public key certificate, and transmitting to said user device.

42. A data communication system containing attributes confirmation processing, wherein, between entities executing data communication, attributes information set at an entity which is the other party of communication is obtained from a public key certificate or attributes certificate of an entity which is the other party of communication, with attributes confirmation based on the obtained attributes information being the conditions for executing processing.

43. A data communication system containing attributes confirmation processing, according to Claim 42, wherein said attributes information is attributes information set based on functions of entities.

44. A data communication system containing attributes confirmation processing, according to Claim 42, wherein entities executing data communications are entities making up a contents distribution system;
and contain two or more entities of user devices having functions for purchasing contents, shop servers having functions for receiving contents purchase requests, and service operating servers having functions for managing distribution of contents, with attributes codes serving as differing attributes information being provided to each different entity, and stored in a public key certificate or attributes certificate of each entity.

45. A data communication system containing attributes confirmation processing, according to Claim 42, wherein attributes information of said entities is stored in a public key certificate of said entity, and wherein the public key certificate storing the attributes information has a signature of a public key certificate authority generated and stored therein.

46. A data communication system containing attributes confirmation processing, according to Claim 42, wherein attributes information of said entities is stored in an attributes certificate of said entity, and wherein the attributes certificate stored the attributes information has a signature of an attributes certificate authority generated and stored therein.

47. A data communication system containing attributes confirmation processing, according to Claim 42, wherein the processing for obtaining attributes information set at an entity which is the other party of communication between entities executing data communication, is executed as processing for obtaining from a public key certificate of the other party of communication in mutual authentication processing between entities.

48. A data communication system containing attributes confirmation processing, according to Claim 42, wherein the processing for obtaining attributes information set at an entity which is the other party of communication between entities executing data communication, is executed as processing for obtaining an attributes certificate of the other party of communication, executing signature verification of the attributes certificate authority within the attributes certificate, and obtaining from the attributes certificate under the conditions of success of signature verification.

49. A data communication system containing attributes confirmation processing, according to Claim 42, wherein the processing for obtaining attributes information set at an entity which is the other party of communication between entities executing data communication, is executed as processing for obtaining from a public key certificate of an entity which is the other party of communication applied to signature verification processing of received data.

50. A data communication system containing attributes confirmation processing, according to Claim 42, wherein the processing for obtaining attributes information set at an entity which is the other party of communication between entities executing data communication, is executed as processing for confirming an attributes certificate linking with a public key certificate of the other party of communication, based on the public key certificate serial number stored in the public key certificate and attributes certificate in common, and obtaining from an attributes certificate storing the same public key certificate serial number as the public key certificate.

51. A data communication system containing attributes confirmation processing, according to Claim 42, wherein said attributes confirmation processing is executed as comparison processing between attributes code obtained from a public key certificate or attributes certificate of the other party of communication and attributes code set in an entity presupposed to be the other party of communication.

52. A data communication system containing attributes confirmation processing, according to Claim 42, wherein said attributes confirmation processing is comparison processing of attributes code contained in a communication processing execution sequence unique to a particular other party of communication;
and is executed as comparison processing between attributes code set to said particular other party of communication and attributes code obtained from a public key certificate or attributes certificate of the other party of communication.

53. A data communication method containing attributes confirmation processing, comprising:
an attributes information obtaining step for, between entities executing data communication, obtaining attributes information set at an entity which is the other party of communication from a public key certificate or attributes certificate of an entity which is the other party of communication; and
an attributes confirmation step for executing attributes confirmation based on the attributes information obtained in said attributes information obtaining step;
wherein confirmation of the validity of attributes in said attributes confirmation processing step is the conditions for executing the next process.

54. A data communication method containing attributes confirmation processing, according to Claim 53, wherein said attributes information is attributes information set based on functions of entities.

55. A data communication method containing attributes confirmation processing, according to Claim 53, wherein entities executing data communications are entities making up a contents distribution system;
and contain two or more entities of user devices having functions for purchasing contents, shop servers having functions for receiving contents purchase requests, service operating servers having functions for managing distribution of contents, and distribution servers for distributing contents with attributes codes serving as differing attributes information being provided to each different entity, and stored in a public key certificate or attributes certificate of each entity;
and execute attributes confirmation based on said public key certificate or attributes certificate

56. A data communication method containing attributes confirmation processing, according to Claim 53, wherein said public key certificate of said entity contains attributes information set to the entity, with a signature of the public key certificate authority stored therein;
and wherein an entity for executing attributes confirmation executes processing for obtaining said attributes information following signature verification of said public key certificate authority.

57. A data communication method containing attributes confirmation processing, according to Claim 53, wherein said attributes certificate of said entity contains attributes information set to the entity, with a signature of the attributes certificate authority stored therein;
and wherein an entity for executing attributes confirmation executes processing for obtaining said attributes information following signature verification of said attributes certificate authority.

58. A data communication method containing attributes confirmation processing, according to Claim 53, wherein
the processing for obtaining attributes information set at an entity which is the other party of communication between entities executing data communication, is executed as processing for obtaining from a public key certificate of the other party of communication in mutual authentication processing between entities.

59. A data communication method containing attributes confirmation processing, according to Claim 53, wherein
the processing for obtaining attributes information set at an entity which is the other party of communication between entities executing data communication, is executed as processing for obtaining from a public key certificate of the entity which is the other party of communication, applied to signature verification processing of received data.

60. A data communication method containing attributes confirmation processing, according to Claim 53, wherein the processing for obtaining attributes information set at an entity which is the other party of communication between entities executing data communication, is executed as processing for confirming an attributes certificate linking with a public key certificate of the other party of communication, based on the public key certificate serial number stored in the public key certificate and attributes certificate in common, and obtaining from an attributes certificate storing the same public key certificate serial number as the public key certificate.

61. A data communication method containing attributes confirmation processing, according to Claim 53, wherein said attributes confirmation processing step is executed as comparison processing between attributes code obtained from a public key certificate or attributes certificate of an entity which is the other party of communication and attributes code set in an entity presupposed to be the other party of communication.

62. A data communication method containing attributes confirmation processing, according to Claim 53, wherein said attributes confirmation processing step is comparison processing of attributes code contained in a communication processing execution program unique to a particular other party of communication;
and is executed as comparison processing between attributes code set to said particular other party of communication and attributes code obtained from a public key certificate or attributes certificate of the entity which is the other party of communication.

63. A recording medium having attributes information based on the functions of an entity for executing data communication as configuration data, and storing a public key certificate containing signature data of a public key certificate authority.

64. A recording medium having attributes information based on the functions of an entity for executing data communication as configuration data, and storing an attributes certificate containing signature data of an attributes certificate authority.

65. A program providing medium for providing a computer program for executing data communication processing on a computer system, said computer program comprising:
an attributes information obtaining step for, between entities executing data communication, obtaining attributes information set at an entity which is the other party of communication from a public key certificate or attributes certificate of said entity which is the other party of communication; and
an attributes confirmation processing step for executing attributes confirmation based on the attributes information obtained in said attributes information obtaining step.
